(19) Europäisches Patentamt
European Patent Office
Office européen des brevets

(11) EP 4 023 593 A1

(12) **EUROPEAN PATENT APPLICATION**
published in accordance with Art. 153(4) EPC

(43) Date of publication:
**06.07.2022 Bulletin 2022/27**

(21) Application number: **20857191.9**

(22) Date of filing: **17.08.2020**

(51) International Patent Classification (IPC):
***C01B 25/14** (2006.01)* ***C01G 23/00** (2006.01)*
***C08L 27/12** (2006.01)* ***C08L 101/02** (2006.01)*
***H01M 4/13** (2010.01)* ***H01M 4/139** (2010.01)*
***H01M 4/62** (2006.01)* ***H01M 10/052** (2010.01)*
***H01M 10/0562** (2010.01)* ***H01M 10/0565** (2010.01)*
***H01M 10/0585** (2010.01)* ***H01B 1/06** (2006.01)*
***H01B 1/08** (2006.01)* ***H01B 1/10** (2006.01)*
***H01B 1/22** (2006.01)*

(52) Cooperative Patent Classification (CPC):
**C01B 25/14; C01G 23/00; C08L 27/12; C08L 101/02; H01B 1/06; H01B 1/08; H01B 1/10; H01B 1/22; H01M 4/13; H01M 4/139; H01M 4/62; H01M 10/052; H01M 10/0562; H01M 10/0565; H01M 10/0585;** (Cont.)

(86) International application number:
**PCT/JP2020/031006**

(87) International publication number:
**WO 2021/039468 (04.03.2021 Gazette 2021/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.08.2019 JP 2019157942**
**24.10.2019 JP 2019193348**
**22.01.2020 JP 2020008019**
**14.02.2020 JP 2020023111**
**21.05.2020 JP 2020088765**

(71) Applicant: **FUJIFILM Corporation**
**Tokyo 106-8620 (JP)**

(72) Inventors:
- **KUSHIDA Yo**
  **Ashigarakami-gun, Kanagawa 258-8577 (JP)**
- **YASUDA Koji**
  **Ashigarakami-gun, Kanagawa 258-8577 (JP)**
- **ISOJIMA Hiroshi**
  **Ashigarakami-gun, Kanagawa 258-8577 (JP)**
- **NAGATA Yuzo**
  **Ashigarakami-gun, Kanagawa 258-8577 (JP)**

(74) Representative: **HGF**
**HGF Limited**
**1 City Walk**
**Leeds LS11 9DX (GB)**

(54) **COMPOSITION CONTAINING INORGANIC SOLID ELECTROLYTE, SHEET FOR ALL-SOLID SECONDARY BATTERIES, ALL-SOLID SECONDARY BATTERY, METHOD FOR MANUFACTURING SHEET FOR ALL-SOLID SECONDARY BATTERIES, AND METHOD FOR MANUFACTURING ALL-SOLID SECONDARY BATTERY**

(57) There are provided an inorganic solid electrolyte-containing composition excellent in dispersion stability and handleability, a sheet for an all-solid state secondary battery, and an all-solid state secondary battery, and manufacturing methods for a sheet for an all-solid state secondary battery and an all-solid state secondary battery, in which the above inorganic solid electrolyte-containing composition is used. There are provided an inorganic solid electrolyte-containing composition that contains an inorganic solid electrolyte having an ion conductivity of a metal belonging to Group 1 or Group 2 in the periodic table, a polymer binder, and a dispersion medium, where the polymer binder includes a polymer binder of which an adsorption rate with respect to the

inorganic solid electrolyte in the dispersion medium is less than 60%, a sheet for an all-solid state secondary battery and an all-solid state secondary battery, in which this inorganic solid electrolyte-containing composition is used, and manufacturing methods for a sheet for an all-solid state secondary battery, and an all-solid state secondary battery.

FIG. 1

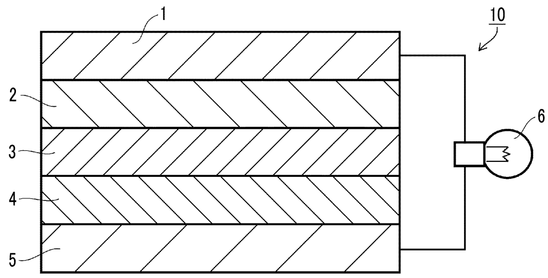


(52) Cooperative Patent Classification (CPC): (Cont.)
Y02E 60/10; Y02P 70/50

## Description

## BACKGROUND OF THE INVENTION

1. Field of the Invention

The present invention relates to an inorganic solid electrolyte-containing composition, a sheet for an all-solid state secondary battery, and an all-solid state secondary battery, and manufacturing methods for a sheet for an all-solid state secondary battery and an all-solid state secondary battery.

2. Description of the Related Art

In an all-solid state secondary battery, all of a negative electrode, an electrolyte, and a positive electrode consist of solid, and the all-solid state secondary can improve safety and reliability, which are said to be problems to be solved in a battery in which an organic electrolyte solution is used. It is also said to be capable of extending the battery life. Furthermore, all-solid state secondary batteries can be provided with a structure in which the electrodes and the electrolyte are directly disposed in series. As a result, it becomes possible to increase the energy density to be high as compared with a secondary battery in which an organic electrolyte solution is used, and thus the application to electric vehicles, large-sized storage batteries, and the like is anticipated.

In such an all-solid state secondary battery, examples of the substance that forms constitutional layers (a solid electrolyte layer, a negative electrode active material layer, and a positive electrode active material layer) include an inorganic solid electrolyte and an active material. In recent years, this inorganic solid electrolyte, particularly an oxide-based inorganic solid electrolyte or a sulfide-based inorganic solid electrolyte is expected as an electrolyte material having a high ion conductivity comparable to that of the organic electrolyte solution.

As the material for forming a constitutional layer (a constitutional layer forming material) of an all-solid state secondary battery, a material containing the above-described inorganic solid electrolyte and the like has been proposed. For example, JP2015-088486A discloses a solid electrolyte composition including an inorganic solid electrolyte (A) having an ion conductivity of a metal belonging to Group 1 or Group 2 of the periodic table; a binder particle (B) having an average particle diameter of 10 nm or more and 1,000 nm or less, which are composed of a polymer into which a macromonomer (X) having a number average molecular weight of 1,000 or more is incorporated as a side chain component; and a dispersion medium (C). In addition, JP2015-088480A discloses a solid electrolyte composition, which is a solid electrolyte composition having an inorganic solid electrolyte having an ion conductivity of a metal belonging to Group 1 or Group 2 of the periodic table, where the macromolecule binder is composed of a polymer having a hard segment and a soft segment.

## SUMMARY OF THE INVENTION

In a case of forming a constitutional layer of an all-solid state secondary battery with solid particle materials (an inorganic solid electrolyte, an active material, conductive auxiliary agent, and the like), a constitutional layer forming material is required to have a property (dispersion stability) by which the excellent dispersibility of the solid particle material (also simply referred to as solid particles) immediately after preparation is stably maintained, and a property (handleability) by which dispersion characteristics excellent in fluidity with a proper viscosity and a good surface property are maintained, from the viewpoint of improving the battery performance (for example, cycle characteristics) of the all-solid state secondary battery having a constitutional layer formed from the constitutional layer forming material. The relationship between the inorganic solid electrolyte or the like and the binder is conceived to be one of the important factors for the dispersion stability and the handleability. However, the solid electrolyte compositions disclosed in JP2015-088486A and JP2015-088480A do not describe this viewpoint.

By the way, in recent years, research and development for improving the performance and the practical application of electric vehicles have progressed rapidly, and the demand for battery performance (for example, cycle characteristics) required for all-solid state secondary batteries has become higher. In order to respond to such demands in recent years, it is required to develop a constitutional layer forming material that has both dispersion stability and handleability (fluidity or a surface property of a coated surface) at a higher level.

An object of the present invention is to provide an inorganic solid electrolyte-containing composition excellent in dispersion stability and handleability. In addition, another object of the present invention is to provide a sheet for an all-solid state secondary battery and an all-solid state secondary battery, and manufacturing methods for a sheet for an all-solid state secondary battery and an all-solid state secondary battery, in which the above inorganic solid electrolyte-containing composition is used.

As a result of repeating various studies focusing on the relationship between the inorganic solid electrolyte or

the like and the binder, the inventors of the present invention have found that in a case where an inorganic solid electrolyte and a polymer binder that exhibits an adsorption rate of less than 60% with respect to this inorganic solid electrolyte are used in combination in an inorganic solid electrolyte-containing composition, it is possible to suppress chronological reaggregation, sedimentation, or the like of the inorganic solid electrolyte and an excessive increase in viscosity (thickening). Accordingly, it has been found that in a case where this inorganic solid electrolyte-containing composition is used as a constitutional layer forming material, it is possible to achieve a sheet for an all-solid state secondary battery, having a low-resistance constitutional layer the coated surface of which is flat and thus the surface property of which is good, as well as an all-solid state secondary battery which is excellent cycle characteristics. The present invention has been completed through further studies based on these findings.

That is, the above problems have been solved by the following means.

<1> An inorganic solid electrolyte-containing composition comprising an inorganic solid electrolyte having an ion conductivity of a metal belonging to Group 1 or Group 2 in the periodic table; a polymer binder; and a dispersion medium,
in which the polymer binder includes a polymer binder of which an adsorption rate with respect to the inorganic solid electrolyte in the dispersion medium is less than 60%.
<2> The inorganic solid electrolyte-containing composition according to <1>, in which the polymer binder of which the adsorption rate is less than 60% is dissolved in the dispersion medium.
<3> The inorganic solid electrolyte-containing composition according to <1> or <2>, in which a difference in SP value between a polymer that forms the polymer binder of which the adsorption rate is less than 60% and the dispersion medium is 3 or less.
<4> The inorganic solid electrolyte-containing composition according to any one of <1> or <3>, in which a polymer that forms the polymer binder of which the adsorption rate is less than 60% contains a constitutional component having a functional group selected from the following Group (a) of functional groups,
<the Group (a) of functional groups>
a hydroxy group, an amino group, a carboxy group, a sulfo group, a phosphate group, a phosphonate group, a sulfanyl group, an ether bond, an imino group, an ester bond, an amide bond, a urethane bond, a urea bond, a heterocyclic group, an aryl group, an anhydrous carboxylic acid group, a fluoroalkyl group, and a siloxane group.<5> The inorganic solid electrolyte according to <4>, in which in the polymer that forms the polymer binder, a content of the constitutional component having the functional group selected from the Group (a) of functional groups is 0.01% to 50% by mole.
<6> The inorganic solid electrolyte-containing composition according to any one of <1> to <5>, in which a polymer that forms the polymer binder of which the adsorption rate is less than 60% has a constitutional component represented by any one of Formulae (1-1) to (1-5),

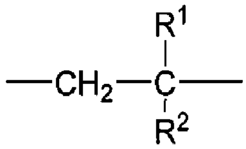

Formula (1-1)

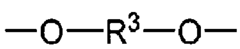

Formula (1-2)

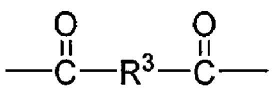

Formula (1-3)

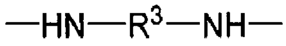

Formula (1-4)

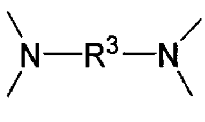

Formula (1-5)

in the formulae, $R^1$ represents a hydrogen atom or an alkyl group,

$R^2$ represents a group having a hydrocarbon group having 4 or more carbon atoms, and
$R^3$ represents a linking group having a mass average molecular weight of 500 or more and 200,000 or less, which contains a polybutadiene chain or a polyisoprene chain.

<7> The inorganic solid electrolyte-containing composition according to any one of <1> to <6>, in which a polymer that forms the polymer binder of which the adsorption rate is less than 60% has, in a main chain, at least one bond selected from a urethane bond, a urea bond, an amide bond, an imide bond, and an ester bond, or a polymeric chain of carbon-carbon double bond.
<8> The inorganic solid electrolyte-containing composition according to any one of <1> to <7>, in which a contact angle of a polymer that forms the polymer binder of which the adsorption rate is less than 60% is 40 degrees or less with respect to the dispersion medium.
<9> The inorganic solid electrolyte-containing composition according to any one of <6> to <8>, in which the inorganic solid electrolyte-containing composition contains two or more kinds of the polymer binders of which the adsorption rate is less than 60%, and at least one kind of a polymer that forms the polymer binders is a hydrocarbon-based polymer.
<10> The inorganic solid electrolyte-containing composition according to any one of <1> to <9>, in which the binder contains a particulate binder having an average particle diameter of 1 to 1,000 nm.
<11> The inorganic solid electrolyte-containing composition according to any one of <1> to <10>, further comprising an active material.
<12> The inorganic solid electrolyte-containing composition according to <11>, in which the polymer binder of which the adsorption rate is less than 60% has an adsorption rate of 90% or less with respect to the active material.
<13> The inorganic solid electrolyte-containing composition according to <12>, in which a polymer binder of which the adsorption rate is less than 60% has an adsorption rate of 90% or less with respect to the active material.
<14> The inorganic solid electrolyte-containing composition according to any one of <1> to <13>, further comprising a conductive auxiliary agent.
<15> The inorganic solid electrolyte-containing composition according to any one of <1> to <14>, in which the inorganic solid electrolyte is a sulfide-based inorganic solid electrolyte.
<16> A manufacturing method for a sheet for an all-solid state secondary battery, the manufacturing method comprising forming a film of the inorganic solid electrolyte-containing composition according to any one of <1> to <15>.
<17> An sheet for an all-solid state secondary battery comprising a layer in which a film is formed by the manufacturing method for a sheet for an all-solid state secondary battery according to <16>.
<18> A manufacturing method for an all-solid state secondary battery comprising the manufacturing method for a sheet for an all-solid state secondary battery according to <16> is included.
<19> An all-solid state secondary battery comprising, in the following order, a positive electrode active material layer; a solid electrolyte layer; and a negative electrode active material layer,
in which at least one layer of the positive electrode active material layer, the solid electrolyte layer, or the negative electrode active material layer is a layer in which a film is formed by the manufacturing method for a sheet for an all-solid state secondary battery according to <16>.

According to the present invention, it is possible to provide an inorganic solid electrolyte-containing composition excellent in dispersion characteristics such as dispersion stability, handleability (fluidity and surface property), and the like. In addition, according to the present invention, it is possible to provide a sheet for an all-solid state secondary battery and an all-solid state secondary battery, which have a layer formed of the above inorganic solid electrolyte-containing composition. Further, according to the present invention, it is possible to provide manufacturing methods for a sheet for an all-solid state secondary battery and an all-solid state secondary battery, in which the above inorganic solid electrolyte-containing composition is used.

## BRIEF DESCRIPTION OF THE DRAWINGS

Fig. 1 is a vertical cross-sectional view schematically illustrating an all-solid state secondary battery according to a preferred embodiment of the present invention.
Fig. 2 is a vertical cross-sectional view schematically illustrating a coin-type all-solid state secondary battery prepared in Examples.

## DESCRIPTION OF THE PREFERRED EMBODIMENTS

In the present invention, numerical ranges indicated using "to" include numerical values before and after the "to" as the lower limit value and the upper limit value.
In the present invention, the expression of a compound (for example, in a case where a compound is represented by an expression in which "compound" is attached to the end) refers to not only the compound itself but also a salt or

an ion thereof. In addition, this expression also refers to a derivative obtained by modifying a part of the compound, for example, by introducing a substituent into the compound within a range where the effects of the present invention are not impaired.

In the present invention, (meth)acryl means one or both of acryl and methacryl. The same applies to (meth)acrylate.

In the present invention, a substituent, a linking group, or the like (hereinafter, referred to as a substituent or the like), which is not specified regarding whether to be substituted or unsubstituted, may have an appropriate substituent. Accordingly, even in a case where a YYY group is simply described in the present invention, this YYY group includes not only an aspect having a substituent but also an aspect not having a substituent. The same shall be applied to a compound that is not specified in the present specification regarding whether to be substituted or unsubstituted. Examples of the preferred examples of the substituent include a substituent Z described below.

In the present invention, in a case where a plurality of substituents or the like represented by a specific reference numeral are present or a plurality of substituents or the like are simultaneously or alternatively defined, the respective substituents or the like may be the same or different from each other. In addition, unless specified otherwise, in a case where a plurality of substituents or the like are adjacent to each other, the substituents may be linked or fused to each other to form a ring.

In the present invention, the polymer means a polymer; however, it is synonymous with a so-called polymeric compound.

[Inorganic solid electrolyte-containing composition]

The inorganic solid electrolyte-containing composition according to the embodiment of the present invention contains an inorganic solid electrolyte having an ion conductivity of a metal belonging to Group 1 or Group 2 in the periodic table; a polymer binder; and a dispersion medium. The polymer binder contained in this inorganic solid electrolyte-containing composition contains one or more polymer binders (may be referred to as "low adsorption binders") that exhibit an adsorption rate of less than 60% with respect to an inorganic solid electrolyte.

That is, it suffices that the inorganic solid electrolyte-containing composition according to the embodiment of the present invention contains a low adsorption binder as the polymer binder, and the content state of the low adsorption binder and the like are not particularly limited. For example, in the inorganic solid electrolyte-containing composition, the low adsorption binder may adsorb or may not adsorb to the inorganic solid electrolyte; however, in a case where it adsorbs thereto, the degree of adsorption is desirably within the range of the adsorption rate described later.

This low adsorption binder functions, in a layer formed of at least an inorganic solid electrolyte-containing composition, as a binder that causes solid particles of an inorganic solid electrolyte (as well as a co-existable active material, conductive auxiliary agent, and the like) or the like to mutually binds therebetween (for example, between solid particles of an inorganic solid electrolyte, solid particles of an inorganic solid electrolyte and an active material, or solid particles of an active material). Further, it may function as a binder that causes a collector to bind to solid particles. In the inorganic solid electrolyte-containing composition, the low adsorption binder may have or may not have a function of causing solid particles to mutually bind therebetween.

The inorganic solid electrolyte-containing composition according to the embodiment of the present invention is preferably a slurry in which the inorganic solid electrolyte is dispersed in a dispersion medium. In this case, the low adsorption binder preferably has a function of dispersing solid particles in the dispersion medium. In addition, in a case where the low adsorption binder is dispersed in the dispersion medium (in the solid state), a part of the low adsorption binder may be dissolved in the dispersion medium within a range in which the effects of the present invention are not impaired.

The inorganic solid electrolyte-containing composition according to the embodiment of the present invention is excellent in dispersion stability and handleability. In a case where this inorganic solid electrolyte-containing composition is used as a constitutional layer forming material, it is possible to achieve a sheet for an all-solid state secondary battery, having a low-resistance constitutional layer the surface of which is flat and thus the surface property is good, and as well as an all-solid state secondary battery which is excellent cycle characteristics.

In the aspect in which the active material layer formed on the collector is formed of the inorganic solid electrolyte-containing composition according to the embodiment of the present invention, it is also possible to achieve strong adhesiveness between the collector and the active material layer and thus it is possible to achieve a further improvement of the cycle characteristics.

Although the details of the reason for the above are not yet clear, they are conceived to be as follows. That is, it is conceived that the low adsorption binder that exhibits an adsorption rate of less than 60% with respect to an inorganic solid electrolyte does not excessively adsorb to an inorganic solid electrolyte in the inorganic solid electrolyte-containing composition and can suppress the reaggregation, sedimentation, or the like of the inorganic solid electrolyte not only immediately after the preparation of the inorganic solid electrolyte-containing composition but also even after a lapse of

time. The low adsorption binder exhibits a relationship of such an adsorption state with respect to the inorganic solid electrolyte, and a result, a high degree of dispersibility immediately after preparation can be stably maintained (dispersion stability is excellent), and an excessive increase in viscosity can also be suppressed, whereby good fluidity is exhibited (handleability is excellent).

In a case where a constitutional layer is formed using the inorganic solid electrolyte-containing composition according to the embodiment of the present invention, which exhibits such excellent dispersion characteristics, it is possible to suppress the generation of reaggregates, sediments, or the like of the inorganic solid electrolyte, even during the formation a film of a constitutional layer (for example, during the application and as well as during drying of the inorganic solid electrolyte-containing composition). This makes it is possible to suppress variations in the contact state between inorganic solid electrolytes in the constitutional layer. In particular, in a case where the inorganic solid electrolyte-containing composition contains an active material or the like, it is conceived that certain particles of the active material or the like are less likely to be unevenly distributed in the constitutional layer (solid particles are uniformly arranged in the constitutional layer). As a result, it is possible to suppress an increase in the interfacial resistance between the solid particles as well as the resistance of the constitutional layer. In addition to this, the inorganic solid electrolyte-containing composition becomes to have proper fluidity (leveling) during the film formation of the inorganic solid electrolyte-containing composition, particularly during coating, and thus the surface roughness of unevenness due to insufficient fluidity or excessive fluidity does not occur (the surface property of the coated surface is excellent), whereby the constitutional layer has a good surface property. In this way, it is conceived that it is possible to achieve a sheet for an all-solid state secondary battery, having a low-resistance (high-conductivity) constitutional layer the surface of which is flat.

In addition, in the all-solid state secondary battery having a constitutional layer in which an increase in resistance is suppressed and the surface is flat, the overcurrent during charging and discharging is inhibited and the deterioration of solid particles can be prevented, and thus the interfacial contact state between the surface of the constitutional layer and adjacent another layer is good (highly adhesive). For this reason, it is conceived that it is possible to achieve an all-solid state secondary battery which has excellent cycle characteristics without significantly deteriorating battery characteristics even after repeated charging and discharging, and which exhibits high conductivity (ion conductivity or electron conductivity) in addition to excellent cycle characteristics.

In a case where an active material layer is formed of the inorganic solid electrolyte-containing composition according to the embodiment of the present invention, a constitutional layer is formed while a highly (homogeneously) dispersed state immediately after preparation is maintained as described above. For this reason, it is conceived that the contact (adhesion) of the low adsorption binder to the surface of the collector is not hindered by the solid particles that have been preferentially sedimented, and the low adsorption binder can come into contact with (adhesion to) the surface of the collector in a state of being dispersed together with the solid particles. As a result, in the electrode sheet for an all-solid state secondary battery in which an active material layer is formed of the inorganic solid electrolyte-containing composition according to the embodiment of the present invention on a collector, it is possible to achieve strong adhesiveness between the collector and the active material. In addition, in the all-solid state secondary battery in which an active material layer is formed of the inorganic solid electrolyte-containing composition according to the embodiment of the present invention on a collector, it is possible to achieve further improvement of the current collector and the exhibition of strong adhesiveness between the collector and the active material, as well as the improvement of the conductivity in addition to the excellent cycle characteristics.

The inorganic solid electrolyte-containing composition according to the embodiment of the present invention is preferably used a material (a constitutional layer forming material) for forming a solid electrolyte layer or an active material layer, where the material is for a sheet for an all-solid state secondary battery (including an electrode sheet for an all-solid state secondary battery) or an all-solid state secondary battery. In particular, it can be preferably used as a material for forming a negative electrode sheet for an all-solid state secondary battery or a material for forming a negative electrode active material layer, which contains a negative electrode active material having a large expansion and contraction due to charging and discharging, and high cycle characteristics and furthermore, high conductivity can be achieved in this aspect as well.

The inorganic solid electrolyte-containing composition according to the embodiment of the present invention is preferably a non-aqueous composition. In the present invention, the non-aqueous composition includes not only an aspect including no moisture but also an aspect where the moisture content (also referred to as the "water content") is preferably 500 ppm or less. In the non-aqueous composition, the moisture content is more preferably 200 ppm or less, still more preferably 100 ppm or less, and particularly preferably 50 ppm or less. In a case where the inorganic solid electrolyte-containing composition is a non-aqueous composition, it is possible to suppress the deterioration of the inorganic solid electrolyte. The moisture content refers to the water amount (the mass proportion to the inorganic solid electrolyte-containing composition) in the inorganic solid electrolyte-containing composition, and specifically, it is a value determined by filtration through a 0.02 $\mu$m membrane filter and then by Karl Fischer titration.

The inorganic solid electrolyte-containing composition according to the embodiment of the present invention includes an aspect including not only an inorganic solid electrolyte but also an active material, as well as a conductive

auxiliary agent or the like (the composition in this aspect may be referred to as the "composition for an electrode").

Hereinafter, components that are contained and components that can be contained in the inorganic solid electrolyte-containing composition according to the embodiment of the present invention will be described.

<Inorganic solid electrolyte>

The inorganic solid electrolyte-containing composition according to the embodiment of the present invention contains an inorganic solid electrolyte.

In the present invention, the inorganic solid electrolyte is an inorganic solid electrolyte, and the solid electrolyte refers to a solid-form electrolyte capable of migrating ions therein. The inorganic solid electrolyte is clearly distinguished from the organic solid electrolyte (the polymeric electrolyte such as polyethylene oxide (PEO) or the organic electrolyte salt such as lithium bis(trifluoromethanesulfonyl)imide (LiTFSI)) since the inorganic solid electrolyte does not include any organic substance as a principal ion conductive material. In addition, the inorganic solid electrolyte is solid in a steady state and thus, typically, is not dissociated or liberated into cations and anions. Due to this fact, the inorganic solid electrolyte is also clearly distinguished from inorganic electrolyte salts of which cations and anions are dissociated or liberated in electrolytic solutions or polymers ($LiPF_6$, $LiBF_4$, lithium bis(fluorosulfonyl)imide (LiFSI), LiCl, and the like). The inorganic solid electrolyte is not particularly limited as long as it has an ion conductivity of a metal belonging to Group 1 or Group 2 in the periodic table and generally does not have electron conductivity. In a case where the all-solid state secondary battery according to the embodiment of the present invention is a lithium ion battery, the inorganic solid electrolyte preferably has an ion conductivity of a lithium ion.

As the inorganic solid electrolyte, a solid electrolyte material that is typically used for an all-solid state secondary battery can be appropriately selected and used. Examples of the inorganic solid electrolyte include (i) a sulfide-based inorganic solid electrolyte, (ii) an oxide-based inorganic solid electrolyte, (iii) a halide-based inorganic solid electrolyte, and (iv) a hydride-based solid electrolyte. The sulfide-based inorganic solid electrolytes are preferably used from the viewpoint that it is possible to form a more favorable interface between the active material and the inorganic solid electrolyte.

(i) Sulfide-based inorganic solid electrolyte

The sulfide-based inorganic solid electrolyte is preferably an electrolyte that contains a sulfur atom, has an ion conductivity of a metal belonging to Group 1 or Group 2 in the periodic table, and has electron-insulating properties. The sulfide-based inorganic solid electrolytes are preferably inorganic solid electrolytes which, as elements, contain at least Li, S, and P and have an ion conductivity of a lithium ion, but the sulfide-based inorganic solid electrolytes may also include elements other than Li, S, and P depending on the purposes or cases.

Examples of the sulfide-based inorganic solid electrolyte include a lithium ion-conductive inorganic solid electrolyte satisfying the composition represented by Formula (S1).

$$L_{a1}M_{b1}P_{c1}S_{d1}A_{e1}\text{-} \qquad \text{Formula (S1)}$$

In the formula, L represents an element selected from Li, Na, or K and is preferably Li. M represents an element selected from B, Zn, Sn, Si, Cu, Ga, Sb, Al, or Ge. A represents an element selected from I, Br, Cl, or F. a1 to e1 represent the compositional ratios between the respective elements, and a1:b1:c1:d1:e1 satisfies 1 to 12:0 to 5:1:2 to 12:0 to 10. a1 is preferably 1 to 9 and more preferably 1.5 to 7.5. b1 is preferably 0 to 3 and more preferably 0 to 1. d1 is preferably 2.5 to 10 and more preferably 3.0 to 8.5. e1 is preferably 0 to 5 and more preferably 0 to 3.

The compositional ratios between the respective elements can be controlled by adjusting the amounts of raw material compounds blended to manufacture the sulfide-based inorganic solid electrolyte as described below.

The sulfide-based inorganic solid electrolytes may be non-crystalline (glass) or crystallized (made into glass ceramic) or may be only partially crystallized. For example, it is possible to use Li-P-S-based glass containing Li, P, and S or Li-P-S-based glass ceramic containing Li, P, and S.

The sulfide-based inorganic solid electrolytes can be manufactured by a reaction of at least two raw materials of, for example, lithium sulfide ($Li_2S$), phosphorus sulfide (for example, diphosphorus pentasulfide ($P_2S_5$)), a phosphorus single body, a sulfur single body, sodium sulfide, hydrogen sulfide, lithium halides (for example, LiI, LiBr, and LiCl), or sulfides of an element represented by M (for example, $SiS_2$, SnS, and $GeS_2$).

The ratio of $Li_2S$ to $P_2S_5$ in Li-P-S-based glass and Li-P-S-based glass ceramic is preferably 60:40 to 90:10 and more preferably 68:32 to 78:22 in terms of the molar ratio, $Li_2S$:$P_2S_5$. In a case where the ratio between $Li_2S$ and $P_2S_5$ is set in the above-described range, it is possible to increase an ion conductivity of a lithium ion. Specifically, the ion conductivity of the lithium ion can be preferably set to $1 \times 10^{-4}$ S/cm or more and more preferably set to $1 \times 10^{-3}$ S/cm or more. The upper limit is not particularly limited but realistically $1 \times 10^{-1}$ S/cm or less.

As specific examples of the sulfide-based inorganic solid electrolytes, combination examples of raw materials will be described below. Examples thereof include $Li_2S$-$P_2S_5$, $Li_2S$-$P_2S_5$-LiCl, $Li_2S$-$P_2S_5$-$H_2S$, $Li_2S$-$P_2S_5$-$H_2S$-LiCl, $Li_2S$-LiI-$P_2S_5$, $Li_2S$-LiI-$Li_2O$-$P_2S_5$, $Li_2S$-LiBr-$P_2S_5$, $Li_2S$-$Li_2O$-$P_2S_5$, $Li_2S$-$Li_3PO_4$-$P_2S_5$, $Li_2S$-$P_2S_5$-$P_2O_5$, $Li_2S$-$P_2S_5$-$SiS_2$, $Li_2S$-$P_2S_5$-$SiS_2$-LiCl, $Li_2S$-$P_2S_5$-SnS, $Li_2S$-$P_2S_5$-$Al_2S_3$, $Li_2S$-$GeS_2$, $Li_2S$-$GeS_2$-ZnS, $Li_2S$-$Ga_2S_3$, $Li_2S$-$GeS_2$-$Ga_2S_3$, $Li_2S$-$GeS_2$-$P_2S_5$, $Li_2S$-$Ge_S2$-$Sb_2S_5$, $Li_2S$-$GeS_2$-$Al_2S_3$, $Li_2S$-$SiS_2$, $Li_2S$-$Al_2S_3$, $Li_2S$-$SiS_2$-$Al_2S_3$, $Li_2S$-$SiS_2$-$P_2S_5$, $Li_2S$-$Si_S2$-$P_2S_5$-LiI, $Li_2S$-$SiS_2$-LiI, $Li_2S$-$SiS_2$-$Li_4SiO_4$, $Li_2S$-$SiS_2$-$Li_3PO_4$, and $Li_{10}GeP_2S_{12}$. The mixing ratio between the individual raw materials does not matter. Examples of the method of synthesizing a sulfide-based inorganic solid electrolyte material using the above-described raw material compositions include an amorphization method. Examples of the amorphization method include a mechanical milling method, a solution method, and a melting quenching method. This is because treatments at a normal temperature become possible, and it is possible to simplify manufacturing processes.

(ii) Oxide-based inorganic solid electrolytes

The oxide-based inorganic solid electrolyte is preferably an electrolyte that contains an oxygen atom, has an ion conductivity of a metal belonging to Group 1 or Group 2 in the periodic table, and has electron-insulating properties.

The ion conductivity of the oxide-based inorganic solid electrolyte is preferably $1 \times 10^{-6}$ S/cm or more, more preferably $5 \times 10^{-6}$ S/cm or more, and particularly preferably $1 \times 10^{-5}$ S/cm or more. The upper limit is not particularly limited; however, it is practically $1 \times 10^{-1}$ S/cm or less.

Specific examples of the compound include $Li_{xa}La_{ya}TiO_3$ (LLT) [xa satisfies $0.3 \leq xa \leq 0.7$, and ya satisfies $0.3 \leq ya \leq 0.7$]; $Li_{xb}La_{yb}Zr_{zb}M^{bb}{}_{mb}O_{nb}$ ($M^{bb}$ is one or more elements selected from Al, Mg, Ca, Sr, V, Nb, Ta, Ti, Ge, In, and Sn, xb satisfies $5 \leq xb \leq 10$, yb satisfies $1 \leq yb \leq 4$, zb satisfies $1 \leq zb \leq 4$, mb satisfies $0 \leq mb \leq 2$, and nb satisfies $5 \leq nb \leq 20$); $Li_{xc}B_{yc}M^{cc}{}_{zc}O_{nc}$ ($M^{cc}$ is one or more elements selected from C, S, Al, Si, Ga, Ge, In, and Sn, xc satisfies $0 < xc \leq 5$, yc satisfies $0 < yc \leq 1$, zc satisfies $0 < zc \leq 1$, and nc satisfies $0 < nc \leq 6$); $Li_{xd}(Al, Ga)_{yd}(Ti, Ge)_{zd}Si_{ad}P_{md}O_{nd}$ (xd satisfies $1 \leq xd \leq 3$, yd satisfies $0 \leq yd \leq 1$, zd satisfies $0 \leq zd \leq 2$, ad satisfies $0 \leq ad \leq 1$, md satisfies $1 \leq md \leq 7$, and nd satisfies $3 \leq nd \leq 13$.); $Li_{(3-2xe)}M^{ee}{}_{xe}D^{ee}O$ (xe represents a number between 0 and 0.1, and $M^{ee}$ represents a divalent metal atom, $D^{ee}$ represents a halogen atom or a combination of two or more halogen atoms); $Li_{xf}Si_{yf}O_{zf}$ (xf satisfies $1 \leq xf \leq 5$, yf satisfies $0 < yf \leq 3$, zf satisfies $1 \leq zf \leq 10$); $Li_{xg}S_{yg}O_{zg}$ (xg satisfies $1 \leq xg \leq 3$, yg satisfies $0 < yg \leq 2$, zg satisfies $1 \leq zg \leq 10$); $Li_3BO_3$; $Li_3BO_3$-$Li_2SO_4$,; $Li_2O$-$B_2O_3$-$P_2O_5$,; $Li_2O$-$SiO_2$,; $Li_6BaLa_2Ta_2O_{12}$; $Li_3PO_{(4-3/2w)}N_w$ (w satisfies w<1); $Li_{3.5}Zn_{0.25}GeO_4$ having a lithium super ionic conductor (LISICON)-type crystal structure; $La_{0.55}Li_{0.35}TiO_3$ having a perovskite-type crystal structure; $LiTi_2P_3O_{12}$ having a natrium super ionic conductor (NASICON)-type crystal structure; $Li_{1+xh+yh}(Al, Ga)_{xh}(Ti, Ge)_{2-xh}Si_{yh}P_{3-yh}O_{12}$ (xh satisfies $0 \leq xh \leq 1$, and yh satisfies $0 \leq yh \leq 1$); and $Li_7La_3Zr_2O_{12}$ (LLZ) having a garnet-type crystal structure.

In addition, a phosphorus compound containing Li, P, or O is also desirable. Examples thereof include lithium phosphate ($Li_3PO_4$); LiPON in which a part of oxygen in lithium phosphate are substituted with nitrogen; and $LiPOD^1$ ($D^1$ is preferably one or more elements selected from Ti, V, Cr, Mn, Fe, Co, Ni, Cu, Zr, Nb, Mo, Ru, Ag, Ta, W, Pt, and Au).

Further, it is also possible to preferably use $LiA^1ON$ ($A^1$ is one or more elements selected from Si, B, Ge, Al, C, and Ga).

(iii) Halide-based inorganic solid electrolyte

The halide-based inorganic solid electrolyte is preferably a compound that contains a halogen atom, has an ion conductivity of a metal belonging to Group 1 or Group 2 in the periodic table, and has electron-insulating properties.

The halide-based inorganic solid electrolyte is not particularly limited; however, examples thereof include LiCl, LiBr, LiI, and compounds such as $Li_3YBr_6$ or $Li_3YCl_6$ described in ADVANCED MATERIALS, 2018, 30, 1803075. In particular, $Li_3YBr_6$ or $Li_3YCl_6$ is preferable.

(iv) Hydride-based inorganic solid electrolyte

The hydride-based inorganic solid electrolyte is preferably a compound that contains a hydrogen atom, has an ion conductivity of a metal belonging to Group 1 or Group 2 in the periodic table, and has electron-insulating properties.

The hydride-based inorganic solid electrolyte is not particularly limited; however, examples thereof include $LiBH_4$, $Li_4(BH_4)_3I$, and $3LiBH_4$-LiCl.

The inorganic solid electrolyte is preferably particulate. In this case, the particle diameter (the volume average particle diameter) of the inorganic solid electrolyte is not particularly limited; however, it is preferably 0.01 μm or more and more preferably 0.1 μm or more. The upper limit is preferably 100 μm or less and more preferably 50 μm or less.

The particle diameter of the inorganic solid electrolyte is measured in the following order. The inorganic solid electrolyte particles are diluted and prepared using water (heptane in a case where the inorganic solid electrolyte is unstable in water) in a 20 mL sample bottle to prepare 1% by mass of a dispersion liquid. The diluted dispersion liquid

sample is irradiated with 1 kHz ultrasonic waves for 10 minutes and is then immediately used for testing. Data collection is carried out 50 times using this dispersion liquid sample, a laser diffraction/scattering-type particle diameter distribution measurement instrument LA-920 (product name, manufactured by Horiba Ltd.), and a quartz cell for measurement at a temperature of 25°C to obtain the volume average particle diameter. Other detailed conditions and the like can be found in JIS Z8828: 2013 "Particle diameter analysis-Dynamic light scattering" as necessary. Five samples per level are prepared and measured, and the average values thereof are employed.

One kind of inorganic solid electrolyte may be contained, or two or more kinds thereof may be contained.

In a case of forming a solid electrolyte layer, the mass (mg) (mass per unit area) of the inorganic solid electrolyte per unit area ($cm^2$) of the solid electrolyte layer is not particularly limited. It can be appropriately determined according to the designed battery capacity and can be set to, for example, 1 to 100 $mg/cm^2$.

However, in a case where the inorganic solid electrolyte-containing composition contains an active material described later, the mass per unit area of the inorganic solid electrolyte is preferably such that the total amount of the active material and the inorganic solid electrolyte is in the above range.

The content of the inorganic solid electrolyte in the inorganic solid electrolyte-containing composition is not particularly limited. However, in terms of the binding property as well as in terms of dispersibility, it is preferably 50% by mass or more, more preferably 70% by mass or more, and still more preferably 90% by mass or more, in the solid content of 100% by mass. From the same viewpoint, the upper limit thereof is preferably 99.9% by mass or less, more preferably 99.5% by mass or less, and particularly preferably 99% by mass or less.

However, in a case where the inorganic solid electrolyte-containing composition contains an active material described below, regarding the content of the inorganic solid electrolyte in the inorganic solid electrolyte-containing composition, the total content of the active material and the inorganic solid electrolyte is preferably in the above-described range.

In the present invention, the solid content (solid component) refers to components that neither volatilize nor evaporate and disappear in a case where the inorganic solid electrolyte-containing composition is subjected to drying treatment at 150°C for 6 hours in a nitrogen atmosphere at a pressure of 1 mmHg. Typically, the solid content refers to a component other than a dispersion medium described below.

<Polymer binder>

The inorganic solid electrolyte-containing composition according to the embodiment of the present invention contains one or more polymer binders (low adsorption binders) of which the adsorption rate with respect to the inorganic solid electrolyte in the composition is less than 60%. The polymer binder contained in the inorganic solid electrolyte-containing composition according to the embodiment of the present invention may contain a polymer binder other than the low adsorption binder, for example, a polymer binder (a high adsorption binder) of which the adsorption rate in the composition is 60% or more with respect to the inorganic solid electrolyte, and as well as a particulate polymer binder (preferably, a polymer binder of which the adsorption rate in the composition is 60% or more with respect to the inorganic solid electrolyte).

In the present invention, the polymer binder means a binder formed by containing a polymer.

(Low adsorption binder)

First, the low adsorption binder contained as a polymer binder in the inorganic solid electrolyte-containing composition according to the embodiment of the present invention will be described.

In the inorganic solid electrolyte-containing composition containing a dispersion medium, in a case where the low adsorption binder is used in combination with solid particles of the inorganic solid electrolyte or the like, it is possible to improve the dispersion stability and the handleability of the inorganic solid electrolyte-containing composition (the slurry).

In the present invention, the adsorption rate of a binder is a value measured by using an inorganic solid electrolyte and a dispersion medium contained in the inorganic solid electrolyte-containing composition, and it is an indicator that indicates the degree of adsorption of a binder to an inorganic solid electrolyte in the dispersion medium. Here, the adsorption of the binder to the inorganic solid electrolyte includes not only physical adsorption but also chemical adsorption (adsorption by chemical bond formation, adsorption by transfer of electrons, or the like).

In a case where the inorganic solid electrolyte-containing composition contains a plurality of kinds of inorganic solid electrolytes, the adsorption rate is defined as an adsorption rate with respect to the inorganic solid electrolyte having the same composition (kind and content) as the composition of the inorganic solid electrolyte in the inorganic solid electrolyte-containing composition. Similarly, in a case where the inorganic solid electrolyte-containing composition contains a plurality of kinds of dispersion media, the adsorption rate is measured by using a dispersion medium having the same composition (the kind and the content) as the dispersion media in the inorganic solid electrolyte-containing

composition. Further, in a case where a plurality of kinds of low adsorption binders are used, the adsorption rate of the plurality of kinds of low adsorption binders is defined similarly as in the case of the inorganic solid electrolyte-containing composition or the like.

In the present invention, the adsorption rate of the low adsorption binder is a value calculated by the method described in Examples.

In the present invention, the adsorption rate with respect to the inorganic solid electrolyte can be appropriately set depending on the kind (the structure and the composition of the polymer chain) of polymer that forms the low adsorption binder, the kind or content of the functional group contained in the polymer, the configuration of the low adsorption binder (the amount dissolved in the dispersion medium).

The adsorption rate of the low adsorption binder is less than 60%. In a case where the low adsorption binder exhibits the above adsorption rate, it is possible to suppress the excessive adsorption to the inorganic solid electrolyte and improve the dispersion stability and the handleability of the inorganic solid electrolyte-containing composition. The adsorption rate is preferably 40% or less, more preferably 30% or less, still more preferably 20% or less, and particularly preferably 10% or less, in that both dispersion stability and handleability can be achieved at a higher level. On the other hand, the lower limit of the adsorption rate is not particularly limited and may be 0%. The lower limit of the adsorption rate is preferably small from the viewpoint of dispersion stability and handleability; however, on the other hand, it is preferably 0.1% or more and more preferably 1% or more from the viewpoint of improving the binding property of the inorganic solid electrolyte.

The low adsorption binder may be soluble (a soluble type binder) or insoluble in the dispersion medium contained in the inorganic solid electrolyte-containing composition; however, it is preferably a soluble type binder dissolved in the dispersion medium. In a case where two or more kinds of low adsorption binders are contained, it is preferable that at least one kind of low adsorption binder is soluble, and an aspect in which all the low adsorption binders are soluble is also one of the preferred aspects.

In the present invention, the description that a binder is dissolved in a dispersion medium means that a binder is dissolved in a dispersion medium of the inorganic solid electrolyte-containing composition, and for example, it means that the solubility is 80% or more in the solubility measurement. The measuring method for solubility is as follows.

That is, a specified amount of a binder to be measured is weighed in a glass bottle, 100 g of a dispersion medium that is the same kind as the dispersion medium contained in the inorganic solid electrolyte-containing composition is added thereto, and stirring is carried out at a temperature of 25°C on a mix rotor at a rotation speed of 80 rpm for 24 hours. After stirring for 24 hours, the obtained mixed solution is subjected to the transmittance measurement under the following conditions. This test (the transmittance measurement) is carried out by changing the amount of the binder dissolved (the above specified amount), and the upper limit concentration X (% by mass) at which the transmittance is 99.8% is defined as the solubility of the binder in the above dispersion medium.

<Transmittance measurement conditions>

Dynamic light scattering (DLS) measurement

Device: DLS measuring device DLS-8000 manufactured by Otsuka Electronics Co., Ltd.
Laser wavelength, output: 488 nm/100 mW
Sample cell: NMR tube

In a case where the inorganic solid electrolyte-containing composition according to the embodiment of the present invention contains an active material described later (in a case where an active material layer is formed of the inorganic solid electrolyte-containing composition), the adsorption rate of the low adsorption binder with respect to the active material is not particularly limited; however, it is preferably 90% or less, more preferably 0.1% to 50%, and still more preferably 1% to 10% in terms of the dispersion stability and the handleability of the inorganic solid electrolyte-containing composition and the enhancement of the binding property of the solid particles. In the present invention, the adsorption rate of a binder with respect to an active material is a value measured by using an active material and a dispersion medium, which are contained in the inorganic solid electrolyte-containing composition, and it is an indicator that indicates the degree of adsorption of a binder to an active material in the dispersion medium. Here, the adsorption of the binder to the active material includes not only physical adsorption but also chemical adsorption (adsorption by chemical bond formation, adsorption by transfer of electrons, or the like).

In a case where the inorganic solid electrolyte-containing composition contains a plurality of kinds of active materials or dispersion media, the adsorption rate is the same as that of the binder with respect to the inorganic solid electrolyte, described above, in a case where a plurality of kinds of binders is used. In the present invention, the adsorption rate of the binder with respect to the active material is a value calculated by the method described in Examples. In the present invention, the adsorption rate with respect to the active material can be appropriately set in the same manner

as the adsorption rate with respect to the inorganic solid electrolyte.

-- Polymer that forms low adsorption binder --

The polymer that forms the low adsorption binder is not particularly limited as long as it satisfies the above adsorption rate with respect to the inorganic solid electrolyte, and various polymers can be used. Among them, preferred examples thereof include a polymer having, in the main chain, at least one bond selected from a urethane bond, a urea bond, an amide bond, an imide bond, and an ester bond, or a polymeric chain of carbon-carbon double bond. In a case where two or more kinds of low adsorption binders are contained, it is preferable that the polymer that forms at least one kind of low adsorption binder is a polymer having the above-described bond or polymeric chain in the main chain, and an aspect in which the polymer that forms all the low adsorption binders is a polymer having the above-described bond or polymeric chain in the main chain is also one of the preferred aspects.

In the present invention, a main chain of the polymer refers to a linear molecular chain in which all the molecular chains that constitute the polymer other than the main chain can be conceived as a branched chain or a pendant with respect to the main chain. Although it depends on the mass average molecular weight of the molecular chain regarded as a branched chain or pendant chain, the longest chain among the molecular chains constituting the polymer is typically the main chain. In this case, a terminal group at the polymer terminal is not included in the main chain. In addition, side chains of the polymer refer to molecular chains other than the main chain and include a short molecular chain and a long molecular chain.

The above bond is not particularly limited as long as it is contained in the main chain of the polymer, and it may have any aspect in which it is contained in the constitutional unit(the repeating unit) and/or an aspect in which it is contained as a bond that connects different constitutional units to each other). Further, the above-described bond contained in the main chain is not limited to one kind, it may be 2 or more kinds, and it is preferably 1 to 6 kinds and more preferably 1 to 4 kinds. In this case, the binding mode of the main chain is not particularly limited. The main chain may randomly have two or more kinds of bonds and may be a main chain that is segmented to a main chain having a specific bond and a segment having another bond.

The main chain having the above bond is not particularly limited. However, it is preferably a main chain that has at least one segment among the above bonds, more preferably a main chain consisting of polyamide, polyurea, polyurethane, and (meth)acrylic polymer, and still more preferably a main chain consisting of polyurethane or a (meth)acrylic polymer.

Examples of the polymer having, among the above bonds, a urethane bond, a urea bond, an amide bond, an imide bond, or an ester bond in the main chain include a sequential polymerization (polycondensation, polyaddition, or addition condensation) polymers such as polyurethane, polyurea, polyamide, polyimide, and polyester, and copolymers thereof. The copolymer may be a block copolymer having each of the above polymers as a segment, or a random copolymer in which each constitutional component constituting two or more polymers among the above polymers is randomly bonded.

Examples of the polymer having a polymeric chain of carbon-carbon double bond in the main chain include chain polymerization polymers such as a fluorine-based polymer (a fluorine-containing polymer), a hydrocarbon-based polymer, a vinyl polymer, and a (meth)acrylic polymer. The polymerization mode of these chain polymerization polymers is not particularly limited, and the chain polymerization polymer may be any one of a block copolymer, an alternating copolymer, or a random copolymer.

As the polymer that forms the low adsorption binder, each of the above polymers can be appropriately selected. However, a polymer of a (hydrogenated) styrene-butadiene copolymer, a polymer of a styrene-butadiene-styrene block copolymer or a polymer (a hydrocarbon-based polymer) of a styrene-ethylene-butylene-styrene copolymer, or a polymer other than a PVdF-HFP copolymer (a fluorine-based polymer) is also one of the preferred aspects, and polyurethane, polyurea, polyester, or (meth)acrylic polymer is more preferable.

The polymer that forms the low adsorption binder may be one kind or two or more kinds.

The polymer that forms the low adsorption binder preferably has a constitutional component represented by any one of Formulae (1-1) to (1-5) and more preferably has a constitutional component represented by Formula (1-1) or formula (1-2). In a case where two or more kinds of low adsorption binders are contained, the polymer that forms at least one kind of low adsorption binder preferably has a constitutional component represented by any one of Formulae (1-1) to (1-5), and an aspect in which all the low adsorption binders have this constitutional component is also one of the preferred aspects. In a case where the polymer that forms the low adsorption binder has a constitutional component represented by any one of the following formulae, it is possible to reduce the adsorption rate of the polymer binder with respect to the inorganic solid electrolyte, and thus it is possible to improve the dispersion stability and the handleability of the inorganic solid electrolyte-containing composition.

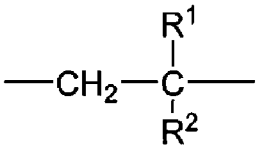

Formula (1-1)

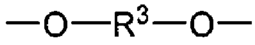

Formula (1-2)

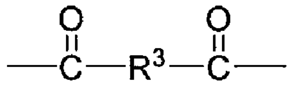

Formula (1-3)

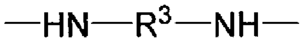

Formula (1-4)

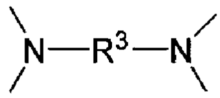

Formula (1-5)

In Formula (1-1), $R^1$ represents a hydrogen atom or an alkyl group (preferably having 1 to 12 carbon atoms, more preferably 1 to 6 carbon atoms, and still more preferably 1 to 3 carbon atoms). The alkyl group that can be adopted as $R^1$ may have a substituent. The substituent is not particularly limited; however, examples thereof include a substituent Z described later. A group other than the functional group selected from the Group (a) of functional groups is preferable, and suitable examples thereof include a halogen atom.

$R^2$ represents a group having a hydrocarbon group having 4 or more carbon atoms. In the present invention, the group having a hydrocarbon group includes a group consisting of the hydrocarbon group itself (where the hydrocarbon group is directly bonded to the carbon atom in the above formula, to which $R^1$ is bonded) and a group consisting of a linking group (where a hydrocarbon group is bonded to the carbon atom in the above formula via a linking group, to which $R^1$ is bonded) that links the carbon atom in the above formula, to which $R^2$ is bonded, to a hydrocarbon group.

The hydrocarbon group is a group composed of a carbon atom and a hydrogen atom, and it is generally introduced at the end portion of $R^2$. The hydrocarbon group is not particularly limited; however, it is preferably an aliphatic hydrocarbon group, more preferably an aliphatic saturated hydrocarbon group (an alkyl group), and still more preferably a linear or branched alkyl group. It suffices that the hydrocarbon group has 4 or more carbon atoms, and the hydrocarbon group preferably has 6 or more carbon atoms and more preferably 10 or more carbon atoms. The upper limit of the carbon atoms thereof is not particularly limited, and it is preferably 20 or less and more preferably 14 or less.

The linking group is not particularly limited; however, examples thereof include an alkylene group (preferably having 1 to 12 carbon atoms, more preferably 1 to 6 carbon atoms, and still more preferably having 1 to 3 carbon atoms), an alkenylene group (having 2 to 6 carbon atoms and more preferably having 2 or 3 carbon atoms), an arylene group (having 6 to 24 carbon atoms and more preferably having 6 to 10 carbon atoms), an oxygen atom, a sulfur atom, an imino group ($-NR^N-$: $R^N$ represents a hydrogen atom, an alkyl group having 1 to 6 carbon atoms or an aryl group having 6 to 10 carbon atoms), a carbonyl group, a phosphate linking group (-O-P(OH)(O)-O-), a phosphonate linking group (-P)(OH)(O)-O-), and a group involved in the combination thereof. It is also possible to form a polyalkyleneoxy chain by combining an alkylene group and an oxygen atom. The linking group is preferably a group composed of a combination of an alkylene group, an arylene group, a carbonyl group, an oxygen atom, a sulfur atom, and an imino group, more preferably a group composed of a combination of an alkylene group, an arylene group, a carbonyl group, an oxygen atom, and an imino group, still more preferably a group containing a -CO-O- group, a $-CO-N(R^N)-$ group (here, $R^N$ is as described above), and particularly preferably a -CO-O- group or a $-CO-N(R^N)-$group (here, $R^N$ is as described above). The number of atoms that constitute the linking group and the number of linking atoms are as described later. However, the above does not apply to the polyalkyleneoxy chain that constitutes the linking group.

In the present invention, the number of atoms that constitute the linking group is preferably 1 to 36, more preferably 1 to 24, still more preferably 1 to 12, and particularly preferably 1 to 6. The number of linking atoms of the linking group is preferably 10 or less and more preferably 8 or less. The lower limit thereof is 1 or more. The number of linking atoms refers to the minimum number of atoms linking predetermined structural parts. For example, in a case of $-CH_2-C(=O)-O-$, the number of atoms that constitute the linking group is 6; however, the number of linking atoms is 3.

Each of the hydrocarbon group and the linking group may have or may not have a substituent. Examples of the substituent which may be contained therein include a substituent Z. A group other than the functional group selected from the Group (a) of functional groups is preferable, and suitable examples thereof include a halogen atom.

In Formula (1-1), the carbon atom adjacent to the carbon atom to which $R^1$ is bonded has two hydrogen atoms; however, in the present invention, it may have one or two substituents. The substituent is not particularly limited; however, examples thereof include a substituent Z described later, and a group other than the functional group selected from the Group (a) of functional groups is preferable.

The compound from which a constitutional component represented by Formula (1-1) is derived is not particularly

limited; however, examples thereof include a (meth)acrylic acid linear alkyl ester compound (here, linear alkyl means an alkyl group having 4 or more carbon atoms).

In Formulae (1-2) to (1-5), $R^3$ represents a linking group having a mass average molecular weight of 500 or more and 200,000 or less, which contains a polybutadiene chain or a polyisoprene chain.

The terminal of the chain that can be adopted as $R^3$ can be appropriately changed to a typical chemical structure that can be incorporated as $R^3$ into the constitutional components represented by the above formulae.

In each of the formulae, $R^3$ is a divalent molecular chain; however, it may be a trivalent or higher chain in which at least one hydrogen atom is substituted with -NH-CO-, -CO-, -O-, -NH-, or -N<.

Examples of the polybutadiene chain and the polyisoprene chain, which can be adopted as $R^3$, include known chains respectively consisting of polybutadiene and polyisoprene as long as they satisfy the mass average molecular weight. Both the polybutadiene chain and the polyisoprene chain are diene polymers having double bonds in the main chain; however, in the present invention, they include a polymer in which double bonds are hydrogenated (reduced) (for example, a non-diene polymer which does not have double bonds in the chain). In the present invention, a hydride of a polybutadiene chain or polyisoprene chain is preferable.

The polybutadiene chain and the polyisoprene chain preferably have a reactive group at the terminal thereof as a raw material compound, and more preferably have a polymerizable terminal reactive group. The polymerizable terminal reactive group forms a group that is bonded to $R^3$ of each of the above formulae by polymerization. Examples of the terminal reactive group include a hydroxy group, a carboxy group, and an amino group. In particular, a hydroxy group is preferable. As the polybutadiene and the polyisoprene, which have a terminal reactive group, for example as product names, NISSO-PB series (manufactured by NIPPON SODA Co., Ltd.), Krasol series (manufactured by TOMOE Engineering Co., Ltd.), PolyVEST-HT series (manufactured by Evonik Industries AG), Poly-bd series (manufactured by Idemitsu Kosan Co., Ltd.), Poly-ip series (manufactured by Idemitsu Kosan Co., Ltd.), and EPOL (manufactured by Idemitsu Kosan Co., Ltd.) are suitably used.

The chain that can be adopted as $R^3$ preferably has a mass average molecular weight (in terms of polystyrene) of 500 to 200,000. The lower limit thereof is preferably 500 or more, more preferably 700 or more, and still more preferably 1,000 or more. The upper limit thereof is preferably 100,000 or less and more preferably 10,000 or less. The mass average molecular weight is measured by a method described later using a raw material compound before being incorporated into the main chain of the polymer.

The content of the constitutional component represented by any one of Formulae (1-1) to (1-5) in the polymer is not particularly limited; however, it is preferably 10% to 100% by mole, more preferably 30% to 98% by mole, and still more preferably 50% to 95% by mole, in terms of the improvement of dispersion stability and handleability. On the other hand, in terms of the improvement of binding property, it is preferably 0% to 90% by mole, more preferably 10% to 80% by mole, and still more preferably 20% to 70% by mole.

In a case where two or more kinds of low adsorption binders are contained, the content of the constitutional component represented by any one of Formulae (1-1) to (1-5) with respect to the total number of moles of the constitutional components of the polymers that form all the low adsorption binders is not particularly limited, and it is appropriately set according to the content in each of the above polymers.

The polymer that forms the low adsorption binder preferably contains a constitutional component having a functional group selected from the following Group (a) of functional groups as, for example, a substituent. In a case where two or more kinds of low adsorption binders are contained, the polymer that forms at least one kind of low adsorption binder preferably has a constitutional component having this functional group, and an aspect in which the polymers that form all the low adsorption binders include the constitutional component having this functional group is also one of the preferred aspects. The constitutional component having a functional group has a function of improving the adsorption rate of the low adsorption binder with respect to the inorganic solid electrolyte and may be any constitutional component that forms the polymer. The functional group may be incorporated into the main chain or the side chain of the polymer. In a case of being incorporated into the side chain, it has a linking group that bonds a functional group to the main chain. The linking group is not particularly limited; however, examples thereof include a linking group described later. The functional group contained in one constitutional component may be one kind or two or more kinds, and in a case where two or more kinds are contained, they may be or may not be bonded to each other.

<the Group (a) of functional groups>

A hydroxy group, an amino group, a carboxy group, a sulfo group, a phosphate group, a phosphonate group, a sulfanyl group, an ether bond (-O-), an imino group (=NR, or -NR-), an ester bond (-CO-O-), an amide bond (-CO-NR-), a urethane bond (-NR-CO-O-), a urea bond (-NR-CO-NR-), a heterocyclic group, an aryl group, an anhydrous carboxylic acid group, a fluoroalkyl group, and a siloxane group

Each of the amino group, the sulfo group, the phosphate group (the phosphoryl group), the heterocyclic group, and the aryl group, which are included in the Group (a) of functional groups, is not particularly limited; however, it is

synonymous with the corresponding group of the substituent Z described later. However, the amino group more preferably has 0 to 12 carbon atoms, still more preferably 0 to 6 carbon atoms, and particularly preferably 0 to 2 carbon atoms. The phosphonate group is not particularly limited; however, examples thereof include a phosphonate group having 0 to 20 carbon atoms. In a case where a ring structure contains an amino group, an ether bond, an imino group (-NR-), an ester bond, an amide bond, a urethane bond, a urea bond, or the like, it is classified as a heterocycle. The hydroxy group, the amino group, the carboxy group, the sulfo group, the phosphate group, the phosphonate group, or the sulfanyl group may form a salt.

The fluoroalkyl group is a group obtained by substituting at least one hydrogen atom of an alkyl group or cycloalkyl group with a fluorine atom, and it preferably has 1 to 20 carbon atoms, more preferably 2 to 15 carbon atoms, and still more preferably 3 to 10 carbon atoms. Regarding the number of fluorine atoms on the carbon atom, a part of the hydrogen atoms may be substituted, or all the hydrogen atoms may be substituted (a perfluoroalkyl group).

The siloxane group is not particularly limited, and it is preferably, for example, a group having a structure represented by $-(SiR_2-O)_n-$. The repetition number n is preferably an integer of 1 to 100, more preferably an integer of 5 to 50, and still more preferably an integer of 10 to 30.

R in each bond represents a hydrogen atom or a substituent, and it is preferably a hydrogen atom. The substituent is not particularly limited. It is selected from a substituent Z described later, and an alkyl group is preferable.

The anhydrous carboxylic acid group is not particularly limited; however, it includes a group obtained by removing one or more hydrogen atoms from a carboxylic acid anhydride (for example, a group represented by Formula (2a)), as well as a constitutional component itself (for example, a constitutional component represented by Formula (2b)) obtained by copolymerizing a polymerizable carboxylic acid anhydride as a copolymerizable compound. The group obtained by removing one or more hydrogen atoms from a carboxylic acid anhydride is preferably a group obtained by removing one or more hydrogen atoms from a cyclic carboxylic acid anhydride. The anhydrous carboxylic acid group derived from a cyclic carboxylic acid anhydride also corresponds to a heterocyclic group; however, it is classified as an anhydrous carboxylic acid group in the present invention. Examples thereof include acyclic carboxylic acid anhydrides such as acetic acid anhydride, propionic acid anhydride, and benzoic acid anhydride, and cyclic carboxylic acid anhydrides such as maleic acid anhydride, phthalic acid anhydride, fumaric acid anhydride, and succinic acid anhydride. The polymerizable carboxylic acid anhydride is not particularly limited; however, examples thereof include a carboxylic acid anhydride having an unsaturated bond in the molecule, and a polymerizable cyclic carboxylic acid anhydride is preferable. Specific examples thereof include maleic acid anhydride.

Examples of the anhydrous carboxylic acid group include a group represented by Formula (2a) and a constitutional component represented by Formula (2b); however, the present invention is not limited thereto. In each of the formulae, * represents a bonding position.

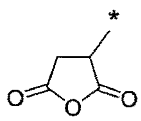

(2a)

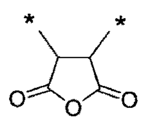

(2b)

In the sequential polymerization polymer, the ester bond (-CO-O-), the amide bond (-CO-NR-), the urethane bond (-NR-CO-O-), and the urea bond (-NR-CO-NR-) are represented by being divided into, a -CO- group and a -O- group, a -CO group and a -NR-group, a -NR-CO- group and a -O- group, and an NR-CO- group and a -NR- group, respectively, in a case where the chemical structure of the polymer is represented by constitutional components derived from raw material compounds. As a result, in the present invention, the constitutional components having these bonds are regarded as constitutional components derived from the carboxylic acid compound or constitutional components derived from the isocyanate compound regardless of the notation of the polymer, and they do not include constitutional components derived from the polyol or polyamine compound.

In addition, in the chain polymerization polymer, the constitutional component having an ester bond (excluding an ester bond that forms a carboxy group) or an amide bond means a constitutional component in which an ester bond or an amide bond is not directly bonded to an atom that constitutes the main chain of a chain polymerization polymer or the main chain of a polymeric chain (for example, a polymeric chain contained in a macromonomer) that is incorporated into the chain polymerization polymer as a branched chain or a pendant chain, and it does not include, for example, a constitutional component derived from a (meth)acrylic acid alkyl ester.

The linking group that binds a functional group to the main chain is not particularly limited; however, it is synonymous with the linking group in the group having a hydrocarbon group having 4 or more carbon atoms, except for the particularly preferred linking group that can be adopted as $R^2$ of Formula (1-1). As the linking group that binds a functional group to the main chain, a particularly preferred linking group is a group composed of a combination of a -CO-O- group or -CO-N($R^N$)- group (here, $R^N$ is as described above) and an alkylene group or polyalkyleneoxy chain.

The constitutional component having the above functional group is not particularly limited as long as it has the above functional group. However, examples thereof include a constitutional component into which the above functional group is introduced into a constitutional component represented by any one of Formulae (1-1) to (1-5), a constitutional component into which the above functional group is introduced into a constitutional component represented by Formulae (1-1) or (1-2) described later, into a constitutional component derived from a compound represented by Formulae (1-5) described later, into a constitutional component represented by Formulae (1-3) or (1-4) described later, or into a constitutional component derived from a compound represented by Formulae (1-6), and furthermore, a constitutional component into which the above functional group is introduced into a (meth)acrylic compound (M1) or another polymerizable compound (M2) described later or into a constitutional component represented by any one of Formulae (b-1) to (b-3) described later.

The compound from which a constitutional component having the above functional group is derived is not particularly limited; however, examples thereof include a compound in which the above functional group is introduced into a (meth)acrylic acid short-chain alkyl ester compound (here, short-chain alkyl means an alkyl group having 3 or less of carbon atoms).

The content of the constitutional component having the above functional group in the polymer is not particularly limited as long as the adsorption rate of the low adsorption binder with respect to the inorganic solid electrolyte can be suppressed to be less than 60%.

The content thereof in the sequential polymerization polymer is preferably 0.01% to 50% by mole, more preferably 0.1% to 50% by mole, and still more preferably 0.3% to 50% by mole, in terms of the binding property of the solid particles. The content thereof in the chain polymerization polymer is preferably 0.01% to 80% by mole, more preferably 0.01% to 70% by mole, still more preferably 0.1% to 50% by mole, and particularly preferably 0.3% to 50% by mole, in terms of the binding property of the solid particles. In the sequential polymerization polymer and the chain polymerization polymer, the lower limit of the content can be 5% by mole or more or 20% by mole or more.

In a case where two or more kinds of low adsorption binders are contained, the content of the constitutional component having the above functional group with respect to the total number of moles of the constitutional components of the polymers that form all the low adsorption binders is not particularly limited, and it is appropriately set according to the content in each of the above polymers.

- Sequential polymerization polymer -

The sequential polymerization polymer as a polymer that forms the low adsorption binder preferably has a constitutional component having a functional group selected from the Group (a) of functional groups described above or a constitutional component represented by any one of Formula (1-2) to Formula (1-5), and furthermore, it may have a constitutional component different from these constitutional components. Among the constitutional components shown below, the constitutional component represented by Formula (I-1) or Formula (1-2) and the constitutional component derived from the compound represented by Formula (1-5) correspond to the constitutional component having a functional group selected from the Group (a) of functional groups; however, they will be described together with other constitutional components. Examples of the other constitutional components include a constitutional component represented by Formula (I-1) or (1-2) and furthermore, a constitutional component obtained by sequentially polymerizing one or more kinds (preferably 1 to 8 kinds and more preferably 1 to 4 kinds) of constitutional components represented by Formula (1-3) or (1-4) or a carboxylic acid dianhydride represented by Formula (1-5) with a diamine compound from which a constitutional component represented by Formula (1-6). The combination of each of the constitutional components is appropriately selected depending on the kind of polymer. One kind of constitutional component that is used in the combination of the constitutional components refers to the constitutional component represented by any one of the following formulae. Even in a case where two kinds of constitutional components represented by one of the following formulae are contained, it is not interpreted as two constitutional components.

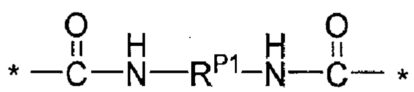

Formula (I-1)

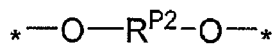

Formula (I-3)

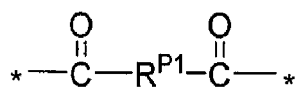

Formula (I-2)

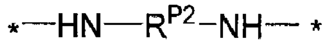

Formula (I-4)

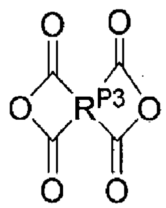

Formula (I-5)

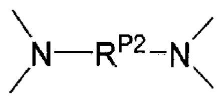

Formula (I-6)

In the formulae, $R^{P1}$ and $R^{P2}$ each independently represent a molecular chain having a (mass-average) molecular weight of 20 to 200,000. The molecular weight of the molecular chain cannot be uniquely determined because it depends on the kind thereof and the like, and is, for example, preferably 30 or higher, more preferably 50 or higher, still more preferably 100 or higher, and still more preferably 150 or higher. The upper limit thereof is preferably 100,000 or less and more preferably 10,000 or less. The molecular weight of the molecular chain is measured for a raw material compound before being incorporated into the main chain of the polymer.

The molecular chain which can be adopted as $R^{P1}$ and $R^{P2}$ is not particularly limited and is preferably a hydrocarbon chain, a polyalkylene oxide chain, a polycarbonate chain, or a polyester chain, more preferably a hydrocarbon chain or a polyalkylene oxide chain, and still more preferably a hydrocarbon chain, a polyethylene oxide chain, or a polypropylene oxide chain.

The hydrocarbon chain which can be adopted as $R^{P1}$ and $R^{P2}$ means a chain of hydrocarbon including a carbon atom and a hydrogen atom, and more specifically means a structure in which at least two atoms (for example, hydrogen atoms) or a group (for example, a methyl group) is desorbed from the compound including a carbon atom and a hydrogen atom. However, in the present invention, the hydrocarbon chain also includes a chain that includes a chain having an oxygen atom, a sulfur atom, or a nitrogen atom, for example, as in a hydrocarbon group represented by Formula (M2). A terminal group that may be present in a terminal of the hydrocarbon chain is not included in the hydrocarbon chain. This hydrocarbon chain may include a carbon-carbon unsaturated bond or may include a ring structure of an aliphatic ring and/or an aromatic ring. That is, the hydrocarbon chain is not limited as long as a hydrocarbon chain includes a hydrocarbon selected from an aliphatic hydrocarbon or an aromatic hydrocarbon.

It suffices that such a hydrocarbon chain satisfies the above molecular weight, and the hydrocarbon chain includes a double hydrocarbon chain including a chain consisting of a hydrocarbon group having a low molecular weight and a hydrocarbon chain (also referred to as "hydrocarbon-based polymer chain") consisting of a hydrocarbon-based polymer.

The hydrocarbon chain having a low molecular weight is a chain consisting of a typical (non-polymerizable) hydrocarbon group, and examples of the hydrocarbon group include an aliphatic or aromatic hydrocarbon group. Specifically, an alkylene group (having preferably 1 to 12 carbon atoms, more preferably 1 to 6 carbon atoms, and still more preferably 1 to 3 carbon atoms), an arylene group (having preferably 6 to 22 carbon atoms, more preferably 6 to 14 carbon atoms, and still more preferably 6 to 10 carbon atoms), or a group consisting of a combination of the above-described groups is preferable. As the hydrocarbon group that forms the hydrocarbon chain having a low molecular weight which can be adopted as $R^{P2}$, an alkylene group is more preferable, an alkylene group having 2 to 6 carbon atoms is still more preferable, and an alkylene group having 2 or 3 carbon atoms is still more preferable. This hydrocarbon chain may have a polymeric chain (for example, a (meth)acrylic polymer) as a substituent.

The aliphatic hydrocarbon group is not particularly limited, and examples thereof include a hydrogen reduced form of an aromatic hydrocarbon group represented by Formula (M2) and a partial structure (for example, a group consisting of isophorone) in a conventionally known aliphatic diisocyanate compound.

Examples of the aromatic hydrocarbon group include a hydrocarbon group contained in each of the exemplary constitutional components described below, and an arylene group (for example, a group obtained by removing one or more hydrogen atoms from the aryl group mentioned in the substituent Z described later; specifically, a phenylene group, a tolylene group, or a xylylene group) or a hydrocarbon group represented by Formula (M2) is preferable.

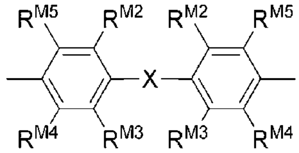

(M2)

In Formula (M2), X represents a single bond, $-CH_2-$, $-C(CH_3)_2-$, $-SO_2-$, -S-, -CO-, or -O- and is preferably $-CH_2-$ or -O-, and more preferably $-CH_2-$ from the viewpoint of binding property. The alkylene group and the alkylene group, which are exemplified herein, may be substituted with a substituent Z and preferably a halogen atom (more preferably a fluorine atom).

$R^{M2}$ to $R^{M5}$ each independently represent a hydrogen atom or a substituent and preferably a hydrogen atom. The substituent which can be adopted as $R^{M2}$ to $R^{M5}$ is not particularly limited; however, examples thereof include an alkyl group having 1 to 20 carbon atoms, an alkenyl group having 1 to 20 carbon atoms, $-OR^{M6}$, $-N(R^{M6})_2$, $-SR^{M6}$ ($R^{M6}$ represents a substituent and preferably an alkyl group having 1 to 20 carbon atoms or an aryl group having 6 to 10 carbon atoms), and a halogen atom (for example, a fluorine atom, a chlorine atom, or a bromine atom). Examples of $-N(R^{M6})_2$ include an alkylamino group (having preferably 1 to 20 carbon atoms and more preferably 1 to 6 carbon atoms) and an arylamino group (having preferably 6 to 40 carbon atoms and more preferably 6 to 20 carbon atoms).

The hydrocarbon-based polymer chain is not particularly limited as long as it is a polymer chain formed by polymerizing (at least two) polymerizable hydrocarbons and a chain consisting of a hydrocarbon-based polymer having a larger number of carbon atoms than the above-described hydrocarbon chain having a low molecular weight; however, it is preferably a chain consisting of a hydrocarbon-based polymer consisting of 30 or more carbon atoms and more preferably 50 or more carbon atoms. The upper limit of the number of carbon atoms that constitute the hydrocarbon-based polymer is not particularly limited and may be, for example, 3,000. The hydrocarbon-based polymer chain is preferably a chain consisting of a hydrocarbon-based polymer formed of an aliphatic hydrocarbon in which the main chain satisfies the above-described number of carbon atoms and more preferably a chain consisting of a polymer (preferably an elastomer) formed of an aliphatic saturated hydrocarbon or an unsaturated aliphatic hydrocarbon. Examples of the polymer include a diene polymer having double bonds in the main chain and a non-diene polymer not having double bonds in the main chain. Examples of the diene polymer include a styrene-butadiene copolymer, a styrene-ethylene-butadiene copolymer, a copolymer (preferably butyl rubber (IIR)) of isobutylene and isoprene, and an ethylene-propylene-diene copolymer. Examples of the non-diene polymer include an olefin polymer such as an ethylene-propylene copolymer or a styrene-ethylene-butylene copolymer and a hydrogen reduced form of the above-described diene polymer.

The hydrocarbon forming the hydrocarbon chain preferably has a reactive group at a terminal and more preferably has a terminal reactive group capable of polycondensation. The terminal reactive group capable of polycondensation or polyaddition forms a group bonded to $R^{P1}$ or $R^{P2}$ in each of the formulae by polycondensation or polyaddition. Examples of the terminal reactive group include an isocyanate group, a hydroxy group, a carboxy group, an amino group, and an acid anhydride. In particular, a hydroxy group is preferable.

As the hydrocarbon-based polymer having a terminal reactive group, for example as product names, NISSO-PB series (manufactured by NIPPON SODA Co., Ltd.), Krasol series (manufactured by TOMOE Engineering Co., Ltd.), PolyVEST-HT series (manufactured by Evonik Industries AG), Poly-bd series (manufactured by Idemitsu Kosan Co., Ltd.), Poly-ip series (manufactured by Idemitsu Kosan Co., Ltd.), EPOL (manufactured by Idemitsu Kosan Co., Ltd.), and POLYTAIL series (manufactured by Mitsubishi Chemical Corporation) are suitably used.

Examples of the polyalkylene oxide chain (the polyalkyleneoxy chain) include a chain consisting of a conventionally known polyalkyleneoxy group. The number of carbon atoms in the alkyleneoxy group of the polyalkyleneoxy chain is preferably 1 to 10, more preferably 1 to 6, and still more preferably 2 or 3 (a polyethyleneoxy chain or a polypropyleneoxy chain). The polyalkyleneoxy chain may be a chain consisting of one alkyleneoxy group or may be a chain consisting of two or more alkyleneoxy groups (for example, a chain consisting of an ethyleneoxy group and a propyleneoxy group).

Examples of the polycarbonate chain or the polyester chain include a chain consisting of a conventionally known polycarbonate or polyester.

It is preferable that the polyalkyleneoxy chain, the polycarbonate chain, or the polyester chain includes an alkyl group (having preferably 1 to 12 carbon atoms and more preferably 1 to 6 carbon atoms) at a terminal.

The terminal of the polyalkyleneoxy chain, the polycarbonate chain, or the polyester chain, which can be adopted as $R^{P1}$ and $R^{P2}$, can be appropriately changed to a typical chemical structure that can be incorporated into the constitutional component represented by each of the formulae as $R^{P1}$ and $R^{P2}$. For example, a polyalkyleneoxy chain from which the terminal oxygen atom has been removed is incorporated as $R^{P1}$ or $R^{P2}$ of the above constitutional component.

In the alkyl group in the molecular chain or at a terminal thereof, an ether group (-O-), a thioether group (-S-), a carbonyl group (>C=O), or an imino group (>$NR^N$: $R^N$ represents a hydrogen atom, an alkyl group having 1 to 6 carbon atoms, or an aryl group having 6 to 10 carbon atoms) may be present.

In each of the formulae, $R^{P1}$ and $R^{P2}$ represent a divalent molecular chain but may represent a trivalent or higher molecular chain in which at least one hydrogen atom is substituted with -NH-CO-, -CO-, -O-, -NH-, or -N<.

Among the above molecular chains, $R^{P1}$ is preferably a hydrocarbon chain, more preferably a hydrocarbon chain having a low molecular weight, still more preferably a hydrocarbon chain consisting of an aliphatic or aromatic hydrocarbon group, and particularly preferably a hydrocarbon chain consisting of an aliphatic hydrocarbon group.

Among the above molecular chains, $R^{P2}$ is preferably a low molecular weight hydrocarbon chain (more preferably an aliphatic hydrocarbon group) or a molecular chain other than the hydrocarbon chain having a low molecular weight (more preferably, a polyalkylene oxide chain).

Specific examples of the constitutional component represented by Formula (1-1) are shown below and in Examples. Examples of the raw material compound (the diisocyanate compound) from which the constitutional component represented by Formula (I-1) is derived include the diisocyanate compound represented by Formula (M1) described in WO2018/020827A and the specific example thereof and further include a polymeric 4,4'-diphenylmethane diisocyanate. In the present invention, the constitutional component represented by Formula (I-1) and the raw material compound derived from the constitutional component are not limited to those described in the following specific examples and the above documents.

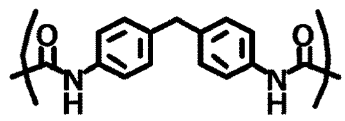
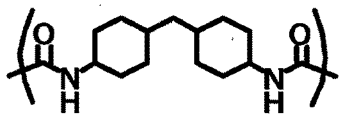
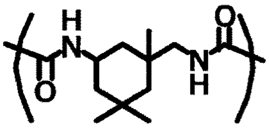
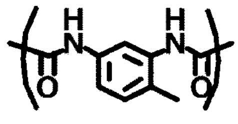
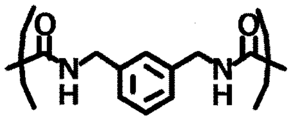
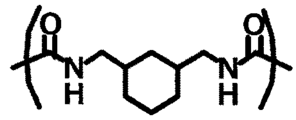
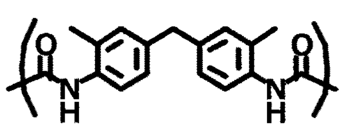
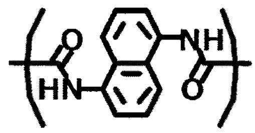
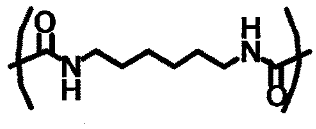
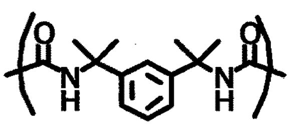
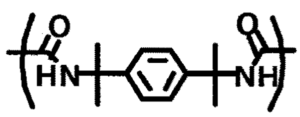
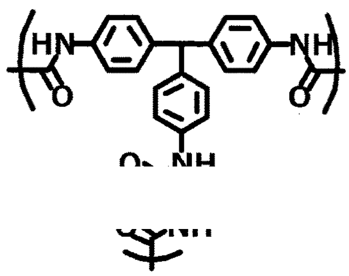
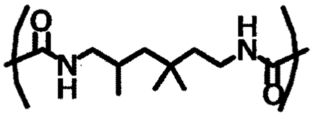
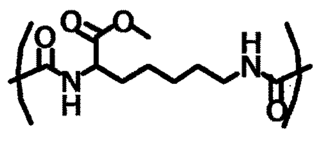
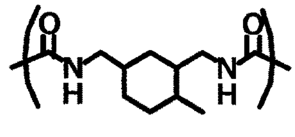
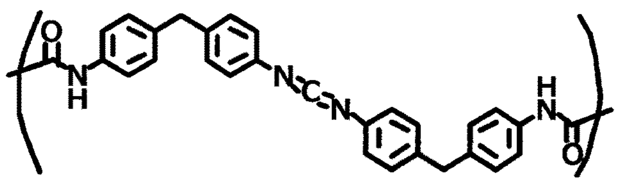
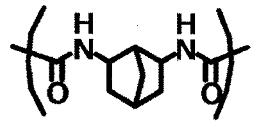

The raw material compound (a carboxylic acid, an acid chloride thereof, or the like) from which the constitutional components represented by Formula (1-2) are derived is not particularly limited, and examples of the raw material include the carboxylic acid or the compound of the acid chloride, and the specific examples thereof (for example, adipic acid or an esterified product thereof), which are described in paragraph 0074of WO2018/020827A.

Specific examples of the constitutional components represented by Formula (1-3) or Formula (1-4) are shown below and in Examples. The raw material compound (the diol compound or the diamine compound) from which the constitutional component represented by Formula (1-3) or Formula (1-4) is derived is not particularly limited. Examples thereof include the respective compounds and the specific examples thereof, which are described in WO2018/020827A, and further include dihydroxyoxamide. In the present invention, the constitutional components represented by Formula (1-3) or Formula (I-4) and the raw material compounds from which the compounds are derived are not limited to those described in the following specific examples, Examples, and the above documents.

In the following specific examples, in a case where the constitutional component has a repeating structure, the repetition number is an integer of 1 or more and is appropriately set within a range that satisfies the molecular weight or the number of carbon atoms of the molecular chain.

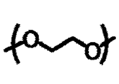 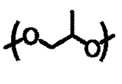 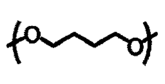 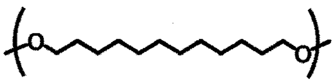 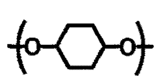

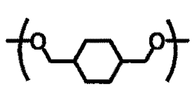 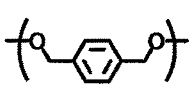 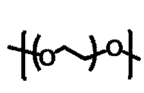 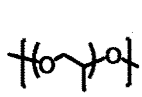 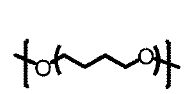

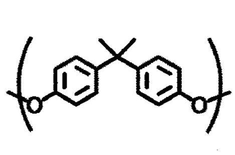 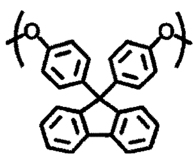 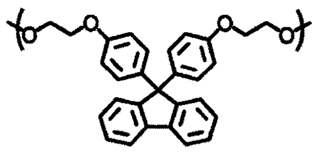 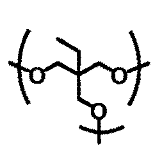

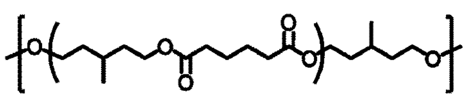 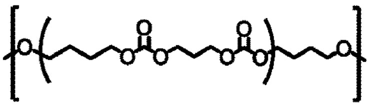

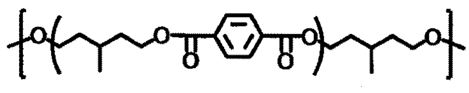 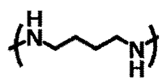 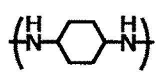

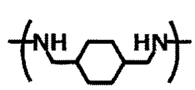 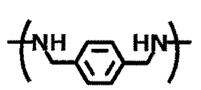 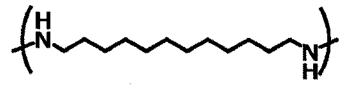

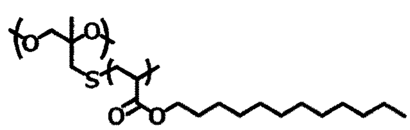 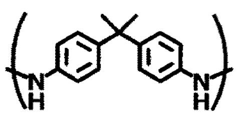 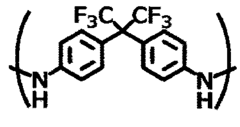

In Formula (1-5), $R^{P3}$ represents an aromatic or aliphatic linking group (tetravalent) and preferably a linking group represented by any one of Formulae (i) to (iix).

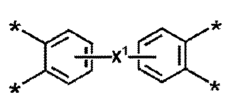 (i)

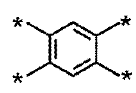 (ii)

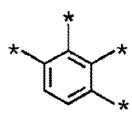 (iii)

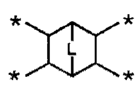 (iv)

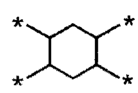 (v)

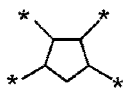
(vi)

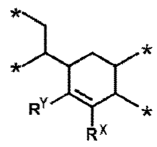
(vii)

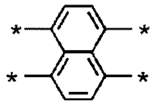
(iix)

In Formulae (i) to (iix), $X^1$ represents a single bond or a divalent linking group. As the divalent linking group, an alkylene group having 1 to 6 carbon atoms (for example, methylene, ethylene, or propylene) is preferable. The propylene is preferably 1,3-hexafluoro-2,2-propanediyl. L represents $-CH_2=CH_2-$ or $-CH_2-$. $R^X$ and $R^Y$ each independently represent a hydrogen atom or a substituent. In each of the formulae, * represents a binding position to the carbonyl group in Formula (1-5). The substituent that can be adopted as $R^X$ and $R^Y$ is not particularly limited, and examples thereof include the substituent Z described below. In particular, an alkyl group (having preferably 1 to 12 carbon atoms, more preferably 1 to 6 carbon atoms, still more preferably 1 to 3 carbon atoms) or an aryl group (having preferably 6 to 22 carbon atoms, more preferably 6 to 14 carbon atoms, still more preferably 6 to 10 carbon atoms) is preferable.

The carboxylic acid dianhydride represented by Formula (1-5) and the raw material compound (the diamine compound) from which the constitutional components represented by Formula (1-6) are respectively derived are not particularly limited, and examples thereof include the respective compounds and the specific examples thereof, which are described in WO2018/020827A and WO2015/046313A.

$R^{P1}$, $R^{P2}$, and $R^{P3}$ may each independently have a substituent. The substituent is not particularly limited, and examples thereof include the substituent Z described below or each group included in the Group (a) of functional groups described above. In particular, suitable examples thereof include the substituent that can be adopted as $R^{M2}$.

In a case where the polymer that forms the low adsorption binder is a sequential polymerization polymer, it may have a constitutional component represented by any one of Formulae (1-1) to (1-5) described above, preferably a constitutional component having a functional group selected from the Group (a) of functional groups (including a constitutional component represented by Formula (I-1)), and may further have a constitutional component represented by Formula (1-3), formula (1-4), or formula (1-5). Examples of the constitutional component represented by Formula (1-3) include a constitutional component represented by at least one of Formulae (I-3A) to (I-3C). The case of the constitutional component represented by Formula (1-3) applies similarly to the constitutional component represented by Formula (1-4) as well; however, in each of Formulae (I-3A) to (I-3C), the oxygen atom is substituted with a nitrogen atom.

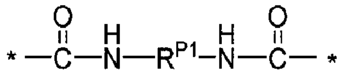
Formula (I-1)

$*{-}O{-}R^{P2A}{-}O{-}*$
Formula (I-3A)

$*{-}O{-}R^{P2B}{-}O{-}*$
Formula (I-3B)

$*{-}O{-}R^{P2C}{-}O{-}*$
Formula (I-3C)

In Formula (1-1), $R^{P1}$ is as described above. In formula (I-3A), $R^{P2A}$ represents a chain consisting of a hydrocarbon group having a low molecular weight (preferably, an aliphatic hydrocarbon group). In Formula (I-3B), $R^{P2B}$ represents a polyalkyleneoxy chain. In Formula (I-3C), $R^{P2C}$ represents a hydrocarbon-based polymer chain. The chain consisting of a hydrocarbon group having a low molecular weight, which can be adopted as $R^{P2A}$, the polyalkyleneoxy chain which can be adopted as $R^{P2C}$, and the hydrocarbon-based polymer chain which can be adopted as $R^{P2B}$ are respectively the same as the aliphatic hydrocarbon group, the polyalkyleneoxy chain, and the hydrocarbon-based polymer chain, each of which can be adopted as $R^{P2}$ in Formula (1-3), and the same is applied to the preferred ones thereof.

The polymer that forms the low adsorption binder may have a constitutional component other than the constitutional component represented by the above formulae. Such a constitutional component is not particularly limited as long as it can be subjected to sequential polymerization with a raw material compound from which the constitutional component represented by each of the above formulae is derived.

In the polymer that forms the low adsorption binder, the (total) content of the constitutional components represented by Formula (1-1) to Formula (1-6) is not particularly limited; however, it is preferably 5% to 100% by mole, more preferably 5% to 80% by mole, and still more preferably 10% to 60% by mole. The upper limit value of the content thereof may be, for example, 100% by mole or less regardless of the above 60% by mole.

In the polymer that forms the low adsorption binder, the content of the constitutional component other than the constitutional component represented by each of the above formulae is not particularly limited; however, it is preferably 50% by mass or less.

In a case where the polymer that forms the low adsorption binder has a constitutional component represented by any of Formulae (I-1) to (1-6), the content thereof is not particularly limited, and it can be appropriately selected in consideration of the SP value and the like of the constitutional unit or polymer. For example, it can be set in the following

range.

That is, in the polymer that forms the low adsorption binder, the content of the constitutional component represented by Formula (I-1) or Formula (1-2) or the constitutional component derived from the carboxylic acid dianhydride represented by Formula (1-5) is not particularly limited; however, it is preferably the same as the above-described content of the constitutional component having a functional group.

In the polymer that forms the low adsorption binder, the content of the constitutional component represented by Formula (1-3), Formula (1-4), or Formula (1-6) is not particularly limited, and it is preferably 0% to 48% by mole, more preferably 0% to 45% by mole, and still more preferably 0% to 40% by mole. It is particularly preferable that the content of each constitutional component represented by Formula (1-3) or Formula (1-4) is 0% to 20% by mole.

The content of each constitutional component represented by any one of Formulae (I-3A) to (I-3C) can be appropriately set within the range of the content of each constitutional component represented by Formula (1-3).

It is noted that in a case where the polymer that forms the low adsorption binder has a plurality of constitutional components represented by the respective formulae, the above-described content of each of the constitutional components is the total content.

The polymer (each constitutional component and raw material compound) that forms the low adsorption binder may have a substituent. The substituent is not particularly limited; however, examples thereof preferably include a group selected from the following substituent Z.

The polymer that forms the low adsorption binder can be synthesized with a known method by selecting a raw material compound depending on the kind of bond of the main chain and subjecting the raw material compound to polyaddition or polycondensation. As the synthesis method, for example, WO2018/151118A can be referenced.

The method of incorporating a functional group is not particularly limited, and examples thereof include a method of copolymerizing a compound having a functional group selected from the Group (a) of functional groups, a method of using a polymerization initiator having (generating) the above functional group, and a method of using a polymeric reaction.

Examples of each of the polymers of polyurethane, polyurea, polyamide, and polyimide which can be adopted as the polymer that forms the low adsorption binder include, in addition to those synthesized in Examples, each of the polymers described in WO2018/020827A and WO2015/046313A and further include each of the polymers described in JP2015-088480A.

- Substituent Z -

The examples are an alkyl group (preferably an alkyl group having 1 to 20 carbon atoms, for example, methyl, ethyl, isopropyl, t-butyl, pentyl, heptyl, 1-ethylpentyl, benzyl, 2-ethoxyethyl, and 1-carboxymethyl), an alkenyl group (preferably an alkenyl group having 2 to 20 carbon atoms, such as vinyl, allyl, andoleyl), an alkynyl group (preferably an alkynyl group having 2 to 20 carbon atoms, for example, ethynyl, butadynyl, and phenylethynyl), a cycloalkyl group (preferably a cycloalkyl group having 3 to 20 carbon atoms, such as cyclopropyl, cyclopentyl, cyclohexyl, and 4-methylcyclohexyl; in the present specification, the alkyl group generally has a meaning including a cycloalkyl group therein when being referred to, however, it will be described separately here), an aryl group (preferably an aryl group having 6 to 26 carbon atoms, such as phenyl, 1-naphthyl, 4-methoxyphenyl, 2-chlorophenyl, and 3-methylphenyl), an aralkyl group (preferably an aralkyl group having 7 to 23 carbon atoms, for example, benzyl or phenethyl), and a heterocyclic group (preferably a heterocyclic group having 2 to 20 carbon atoms and more preferably a 5- or 6-membered heterocyclic group having at least one oxygen atom, one sulfur atom, or one nitrogen atom. The heterocyclic group includes an aromatic heterocyclic group and an aliphatic heterocyclic group. Examples thereof include a tetrahydropyran ring group, a tetrahydrofuran ring group, a 2-pyridyl group, a 4-pyridyl group, a 2-imidazolyl group, a 2-benzimidazolyl group, a 2-thiazolyl group, a 2-oxazolyl group, or a pyrrolidone group); an alkoxy group (preferably an alkoxy group having 1 to 20 carbon atoms, for example, a methoxy group, an ethoxy group, an isopropyloxy group, or a benzyloxy group); an aryloxy group (preferably an aryloxy group having 6 to 26 carbon atoms, for example, a phenoxy group, a 1-naphthyloxy group, a 3-methylphenoxy group, or a 4-methoxyphenoxy group; in the present specification, the aryloxy group has a meaning including an aryloyloxy group therein when being referred to); a heterocyclic oxy group (a group in which an -O- group is bonded to the above-described heterocyclic group), an alkoxycarbonyl group (preferably an alkoxycarbonyl group having 2 to 20 carbon atoms, for example, an ethoxycarbonyl group, a 2-ethylhexyloxycarbonyl group, or a dodecyloxycarbonyl group); an aryloxycarbonyl group (preferably an aryloxycarbonyl group having 6 to 26 carbon atoms, for example, a phenoxycarbonyl group, a 1-naphthyloxycarbonyl group, a 3-methylphenoxycarbonyl group, or a 4-methoxyphenoxycarbonyl group); an amino group (preferably an amino group having 0 to 20 carbon atoms, an alkylamino group, or an arylamino group, for example, an amino ($-NH_2$) group, an N,N-dimethylamino group, an N,N-diethylamino group, an N-ethylamino group, or an anilino group); a sulfamoyl group (preferably a sulfamoyl group having 0 to 20 carbon atoms, for example, an N,N-dimethylsulfamoyl group or an N-phenylsufamoyl group); an acyl group (an alkylcarbonyl group, an alkenylcarbonyl group, an alkynylcarbonyl group, an arylcarbonyl group, or a heterocyclic carbonyl group, preferably an acyl group having 1 to 20 carbon atoms, for example, an acetyl group, a propionyl group, a butyryl group, an octanoyl

group, a hexadecanoyl group, an acryloyl group, a methacryloyl group, a crotonoyl group, a benzoyl group, a naphthoyl group, or a nicotinoyl group); an acyloxy group (an alkylcarbonyloxy group, an alkenylcarbonyloxy group, an alkynylcarbonyloxy group, an arylcarbonyloxy group, or a heterocyclic carbonyloxy group, preferably an acyloxy group having 1 to 20 carbon atoms, for example, an acetyloxy group, a propionyloxy group, a butyryloxy group, an octanoyloxy group, a hexadecanoyloxy group, an acryloyloxy group, a methacryloyloxy group, a crotonoyloxy group, a benzoyloxy group, a naphthoyloxy group, or a nicotinoyloxy group); an aryloyloxy group (preferably an aryloyloxy group having 7 to 23 carbon atoms, for example, a benzoyloxy group);a carbamoyl group (preferably a carbamoyl group having 1 to 20 carbon atoms, for example, an N,N-dimethylcarbamoyl group or an N-phenylcarbamoyl group); an acylamino group (preferably an acylamino group having 1 to 20 carbon atoms, for example, an acetylamino group or a benzoylamino group); an alkylthio group (preferably an alkylthio group having 1 to 20 carbon atoms, for example, a methylthio group, an ethylthio group, an isopropylthio group, or a benzylthio group); an arylthio group (preferably an arylthio group having 6 to 26 carbon atoms, for example, a phenylthio group, a 1-naphthylthio group, a 3-methylphenylthio group, or a 4-methoxyphenylthio group); a heterocyclic thio group (a group in which an -S- group is bonded to the above-described heterocyclic group), an alkylsulfonyl group (preferably an alkylsulfonyl group having 1 to 20 carbon atoms, for example, a methylsulfonyl group or an ethylsulfonyl group), an arylsulfonyl group (preferably an arylsulfonyl group having 6 to 22 carbon atoms, for example, a benzenesulfonyl group), an alkylsilyl group (preferably an alkylsilyl group having 1 to 20 carbon atoms, for example, a monomethylsilyl group, a dimethylsilyl group, a trimethylsilyl group, or a triethylsilyl group); an arylsilyl group (preferably an arylsilyl group having 6 to 42 carbon atoms, for example, a triphenylsilyl group), an alkoxysilyl group (preferably an alkoxysilyl group having 1 to 20 carbon atoms, for example, a monomethoxysilyl group, a dimethoxysilyl group, a trimethoxysilyl group, or a triethoxysilyl group), an aryloxysilyl group (preferably an aryloxysilyl group having 6 to 42 carbon atoms, for example, a triphenyloxysilyl group), a phosphate group (preferably a phosphate group having 0 to 20 carbon atoms, for example, $-OP(=O)(R^P)_2$), a phosphonyl group (preferably a phosphonyl group having 0 to 20 carbon atoms, for example, $-P(=O)(R^P)_2$), a phosphinyl group (preferably a phosphinyl group having 0 to 20 carbon atoms, for example, $-P(R^P)_2$), a phosphonate group (preferaby a phosphonate group having 0 to 20 carbon atoms, for example, $-PO(OR^P)_2$), a sulfo group (a sulfonate group), a carboxy group, a hydroxy group, a sulfanyl group, a cyano group, and a halogen atom (for example, a fluorine atom, a chlorine atom, a bromine atom, or an iodine atom). $R^P$ represents a hydrogen atom or a substituent (preferably a group selected from the substituent Z).

In addition, each group exemplified in the substituent Z may be further substituted with the substituent Z.

The alkyl group, the alkylene group, the alkenyl group, the alkenylene group, the alkynyl group, the alkynylene group, and/or the like may be cyclic or chained, may be linear or branched.

- Chain polymerization polymer -

The chain polymerization polymer as a polymer that forms the low adsorption binder will be described.

The chain polymerization polymer preferably has the above-described constitutional component having a functional group selected from the Group (a) of functional groups or the above-described constitutional component represented by Formula (1-1) and more preferably has the above-described constitutional component having a functional group and the constitutional component represented by Formula (1-1), and further, it may have a constitutional component different from these constitutional components. The chain polymerization polymer may not have the constitutional component having a functional group selected from the Group (a) of functional groups or the above-described constitutional component represented by Formula (1-1) and may be a polymer consisting of another constitutional component.

Examples of the fluorine-containing polymer include polytetrafluoroethylene (PTFE), polyvinylene difluoride (PVdF), a copolymer of polyvinylene difluoride and hexafluoropropylene (PVdF-HFP), and a copolymer (PVdF-HFP-TFE) of polyvinylidene difluoride, hexafluoropropylene, and tetrafluoroethylene. In PVdF-HFP, the copolymerization ratio [PVdF:HFP] (mass ratio) of PVdF to HFP is not particularly limited; however, it is preferably 9:1 to 5:5 and more preferably 9:1 to 7: 3 from the viewpoint of adhesiveness. In PVdF-HFP-TFE, the copolymerization ratio [PVdF:HFP:TFE] (mass ratio) of PVdF, HFP, and TFE is not particularly limited; however, it is preferably 20 to 60:10 to 40: 5 to 30, and more preferably 25 to 50:10 to 35:10 to 25.

Examples of the hydrocarbon-based polymer include polyethylene, polypropylene, natural rubber, polybutadiene, polyisoprene, polystyrene, a polystyrene butadiene copolymer, a styrene-based thermoplastic elastomer, polybutylene, an acrylonitrile butadiene copolymer, and hydrogen-added (hydrogenated) polymers thereof. The styrene-based thermoplastic elastomer or the hydride thereof is not particularly limited. However, examples thereof include a styrene-ethylene-butylene-styrene block copolymer (SEBS), a styrene-isoprene-styrene block copolymer (SIS), a hydrogenated SIS, a styrene-butadiene-styrene block copolymer (SBS), a hydrogenated SBS, a styrene-ethylene-ethylene-propylene-styrene block copolymer (SEEPS), a styrene-ethylene-propylene-styrene block copolymer (SEPS), a styrene-butadiene rubber (SBR), a hydrogenated a styrene-butadiene rubber (HSBR), and further more, a random copolymer corresponding to each of the above-described block copolymers such as SEBS. In the present invention, the hydrocarbon-based polymer preferably has no unsaturated group (for example, a 1,2-butadiene constitutional component) that is bonded

to the main chain from the viewpoint that the formation of chemical crosslink can be suppressed.

Examples of the vinyl polymer include a polymer containing a vinyl monomer other than the (meth)acrylic compound (M1), where the content of the vinyl polymer is, for example, 50% by mole or more. Examples of the vinyl monomer include vinyl compounds described later. Specific examples of the vinyl polymer include polyvinyl alcohol, polyvinyl acetal, polyvinyl acetate, and a copolymer containing these.

In addition to the constitutional component derived from the vinyl monomer, this vinyl polymer preferably has a constitutional component derived from the (meth)acrylic compound (M1) that forms a (meth)acrylic polymer described later. The content of the constitutional component derived from the vinyl monomer is preferably the same as the content of the constitutional component derived from the (meth)acrylic compound (M1) in the (meth)acrylic polymer. The content of the constitutional component derived from the (meth)acrylic compound (M1) in the polymer is not particularly limited as long as it is less than 50% by mass; however, it is preferably 0% to 30% by mass. The content of the constitutional component (MM) in the polymer is preferably the same as the content in the (meth)acrylic polymer.

The (meth)acrylic polymer is preferably, as another constitutional component, a polymer obtained by copolymerizing at least one (meta)acrylic compound (M1) selected from a (meth)acrylic acid compound, a (meth)acrylic acid ester compound, a (meth)acrylamide compound, or a (meth)acrylonitrile compound. Further, a (meth)acrylic polymer consisting of a copolymer of the (meth)acrylic compound (M1) and another polymerizable compound (M2) is also preferable. The other polymerizable compound (M2) is not particularly limited, and examples thereof include vinyl compounds such as a styrene compound, a vinyl naphthalene compound, a vinyl carbazole compound, an allyl compound, a vinyl ether compound, a vinyl ester compound, a dialkyl itaconate compound, and an unsaturated carboxylic acid anhydride, and fluorinated compounds thereof. Examples of the vinyl compound include the "vinyl monomer" disclosed in JP2015-88486A.

The (meth)acrylic compound (M1) and another polymerizable compound (M2) may have a substituent. The substituent is not particularly limited as long as it is a group other than the functional group included in the above-described Group (a) of functional groups, and preferred examples thereof include a group selected from the substituent Z described above.

The content of the other polymerizable compound (M2) in the (meth)acrylic polymer is not particularly limited; however, it can be, for example, less than 50% by mole.

The (meth)acrylic compound (M1) and the vinyl compound (M2), from which the constitutional component of the (meth)acrylic polymer is derived, are preferably a compound represented by Formula (b-1). This compound is different from the constitutional component having a functional group included in the above-described Group (a) of functional groups and the compound from which the constitutional component represented by Formula (1-1).

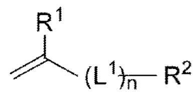

(b−1)

In the formula, $R^1$ represents a hydrogen atom, a hydroxy group, a cyano group, a halogen atom, an alkyl group (preferably having 1 to 24 carbon atoms, more preferably 1 to 12 carbon atoms, and particularly preferably 1 to 6 carbon atoms), an alkenyl group (preferably having 2 to 24 carbon atoms, more preferably 2 to 12 carbon atoms, and particularly preferably 2 to 6 carbon atoms), an alkynyl group (preferably having 2 to 24 carbon atoms, more preferably 2 to 12 carbon atoms, and particularly preferably 2 to 6 carbon atoms), or an aryl group (preferably having 6 to 22 carbon atoms and more preferably 6 to 14 carbon atoms). Among the above, a hydrogen atom or an alkyl group is preferable, and a hydrogen atom or a methyl group is more preferable.

$R^2$ represents a hydrogen atom or a substituent. The substituent that can be adopted as $R^2$ is not particularly limited. However, examples thereof include an alkyl group (preferably a linear chain although it may be a branched chain), an alkenyl group (preferably having 2 to 12 carbon atoms, more preferably 2 to 6 carbon atoms, and particularly preferably 2 or 3 carbon atoms), an aryl group (preferably having 6 to 22 carbon atoms and more preferably 6 to 14 carbon atoms), an aralkyl group (preferably having 7 to 23 carbon atoms and more preferably 7 to 15 carbon atoms), and a cyano group.

The alkyl group preferably has 1 to 3 carbon atoms. The alkyl group may have, for example, a group other than the functional group included in the Group (a) of functional groups, among the above-described substituent Z.

$L^1$ is a linking group and is not particularly limited. However, examples thereof include an alkylene group having 1 to 6 carbon atoms (preferably 1 to 3 carbon atoms), an alkenylene group having 2 to 6 carbon atoms (preferably 2 or 3 carbon atoms), an arylene group having 6 to 24 carbon atoms (preferably 6 to 10 carbon atoms), an oxygen atom, a sulfur atom, an imino group ($-NR^N-$: here, $R^N$ is as described above), a carbonyl group, and a phosphate linking group (-O-P(OH)(O)-O-), a phosphonate linking group (-P(OH)(O)-O-), and a group involved in the combination thereof, and

a -CO-O- group or a -CO-N($R^N$)- group ($R^N$ is as described above) is preferable. The above linking group may have any substituent. The number of atoms that constitute the linking group and the number of linking atoms are as described later. Examples of any substituent include a substituent Z described above, and examples thereof include an alkyl group and a halogen atom.

n is 0 or 1 and preferably 1. However, in a case where $-(L^1)_n-R^2$ represents one kind of substituent (for example, an alkyl group), n is set to 0, and $R^2$ is set to a substituent (an alkyl group).

The (meth)acrylic compound (M1) is preferably a compound represented by Formula (b-2) or (b-3). This compound is different from the constitutional component having a functional group included in the above-described Group (a) of functional groups and the compound from which the constitutional component represented by Formula (1-1).

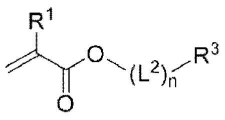
(b-2)

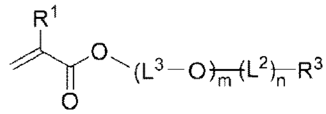
(b-3)

$R^1$ and n are synonymous with Formula (b-1).
$R^3$ is synonymous with $R^2$.
$L^2$ is a linking group and is synonymous with the above $L^1$.
$L^3$ is a linking group and is synonymous with the above $L^1$; however, it is preferably an alkylene group having 1 to 6 carbon atoms (preferably 1 to 3).
m is an integer of 1 to 200, and it is preferably an integer of 1 to 100 and more preferably an integer of 1 to 50.

In Formulae (b-1) to (b-3), the carbon atom which forms a polymerizable group and to which $R^1$ is not bonded is represented as an unsubstituted carbon atom ($H_2C=$); however, it may have a substituent. The substituent is not particularly limited; however, examples thereof include the above group that can be adopted as $R^1$.

Further, in Formulae (b-1) to (b-3), the group which may adopt a substituent such as an alkyl group, an aryl group, an alkylene group, or an arylene group may have a substituent within a range in which the effects of the present invention are not impaired. It suffices that the substituent is a substituent other than the functional group selected from the Group (a) of functional groups. Examples thereof include a group selected from the substituent Z described later, and specific examples thereof include a halogen atom.

The (meth)acrylic polymer preferably has the above-described constitutional component having a functional group selected from the Group (a) of functional groups or the above-described constitutional component represented by Formula (1-1) and it can have a constitutional component derived from the (meth)acrylic compound (M1), a constitutional component derived from the vinyl compound (M2), and another constitutional component that is copolymerizable with a compound from which these constitutional components are derived. A case where the constitutional component represented by Formula (1-1) and a constitutional component having a functional group selected from the Group (a) of functional groups among the (meth)acrylic compounds (M1) is contained is preferable in terms of dispersion stability, handleability, and binding property.

The content of the constitutional component in the (meth)acrylic polymer is not particularly limited, and it is appropriately selected in consideration of the SP value and the like of the constitutional unit or polymer. For example, it can be set in the following range. The contents of the constitutional component represented by Formula (1-1) and the constitutional component having a functional group selected from the Group (a) of functional groups are as described above.

The content of the constitutional component derived from the (meth)acrylic compound (M1) in the (meth)acrylic polymer is not particularly limited and may be set to 100% by mole; however, it is preferably 1% to 90% by mole, preferably 10% to 80% by mole, and particularly preferably 20% to 70% by mole.

The content of the constitutional component derived from the vinyl compound (M2) in the (meth)acrylic polymer is not particularly limited; however, it is preferably 1% by mole or more and less than 50% by mole, more preferably 10% by mole or more and less than 50% by mole, and particularly preferably 20% by more or more and less than 50% by mole.

The chain polymerization polymer (each constitutional component and raw material compound) may have a substituent. The substituent is not particularly limited as long as it is a group other than the functional group included in the above-described Group (a) of functional groups, and preferred examples thereof include a group selected from the substituent Z described above.

The chain polymerization polymer can be synthesized by selecting a raw material compound and polymerizing the raw material compound by a known method.

The method of incorporating a functional group is not particularly limited, and examples thereof include a method

of copolymerizing a compound having a functional group selected from the Group (a) of functional groups, a method of using a polymerization initiator having (generating) the above functional group or a chain transfer agent, a method of using a polymeric reaction, an ene reaction or ene-thiol reaction with a double bond (which is formed by a dehydrofluorination reaction of a VDF constitutional component, for example, in a case of a fluorine polymer), and an atom transfer radical polymerization (ATRP) method using a copper catalyst.

(Physical properties, characteristics, or the like of low adsorption binder or polymer that forms low adsorption binder)

It is preferable that at least one of the low adsorption binder or the polymer that forms the low adsorption binder has the following physical properties or properties. An aspect in which all of the two or more kinds of low adsorption binders have the following physical properties or properties is also one of the preferred aspects.
The water concentration of the low adsorption binder (the polymer) is preferably 100 ppm (mass basis) or less. Further, as this low adsorption binder, a polymer may be crystallized and dried, or a low adsorption binder dispersion liquid may be used as it is.
The polymer that forms the low adsorption binder is preferably noncrystalline. In the present invention, the description that a polymer is "noncrystalline" typically refers to that no endothermic peak due to crystal melting is observed when the measurement is carried out at the glass transition temperature.
In a case where the low adsorption binder is particulate, the shape thereof is not particularly limited and may be a flat shape, an amorphous shape, or the like; however, a spherical shape or a granular shape is preferable. The average primary particle diameter of the particulate low adsorption binder is not particularly limited; however, it is preferably 0.1 nm or more, more preferably 1 nm or more, still more preferably 5 nm or more, particularly preferably 10 nm or more, and most preferably 50 nm or more. The upper limit thereof is preferably 5.0 μm or less, more preferably 1 μm or less, still more preferably 700 nm or less, and particularly preferably 500 nm or less.
The average particle diameter of the low adsorption binder can be measured using the same method as that of the average particle diameter of the inorganic solid electrolyte.
The average particle diameter of the low adsorption binder in the constitutional layer of the all-solid state secondary battery is measured, for example, by disassembling the battery to peel off the constitutional layer containing the low adsorption binder, subsequently subjecting the constitutional layer to measurement, and excluding the measured value of the particle diameter of particles other than the low adsorption binder, which has been measured in advance.
The average particle diameter of the low adsorption binder can be adjusted, for example, with the kind of the organic dispersion medium and the content of the constitutional component in the polymer.
The polymer that forms the low adsorption binder preferably has, for example, an SP value of 10 to 24, more preferably an SP value of 14 to 22, and still more preferably an SP value of 16 to 20, in terms of the dispersion stability of the solid particles. The difference (in terms of absolute value) in SP value between the polymer that forms the low adsorption binder and the dispersion medium will be described later.
The method of calculating the SP value will be described.

(1) The SP value of the constitutional unit is calculated.

First, in the polymer, a constitutional unit of which the SP value is specified is determined.
That is, in the present invention, in a case where the SP value of the polymer is calculated, a constitutional unit that is the same as that of the constitutional component derived from the raw material compound is adopted in a case where the polymer (the segment) is a chain polymerization type polymer. However, a unit that is different from that of the constitutional component derived from the raw material compound is adopted in a case where the polymer is a sequential polymerization polymer.
For example, in a case where polyurethane is exemplified as a sequential polymerization polymer, a constitutional unit of which the SP value is defined as follows. As a constitutional unit derived from a polyisocyanate compound, a unit (a unit having one urethane bond) obtained by bonding an -O- group in the constitutional component represented by Formula (I-1) derived from the polyisocyanate compound, to one -NH-CO- group and removing therefrom the remaining -NH-CO- group is adopted. On the other hand, as a constitutional unit derived from a polyol compound, a unit (a unit having one urethane bond) obtained by bonding an -CO-NH- group in the constitutional component represented by Formula (1-3) derived from the polyol compound, to one -O- group and removing therefrom the remaining -O- group is adopted.
Also in the case of other sequential polymerization type polymers as the polymer having the bond (I), a constitutional unit is determined in the same manner as in the case of the polyurethane.
Specific examples of the constitutional unit (the constitutional unit enclosed in square brackets in each specific example in a case where parentheses or square brackets are included) in the polyurethane are shown below together with SP values thereof.

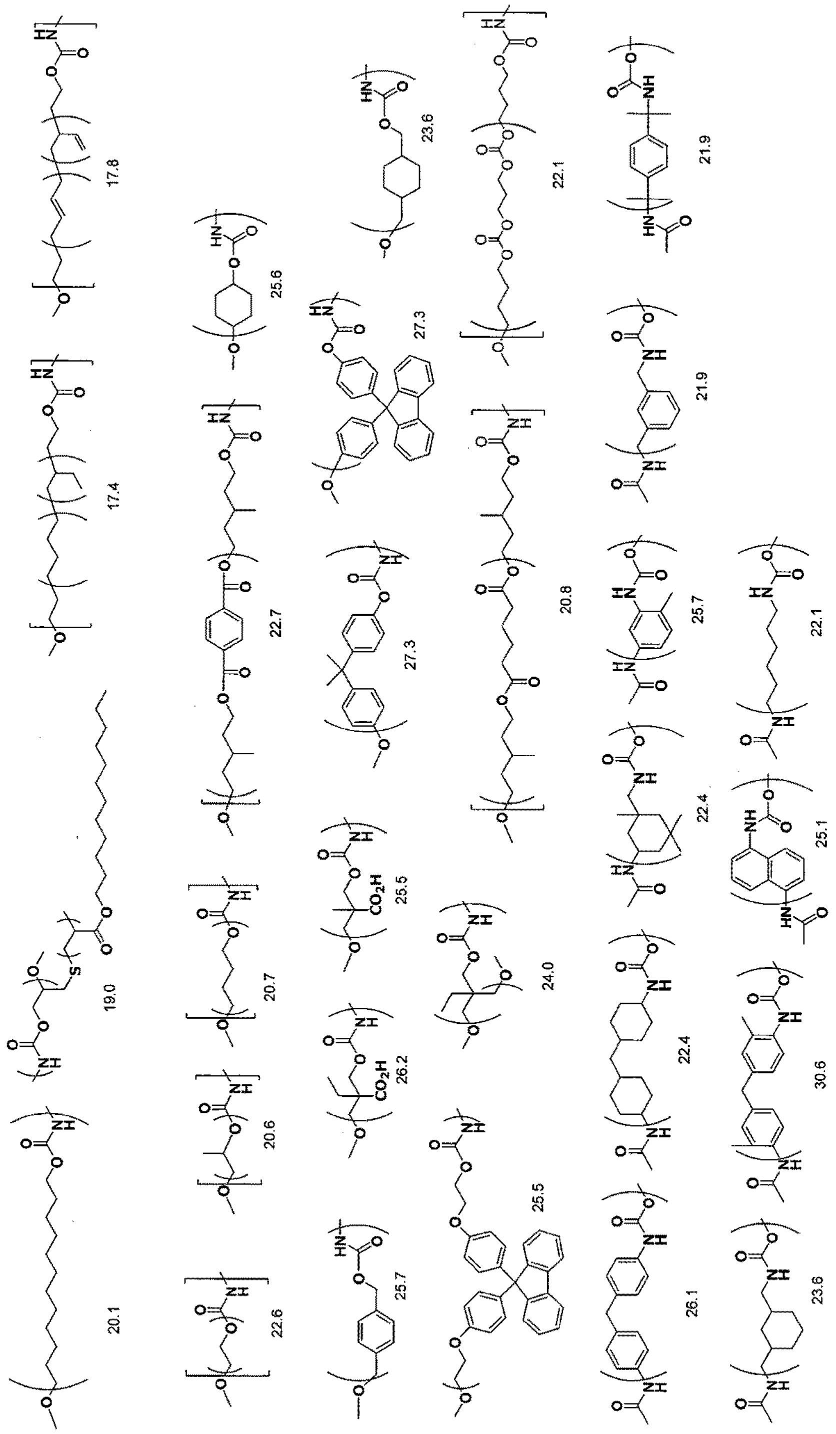

17.8 17.4 19.0 20.1 25.6 22.7 20.7 20.6 22.6 23.6 27.3 27.3 25.5 26.2 25.7 22.1 20.8 24.0 25.5 21.9 21.9 25.7 22.4 22.4 26.1 22.1 25.1 30.6 23.6

Next, the SP value for each constitutional unit is determined according to the Hoy method unless otherwise specified (refer to H. L. Hoy JOURNAL OF PAINT TECHNOLOGY, Vol. 42, No. 541, 1970, 76-118, and POLYMER HANDBOOK 4th, Chapter 59, VII, page 686, Table 5, Table 6, and the following formula in Table 6).

$$\delta_t = \frac{F_t + \frac{B}{\bar{n}}}{V} : B = 277$$

In the expression, $\delta_t$ indicates an SP value. Ft is a molar attraction function $(J \times cm^3)^{1/2}$/mol and represented by the following expression. V is a molar volume ($cm^3$/mol) and represented by the following expression, $\bar{n}$ is represented by the following expression.

$$F_t = \sum n_i F_{t,i} \qquad V = \sum n_i V_i$$

$$\bar{n} = \frac{0.5}{\Delta_T^{(P)}} \qquad \Delta_T^{(P)} = \Sigma n_i \Delta_{T,i}^{(P)}$$

In the above formula, $F_{t,i}$ indicates a molar attraction function of each constitutional unit, $V_i$ indicates a molar volume of each constitutional unit, $\Delta^{(P)}{}_{T,i}$ indicates a correction value of each constitutional unit, and $n_i$ indicates the number of each constitutional unit.

(2) SP value of polymer

It is calculated from the following expression using the constitutional unit determined as described above and the determined SP value. It is noted that the SP value of the constitutional component obtained according to the above document is converted into an SP value ($MPa^{1/2}$) (for example, $1cal^{1/2}cm^{-3/2} \approx 2.05\ J^{1/2}cm^{-3/2} \approx 2.05\ MPa^{1/2}$) and used.

$$SP_p^2 = (SP_1^2 \times W_1) + (SP_2^2 \times W_2) + \cdots$$

In the expression, $SP_1$, $SP_2$ ··· indicates the SP values of the constitutional units, and $W_1$, $W_2$ ··· indicates the mass fractions of the constitutional units.

In the present invention, the mass fraction of a constitutional unit shall be a mass fraction of a constitutional component (a raw material compound from which this constitutional unit is derived) in the polymer, corresponding to the constitutional unit.

The SP value of the polymer can be adjusted depending on the kind or the composition (the kind and the content of the constitutional component) of the polymer.

The contact angle $\theta$ of the polymer that forms the low adsorption binder is preferably small in terms of dispersion stability of solid particles, where the contact angle $\theta$ is an angle between a polymer film prepared from the polymer and a dispersion medium (also referred to as a contact angle $\theta$ of a dispersion medium with respect to a polymer film). The polymer film in the present specification refers to a thin film of a polymer prepared on a silicon wafer by a preparation method described later using a polymer that forms a low adsorption binder contained in an inorganic solid electrolyte-containing composition. The production method for a polymer film and the measuring method for a contact angle will be described later.

The details of the reason why the dispersion stability of the solid particles is improved by the small contact angle $\theta$ of the dispersion medium with respect to the polymer film are not yet clear; however, it is conceived as follows. The small contact angle of the dispersion medium with respect to the polymer film of the low adsorption binder means that the compatibility between the low adsorption binder and the dispersion medium is high. In a case where this compatibility increases, the osmotic pressure effect of the low adsorption binder in the inorganic solid electrolyte-containing composition (particularly the slurry) is improved, and thus the repulsive force acting between the low adsorption binder increases. As a result, it is conceived that the dispersibility of the solid particles is improved.

There is no particular upper limit on the contact angle of the dispersion medium; however, it is preferably as small as possible, for example, 40° or less. The dispersion medium that is used for measuring the contact angle is not particularly limited as long as it is a dispersion medium that is used for the preparation of an inorganic solid electrolyte composition described later; however, it is preferably a dispersion medium the kind of which is the same as the dispersion medium contained together with the low adsorption binder in the inorganic solid electrolyte-containing composition, and examples thereof include butyl butyrate. In a case where the inorganic solid electrolyte-containing composition contains a plurality of kinds of dispersion media, the contact angle $\theta$ is measured using a dispersion medium mixture having the

same composition as the dispersion medium composition in this composition.

In a case where butyl butyrate is used as the dispersion medium, the contact angle θ is not particularly limited, and it is, for example, preferably 0° to 60° and more preferably 0° to 40°.

In the present invention, in a case where the inorganic solid electrolyte-containing composition contains a plurality of kinds of low adsorption binders, it is preferable that the polymer that forms each of the low adsorption binders satisfies the above contact angle θ.

- Preparation of polymer film -

100 μL of a solution or dispersion liquid (for the solvent or dispersion medium, the same one as the dispersion medium used for the preparation of the inorganic solid electrolyte-containing composition is used) of a polymer that forms the low adsorption binder is applied onto a silicon wafer (3 × N type, manufactured by AS ONE Corporation) with a spin coater under the following conditions, and then vacuum drying is carried out at 100°C for 2 hours to prepare a polymer film of the low adsorption binder.

Concentration of binder solution: 10% by mass
Rotation speed of spin coater: 2,000 rpm
Rotation time of spin coater: 5 seconds

- Measurement of contact angle θ -

The contact angle θ of the dispersion medium with respect to the polymer film prepared on the silicon wafer as described above is measured according to the θ/2 method in the liquid droplet method. Here, an angle (an angle inside the liquid droplet), which is formed by the sample surface (the surface of a polymer film) and a liquid droplet after 200 milliseconds after the liquid droplet has been brought into contact with the surface of the polymer film and attached thereto, is defined as the contact angle θ.

The polymer that forms the low adsorption binder may be a non-crosslinked polymer or a crosslinked polymer. Further, in a case where the crosslinking of the polymer proceeds by heating or application of a voltage, the molecular weight may be larger than the above molecular weight. Preferably, the polymer has a mass average molecular weight in the range described below at the start of use of the all-solid state secondary battery.

The mass average molecular weight of the polymer that forms the low adsorption binder is not particularly limited. It is, for example, 15,000 or more, and it is more preferably 30,000 or more and still more preferably 50,000 or more. The upper limit thereof is practically 5,000,000 or less, and it is preferably 4,000,000 or less and more preferably 3,000,000 or less.

- Measurement of molecular weight -

In the present invention, unless specified otherwise, molecular weights of a polymer, a polymer chain (a polyether structure), and a macromonomer refer to a mass average molecular weight or a number average molecular weight in terms of standard polystyrene equivalent, determined by gel permeation chromatography (GPC). Regarding the measurement method thereof, basically, a value measured using a method under Conditions 1 or Conditions 2 (priority) described below is employed. However, depending on the kind of polymer or macromonomer, an appropriate eluent may be appropriately selected and used.

(Conditions 1)

Column: Connect two TOSOH TSKgel Super AWM-H (product name, manufactured by Tosoh Co., Ltd.)
Carrier: 10 mM LiBr/N-methylpyrrolidone
Measurement temperature: 40°C
Carrier flow rate: 1.0 ml/min
Sample concentration: 0.1% by mass
Detector: Refractive indicator (RI) detector

(Conditions 2)

Column: A column obtained by connecting TOSOH TSKgel Super HZM-H, TOSOH TSKgel Super HZ4000, and TOSOH TSKgel Super HZ2000 (all of which are product names, manufactured by Tosoh Corporation)
Carrier: tetrahydrofuran
Measurement temperature: 40°C
Carrier flow rate: 1.0 ml/min
Sample concentration: 0.1% by mass
Detector: Refractive indicator (RI) detector

Specific examples of the polymer contained in the low adsorption binder include those shown below in addition to those synthesized in Examples; however, the present invention is not limited thereto. In each specific example, the number attached at the bottom right of the constitutional component indicates the content in the polymer, where the unit thereof is % by mole.

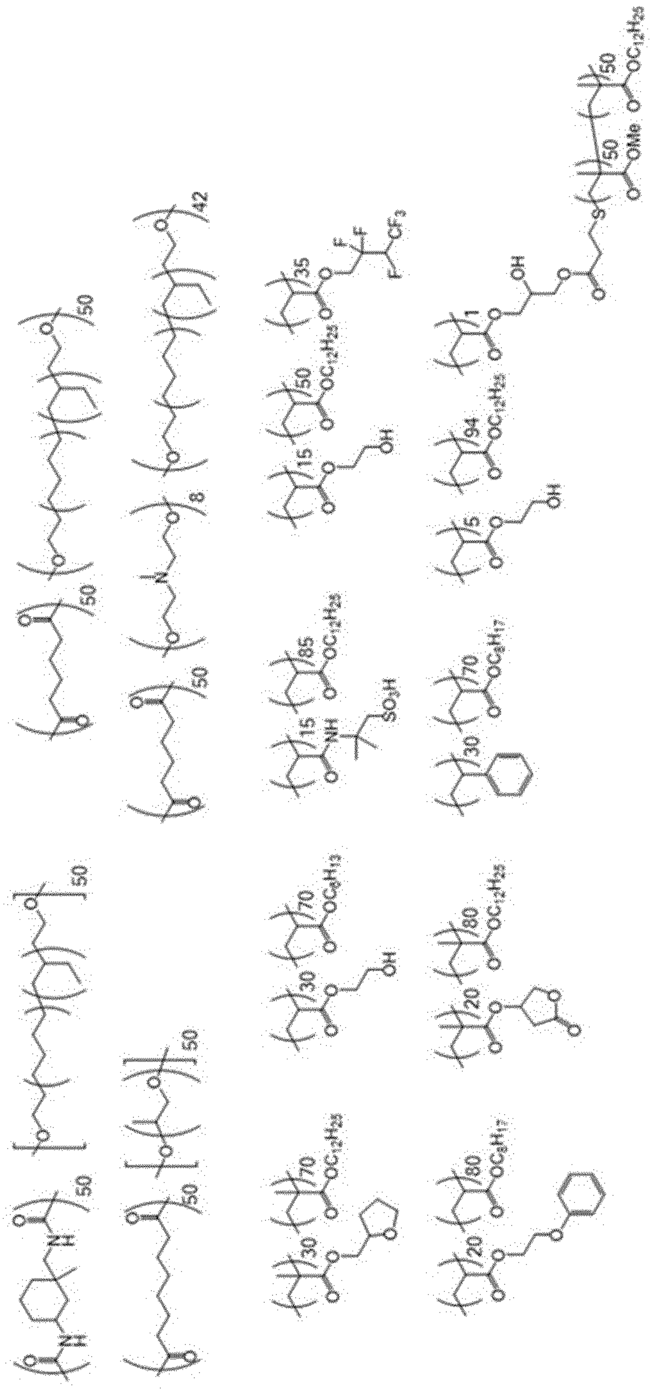

The inorganic solid electrolyte-containing composition according to the embodiment of the present invention may contain one kind of low adsorption binder or a plurality kinds thereof. In a case where a plurality of kinds thereof are contained, the number of kinds is not particularly limited; however, it is preferably 2 to 4 kinds, and it may be 2 to 6 kinds. A preferred combination of two or more kinds of low adsorption binders will be described later.

The (total) content of the low adsorption binder in the inorganic solid electrolyte-containing composition is not particularly limited. However, it is preferably 0.1% to 10.0% by mass, more preferably 0.2% to 5.0% by mass, and still more preferably 0.3% to 4.0% by mass, in that the dispersion stability and the handleability are improved and furthermore, a strong binding property is exhibited. For the same reason, the (total) content of the low adsorption binder in the inorganic solid electrolyte-containing composition is preferably 0.1% to 10.0% by mass, more preferably 0.3% to 8% by mass, and still more preferably 0.5% to 7% by mass, in the solid content of 100% by mass.

In a case where two or more kinds of low adsorption binders are contained, the content of each low adsorption binder is appropriately set within a range that satisfies the above (total) content. For example, the content of one kind of low adsorption binder (for example, a low adsorption binder consisting of a sequential polymerization polymer or a (meth)acrylic polymer in the more preferred combination described later) is preferably 0.01% to 5% by mass, more preferably 0.05% to 4% by mass, and still more preferably 0.1% to 3% by mass, in the solid content of 100% by mass. The content of the remaining low adsorption binder (for example, a low adsorption binder consisting of a fluorine-containing polymer or a hydrocarbon-based polymer in the more preferred combination described later) is preferably 0.01% to 5% by mass, more preferably 0.05% to 4% by mass, and still more preferably 0.1% to 3% by mass, in the solid content of 100% by mass. In addition, the difference (in terms of absolute value) between the content of the above-described one kind of low adsorption binder and the content of the remaining low adsorption binder in the solid content of 100% by mass is not particularly limited, and it can be set to, for example, 0% to 5% by mass, more preferably 0% to 3% by mass, and still more preferably 0% to 2% by mass. Further, the ratio of the content of the above-described one kind of low adsorption binder to the content of the remaining low adsorption binder in the solid content of 100% by mass (the content of one kind of low adsorption binder/the content of the remaining low adsorption binder) is not particularly limited, and it is, for example, preferably 0.1 to 10 and more preferably 0.4 to 5.

In a case where the inorganic solid electrolyte-containing composition contains a particulate binder described later, the (total) content of the low adsorption binder may be lower than the content of the particulate binder; however, it is preferable to be equal to or higher than the content of the particulate binder. This makes it possible to further enhance the binding property without impairing the excellent dispersion stability and handleability. The difference (in terms of absolute value) between the (total) content of the low adsorption binder and the content of the particulate binder in the solid content of 100% by mass is not particularly limited, and it can be set to, for example, 0% to 6% by mass, more preferably 0% to 4% by mass, and still more preferably 0% to 2% by mass. In addition, the ratio of the content of the (total) content of the low adsorption binder to the content of the particulate binder (the (total) content of the low adsorption binder/the content of the particulate binder) in the solid content of 100% by mass is not particularly limited; however, it is, for example, preferably 1 to 4 and more preferably 1 to 2.

In the present invention, the mass ratio [(the mass of the inorganic solid electrolyte + the mass of the active material)/(the total mass of the polymer binder)] of the total mass (the total amount) of the inorganic solid electrolyte and the active material to the total mass of the polymer binder in the solid content of 100% by mass is preferably in a range of 1,000 to 1, more preferably 500 to 2 and still more preferably 100 to 10.

(Particulate binder)

In addition to the above-described low-polarity binder, the inorganic solid electrolyte-containing composition according to the embodiment of the present invention preferably contains, as the polymer binder, one or more kinds of particulate polymer binders (particulate binders) that are insoluble in the dispersion medium in the composition. The shape of this particulate binder is not particularly limited and may be a flat shape, an amorphous shape, or the like; however, a spherical shape or a granular shape is preferable. The average particle diameter of the particulate binder is preferably 1 to 1,000 nm, more preferably 5 to 800 nm, still more preferably 10 to 600 nm, and particularly preferably 50 to 500 nm. The average particle diameter can be measured using the same method as that of the average particle diameter of the inorganic solid electrolyte.

The particulate binder is preferably a particulate binder of which the adsorption rate is 60% or more with respect to the inorganic solid electrolyte. The adsorption rate with respect to the active material is appropriately determined. The adsorption rate can be measured in the same manner as that of the low adsorption binder.

In a case where the inorganic solid electrolyte-containing composition contains a particulate binder, the effect of improving the dispersion stability and the handleability due to the low-polarity binder is not impaired, and the binding property of the solid particles can be enhanced while an increase in interfacial resistance is suppressed. This makes it possible to further increase the cycle characteristics of the all-solid state secondary battery, and preferably it is possible to achieve further reduction of resistance.

As the particulate binder, various particulate binders that are used in the manufacturing of an all-solid state secondary battery can be used without particular limitation. Examples thereof include a particulate binder consisting of the sequential polymerization polymer or the chain polymerization polymer, which are described above, and specific examples thereof include polymers T-2, T-3, and D-1, which are synthesized in Examples. In addition, other examples thereof include the binders disclosed in JP2015-088486A and WO2018/020827A.
The content of the particulate binder in the inorganic solid electrolyte-containing composition is not particularly limited. However, it is preferably 0.01% to 4% by mass, more preferably 0.05% to 2% by mass, and still more preferably 0.1% to 1% by mass, in the solid content of 100% by mass, in that dispersion stability and handleability are improved and furthermore, the strong binding property is exhibited. It is noted that the content of the particulate binder can be appropriately set within the above range; however, it is preferably a content at which the particulate binder is not dissolved in the inorganic solid electrolyte-containing composition in consideration of the solubility of the particulate binder.

(High adsorption binder)

The inorganic solid electrolyte-containing composition according to the embodiment of the present invention may contain a high adsorption binder of which the adsorption rate is 60% or more with respect to the inorganic solid electrolyte. The high adsorption binder is not particularly limited as long as the adsorption rate thereof is 60% or more, and examples thereof include those that are generally used as a binder for a secondary battery.

(Combination of polymer binder)

As described above, it suffices that the polymer binder contained in the inorganic solid electrolyte-containing composition according to the embodiment of the present invention contains at least one kind of low adsorption binder, and the polymer binder may contain two or more kinds thereof. In a case where two or more kinds thereof are contained, the number thereof is not particularly limited; however, it is preferably 2 to 5 kinds, and it can be, for example, 2 to 7 kinds.
Examples of the aspect in which the polymer binder include the low adsorption binder include an aspect in which the low adsorption binder is contained alone, an aspect in which two or more kinds of low adsorption binders are contained, an aspect in which one or more kinds of low adsorption binders and a particulate binder are contained, and furthermore, an aspect in which a high adsorption binder is further contained in each of the aspects.
In a case where two or more kinds of low adsorption binders are contained, the effects of dispersion stability, handleability, and the adhesiveness to the collector foil can be obtained at a higher level. In the aspect in which two or more kinds of low adsorption binder are contained (including the aspect in which a particulate binder is contained), the low adsorption binder that is used in combination is not particularly limited, and it is appropriately set depending on the adsorption rate, the polymer that forms the low adsorption binder, the kind and the content of the functional group, and the like. For example, in a case of focusing on the polymer that forms the low adsorption binder, the preferred combination is a combination of two or more polymers selected from polymers having, in the main chain, at least one bond selected from a urethane bond, a urea bond, an amide bond, an imide bond, and an ester bond, or a polymeric chain of carbon-carbon double bond, the more preferred combination is a combination of a sequential polymerization polymer or (meth)acrylic polymer (a low adsorption binder consisting of a sequential polymerization polymer or (meth)acrylic polymer) and a fluorine-based polymer or hydrocarbon-based polymer (a low adsorption binder consisting of a fluorine-based polymer or hydrocarbon-based polymer). The fluorine-containing polymer and the hydrocarbon-based polymer, which are used in combination, may have or may not have the constitutional component represented by any one of Formulae (1-1) to (1-5).
In a case where the inorganic solid electrolyte-containing composition according to the embodiment of the present invention contains a low adsorption binder and another polymer binder as the polymer binder, the total content of the polymer binders in the inorganic solid electrolyte-containing composition is not particularly limited. However, it is preferably 0.01% to 10.0% by mass, more preferably 0.05% to 8% by mass, and still more preferably 0.1% to 6% by mass, with respect to the solid content of 100% by mass, in terms of dispersion stability and handleability, as well as the enhancement of the binding property of solid particles.

<Dispersion medium>

The inorganic solid electrolyte-containing composition according to the embodiment of the present invention preferably contains a dispersion medium for dispersing each of the above components.
It suffices that the dispersion medium is an organic compound that is in a liquid state in the use environment, examples thereof include various organic solvents, and specific examples thereof include an alcohol compound, an ether compound, an amide compound, an amine compound, a ketone compound, an aromatic compound, an aliphatic compound, a nitrile compound, and an ester compound.

The dispersion medium may be a non-polar dispersion medium (a hydrophobic dispersion medium) or a polar dispersion medium (a hydrophilic dispersion medium); however, a non-polar dispersion medium is preferable from the viewpoint that excellent dispersibility can be exhibited. The non-polar dispersion medium generally refers to a dispersion medium having a property of a low affinity to water; however, in the present invention, examples thereof include an ester compound, a ketone compound, an ether compound, an aromatic compound, and an aliphatic compound.

Examples of the alcohol compound include methyl alcohol, ethyl alcohol, 1-propyl alcohol, 2-propyl alcohol, 2-butanol, ethylene glycol, propylene glycol, glycerin, 1,6-hexanediol, cyclohexanediol, sorbitol, xylitol, 2-methyl-2,4-pentanediol, 1,3-butanediol, and 1,4-butanediol.

Examples of the ether compound include an alkylene glycol (diethylene glycol, triethylene glycol, polyethylene glycol, dipropylene glycol, or the like), an alkylene glycol monoalkyl ether (ethylene glycol monomethyl ether, ethylene glycol monobutyl ether, propylene glycol monomethyl ether, diethylene glycol monomethyl ether, dipropylene glycol monomethyl ether, tripropylene glycol monomethyl ether, diethylene glycol monobutyl ether, or the like), alkylene glycol dialkyl ether (ethylene glycol dimethyl ether or the like), a dialkyl ether (dimethyl ether, diethyl ether, diisopropyl ether, dibutyl ether, or the like), and a cyclic ether (tetrahydrofuran, dioxane (including 1,2-, 1,3- or 1,4-isomer), or the like).

Examples of the amide compound include N,N-dimethylformamide, N-methyl-2-pyrrolidone, 2-pyrrolidinone, 1,3-dimethyl-2-imidazolidinone, ε-caprolactam, formamide, N-methylformamide, acetamide, N-methylacetamide, N,N-dimethylacetamide, N-methylpropanamide, and hexamethylphosphoric amide.

Examples of the amine compound include triethylamine, diisopropylethylamine, and tributylamine.

Examples of the ketone compound include acetone, methyl ethyl ketone, methyl isobutyl ketone (MIBK), cyclopentanone, cyclohexanone, cycloheptanone, dipropyl ketone, dibutyl ketone, diisopropyl ketone, diisobutyl ketone (DIBK), isobutyl propyl ketone, sec-butyl propyl ketone, pentyl propyl ketone, and butyl propyl ketone.

Examples of the aromatic compound include benzene, toluene, and xylene.

Examples of the aliphatic compound include hexane, heptane, octane, decane, cyclohexane, methylcyclohexane, ethylcyclohexane, cyclooctane, decalin, paraffin, gasoline, naphtha, kerosene, and light oil.

Examples of the nitrile compound include acetonitrile, propionitrile, and isobutyronitrile.

Examples of the ester compound include ethyl acetate, butyl acetate, propyl acetate, propyl butyrate, isopropyl butyrate, butyl butyrate, isobutyl butyrate, butyl pentanoate, ethyl isobutyrate, propyl isobutyrate, isopropyl isobutyrate, isobutyl isobutyrate, propyl pivalate, isopropyl pivalate, butyl pivalate, and isobutyl pivalate.

In the present invention, among them, an ether compound, a ketone compound, an aromatic compound, an aliphatic compound, or an ester compound is preferable, and an ester compound, a ketone compound, or an ether compound is more preferable.

The number of carbon atoms of the compound that constitutes the dispersion medium is not particularly limited, and it is preferably 2 to 30, more preferably 4 to 20, still more preferably 6 to 15, and particularly preferably 7 to 12.

The dispersion medium preferably has, for example, an SP value (unit: $MPa^{1/2}$) of 14 to 24, more preferably an SP value of 15 to 22, and still more preferably an SP value of 16 to 20, in terms of the dispersion stability of the solid particles. The difference (in terms of absolute value) in SP value between the dispersion medium and the polymer that forms the low adsorption binder is not particularly limited; however, it is preferably 3 or less, more preferably 0 to 2, and still more preferably 0 to 1, in that the molecular chain of the polymer that forms the low adsorption binder is extended in the dispersion medium to improve the dispersibility thereof, whereby the dispersion stability of the solid particles can be further improved. Regarding the above difference (in terms of absolute value) in SP value, in a case where the inorganic solid electrolyte-containing composition according to the embodiment of the present invention contains two or more kinds of low adsorption binders, at least one kind of low adsorption binder preferably satisfies the above difference (in terms of absolute value) in SP value, and an aspect in which all the low adsorption binders satisfy the above difference in SP value (in terms of absolute value) is also one of the preferred aspects.

The SP value of the dispersion medium is defined as a value obtained by converting the SP value calculated according to the Hoy method described above into the unit of $MPa^{1/2}$. In a case where the inorganic solid electrolyte-containing composition contains two or more kinds of dispersion media, the SP value of the dispersion medium means the SP value of the entire dispersion media, and it is the sum of the products of the SP values and the mass fractions of the respective dispersion media. Specifically, the calculation is carried out in the same manner as the above-described method of calculating the SP value of the polymer, except that the SP value of each of the dispersion media is used instead of the SP value of the constitutional component.

The SP values (unit is omitted) of the dispersion media are shown below.

MIBK (18.4), diisopropyl ether (16.8), dibutyl ether (17.9), diisopropyl ketone (17.9), DIBK (17.9), butyl butyrate (18.6), butyl acetate (18.9), toluene (18.5), ethylcyclohexane (17.1), cyclooctane (18.8), isobutyl ethyl ether (15.3), N-methylpyrrolidone (NMP, SP value: 25.4)

The dispersion medium preferably has a small contact angle θ with respect to the polymer film, and it is more preferably one that satisfies the above-described range.

The dispersion medium preferably has a boiling point of 50°C or higher, and more preferably 70°C or higher

at normal pressure (1 atm). The upper limit thereof is preferably 250°C or lower and more preferably 220°C or lower.

It suffices that the inorganic solid electrolyte-containing composition according to the embodiment of the present invention contains at least one kind of dispersion medium, and it may contain two or more kinds thereof.

In the present invention, the content of the dispersion medium in the inorganic solid electrolyte-containing composition is not particularly limited and can be appropriately set. For example, in the inorganic solid electrolyte-containing composition, it is preferably 20% to 80% by mass, more preferably 30% to 70% by mass, and particularly preferably 40% to 60% by mass.

<active material>

The inorganic solid electrolyte-containing composition according to the embodiment of the present invention can also contain an active material capable of intercalating and deintercalating an ion of a metal belonging to Group 1 or Group 2 of the periodic table. Examples of such active materials include a positive electrode active material and a negative electrode active material, which will be described later.

In the present invention, the inorganic solid electrolyte-containing composition containing an active material (a positive electrode active material or a negative electrode active material) may be referred to as a composition for an electrode (a composition for a positive electrode or a composition for a negative electrode).

(Positive electrode active material)

The positive electrode active material is preferably a positive electrode active material capable of reversibly intercalating and deintercalating lithium ions. The above-described material is not particularly limited as long as the material has the above-described characteristics and may be a transition metal oxide or an element, which is capable of being complexed with Li, such as sulfur or the like by disassembling the battery.

Among the above, as the positive electrode active material, transition metal oxides are preferably used, and transition metal oxides having a transition metal element $M^a$ (one or more elements selected from Co, Ni, Fe, Mn, Cu, and V) are more preferable. In addition, an element $M^b$ (an element of Group 1 (Ia) of the metal periodic table other than lithium, an element of Group 2 (IIa), or an element such as Al, Ga, In, Ge, Sn, Pb, Sb, Bi, Si, P, or B) may be mixed into this transition metal oxide. The amount of the element mixed is preferably 0% to 30% by mole of the amount (100% by mole) of the transition metal element $M^a$. It is more preferable that the transition metal oxide is synthesized by mixing the above components such that a molar ratio Li/$M^a$ is 0.3 to 2.2.

Specific examples of the transition metal oxides include transition metal oxides having a layered rock salt type structure (MA), transition metal oxides having a spinel-type structure (MB), lithium-containing transition metal phosphoric acid compounds (MC), lithium-containing transition metal halogenated phosphoric acid compounds (MD), and lithium-containing transition metal silicate compounds (ME).

Specific examples of the transition metal oxides having a layered rock salt type structure (MA) include $LiCoCO_2$ (lithium cobalt oxide [LCO]), $LiNi_2O_2$ (lithium nickelate), $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium manganese nickelate).

Specific examples of the transition metal oxides having a spinel-type structure (MB) include $LiMn_2O_4$ (LMO), $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compound (MC) include olivine-type iron phosphate salts such as $LiFePO_4$ and $Li_3Fe_2(PO_4)_3$, iron pyrophosphates such as $LiFeP_2O_7$, and cobalt phosphates such as $LiCoPO_4$, and a monoclinic NASICON type vanadium phosphate salt such as $Li_3V_2(PO_4)_3$ (lithium vanadium phosphate).

Examples of the lithium-containing transition metal halogenated phosphoric acid compound (MD) include iron fluorophosphates such as $Li_2FePO_4F$, manganese fluorophosphates such as $Li_zMnPO_4F$, cobalt fluorophosphates such as $Li_2CoPO_4F$.

Examples of the lithium-containing transition metal silicate compounds (ME) include $Li_2FeSiO_4$, $Li_2MnSiO_4$, and $Li_2CoSiO_4$.

In the present invention, the transition metal oxide having a layered rock salt type structure (MA) is preferable, and LCO or NMC is more preferable.

The shape of the positive electrode active material is not particularly limited but is preferably a particulate shape. The particle diameter (the volume average particle diameter) of the positive electrode active material particles is not particularly limited. For example, it can be set to 0.1 to 50 μm. The particle diameter of the positive electrode active material particle can be measured using the same method as that of the particle diameter of the inorganic solid electrolyte. In order to allow the positive electrode active material to have a predetermined particle diameter, an ordinary pulverizer or classifier is used. For example, a mortar, a ball mill, a sand mill, a vibration ball mill, a satellite ball mill, a planetary

ball mill, a swirling air flow jet mill, or a sieve is preferably used. During crushing, it is also possible to carry out wet-type crushing in which water or a dispersion medium such as methanol is made to be present together. In order to provide the desired particle diameter, classification is preferably carried out. The classification is not particularly limited and can be carried out using a sieve, a wind power classifier, or the like. Both the dry-type classification and the wet-type classification can be carried out.

A positive electrode active material obtained using a baking method may be used after being washed with water, an acidic aqueous solution, an alkaline aqueous solution, or an organic solvent.

The positive electrode active material may be used singly, or two or more thereof may be used in combination.

In a case of forming a positive electrode active material layer, the mass (mg) (mass per unit area) of the positive electrode active material per unit area ($cm^2$) of the positive electrode active material layer is not particularly limited. It can be appropriately determined according to the designed battery capacity and can be set to, for example, 1 to 100 $mg/cm^2$.

The content of the positive electrode active material in the inorganic solid electrolyte-containing composition is not particularly limited; however, it is preferably 10% to 97% by mass, more preferably 30% to 95% by mass, still more preferably 40% to 93% by mass, and particularly preferably 50% to 90% by mass, in the solid content of 100% by mass.

(Negative electrode active material)

The negative electrode active material is preferably capable of reversibly intercalating and deintercalating lithium ions. The material is not particularly limited as long as it has the above-described properties, and examples thereof include a carbonaceous material, a metal oxide, a metal composite oxide, lithium, a lithium alloy, and a negative electrode active material that is capable of forming an alloy with lithium. Among the above, a carbonaceous material, a metal composite oxide, or lithium is preferably used from the viewpoint of reliability.

The carbonaceous material that is used as the negative electrode active material is a material substantially consisting of carbon. Examples thereof include petroleum pitch, carbon black such as acetylene black (AB), graphite (natural graphite, artificial graphite such as vapor-grown graphite), and carbonaceous material obtained by firing a variety of synthetic resins such as polyacrylonitrile (PAN)-based resins or furfuryl alcohol resins. Furthermore, examples thereof also include a variety of carbon fibers such as PAN-based carbon fibers, cellulose-based carbon fibers, pitch-based carbon fibers, vapor-grown carbon fibers, dehydrated polyvinyl alcohol (PVA)-based carbon fibers, lignin carbon fibers, vitreous carbon fibers, and activated carbon fibers, mesophase microspheres, graphite whisker, and tabular graphite.

These carbonaceous materials can be classified into non-graphitizable carbonaceous materials (also referred to as "hard carbon") and graphitizable carbonaceous materials based on the graphitization degree. In addition, it is preferable that the carbonaceous material has the lattice spacing, density, and crystallite size described in JP1987-022066A (JP-S62-022066A), JP1990-006856A (JP-H2-006856A), and JP1991-045473A (JP-H3-045473A). The carbonaceous material is not necessarily a single material and, for example, may be a mixture of natural graphite and artificial graphite described in JP1993-090844A (JP-H5-090844A) or graphite having a coating layer described in JP1994-004516A (JP-H6-004516A).

As the carbonaceous material, hard carbon or graphite is preferably used, and graphite is more preferably used.

The oxide of a metal or a metalloid element that can be used as the negative electrode active material is not particularly limited as long as it is an oxide capable of intercalating and deintercalating lithium, and examples thereof include an oxide of a metal element (metal oxide), a composite oxide of a metal element or a composite oxide of a metal element and a metalloid element (collectively referred to as "metal composite oxide), and an oxide of a metalloid element (a metalloid oxide). The oxides are more preferably noncrystalline oxides, and preferred examples thereof include chalcogenides which are reaction products between metal elements and elements in Group 16 of the periodic table). In the present invention, the metalloid element refers to an element having intermediate properties between those of a metal element and a non-metal element. Typically, the metalloid elements include six elements including boron, silicon, germanium, arsenic, antimony, and tellurium, and further include three elements including selenium, polonium, and astatine. In addition, "amorphous" represents an oxide having a broad scattering band with a peak in a range of 20° to 40° in terms of 2θ in case of being measured by an X-ray diffraction method using CuKα rays, and the oxide may have a crystal diffraction line. The highest intensity in a crystal diffraction line observed in a range of 40° to 70° in terms of 20 is preferably 100 times or less and more preferably 5 times or less relative to the intensity of a diffraction peak line in a broad scattering band observed in a range of 20° to 40° in terms of 2θ, and it is still more preferable that the oxide does not have a crystal diffraction line.

In the compound group consisting of the noncrystalline oxides and the chalcogenides, noncrystalline oxides of metalloid elements and chalcogenides are more preferable, and (composite) oxides consisting of one element or a combination of two or more elements selected from elements (for example, Al, Ga, Si, Sn, Ge, Pb, Sb, and Bi) belonging to Groups 13 (IIIB) to 15 (VB) in the periodic table or chalcogenides are more preferable. Specific examples of preferred noncrystalline oxides and chalcogenides include $Ga_2O_3$ GeO, PbO, $PbO_2$, $Pb_2O_3$, $Pb_2O_4$, $Pb_3O_4$, $Sb_2O_3$, $Sb_2O_4$,

$Sb_2O_8Bi_2O_3$, $Sb_2O_8Si_2O_3$, $Sb_2O_5$, $Bi_2O_3$, $Bi_2O_4$, GeS, PbS, $PbS_2$, $Sb_2S_3$, and $Sb_2S_5$.

Preferred examples of the negative electrode active material which can be used in combination with amorphous oxides containing Sn, Si, or Ge as a major component include a carbonaceous material capable of intercalating and/or deintercalating lithium ions or lithium metal, lithium, a lithium alloy, and a negative electrode active material that is capable of being alloyed with lithium.

It is preferable that an oxide of a metal or a metalloid element, in particular, a metal (composite) oxide and the chalcogenide contains at least one of titanium or lithium as the constitutional component from the viewpoint of high current density charging and discharging characteristics. Examples of the metal composite oxide (lithium composite metal oxide) including lithium include a composite oxide of lithium oxide and the above metal (composite) oxide or the above chalcogenide, and specifically, $Li_2SnO_2$.

As the negative electrode active material, for example, a metal oxide (titanium oxide) having a titanium element is also preferable. Specifically, $Li_4Ti_5O_{12}$ (lithium titanium oxide [LTO]) is preferable since the volume variation during the intercalation and deintercalation of lithium ions is small, and thus the high-speed charging and discharging characteristics are excellent, and the deterioration of electrodes is suppressed, whereby it becomes possible to improve the life of the lithium ion secondary battery.

The lithium alloy as the negative electrode active material is not particularly limited as long as it is typically used as a negative electrode active material for a secondary battery, and examples thereof include a lithium aluminum alloy.

The negative electrode active material that is capable of forming an alloy with lithium is not particularly limited as long as it is typically used as a negative electrode active material for a secondary battery. Such an active material has a large expansion and contraction due to charging and discharging of the all-solid state secondary battery and accelerates the deterioration of the cycle characteristics. However, since the inorganic solid electrolyte-containing composition according to the embodiment of the present invention contains the low adsorption binder described above, and thus it is possible to suppress the deterioration of the cycle characteristics. Examples of such an active material include a (negative electrode) active material (an alloy or the like) having a silicon element or a tin element and a metal such as Al or In, a negative electrode active material (a silicon-containing active material) having a silicon element capable of exhibiting high battery capacity is preferable, and a silicon-containing active material in which the content of the silicon element is 50% by mole or more with respect to all the constitutional elements is more preferable.

In general, a negative electrode including the negative electrode active material (for example, a Si negative electrode including a silicon-containing active material or an Sn negative electrode containing an active material containing a tin element) can intercalate a larger amount of Li ions than a carbon negative electrode (for example, graphite or acetylene black). That is, the amount of Li ions intercalated per unit mass increases. Therefore, it is possible to increase the battery capacity. As a result, there is an advantage that the battery driving duration can be extended.

Examples of the silicon-containing active material include a silicon-containing alloy (for example, $LaSi_2$, $VSi_2$, La-Si, Gd-Si, or Ni-Si) including a silicon material such as Si or SiOx ($0 < x \leq 1$) and titanium, vanadium, chromium, manganese, nickel, copper, lanthanum, or the like or a structured active material thereof (for example, $LaSi_2$/Si), and an active material such as $SnSiO_3$ or $SnSiS_3$ including silicon element and tin element. In addition, since SiOx itself can be used as a negative electrode active material (a metalloid oxide) and Si is produced along with the operation of an all-solid state secondary battery, SiOx can be used as a negative electrode active material (or a precursor material thereof) capable of forming an alloy with lithium.

Examples of the negative electrode active material including tin element include Sn, SnO, $SnO_2$, SnS, $SnS_2$, and the above-described active material including silicon element and tin element. In addition, a composite oxide with lithium oxide, for example, $Li_2SnO_2$ can also be used.

In the present invention, the above-described negative electrode active material can be used without any particular limitation. From the viewpoint of battery capacity, a preferred aspect as the negative electrode active material is a negative electrode active material that is capable of being alloyed with lithium. Among them, the silicon material or the silicon-containing alloy (the alloy containing a silicon element) described above is more preferable, and it is more preferable to include a negative electrode active material containing silicon (Si) or a silicon-containing alloy.

The chemical formulae of the compounds obtained by the above baking method can be calculated using an inductively coupled plasma (ICP) emission spectroscopy as a measuring method from the mass difference of powder before and after firing as a convenient method.

The shape of the negative electrode active material is not particularly limited but is preferably a particulate shape. The volume average particle diameter of the negative electrode active material is not particularly limited; however, it is preferably 0.1 to 60 $\mu$m. The volume average particle diameter of the negative electrode active material particles can be measured using the same method as that of the average particle diameter of the inorganic solid electrolyte. In order to obtain the predetermined particle diameter, a typical crusher or classifier is used as in the case of the positive electrode active material.

The negative electrode active material may be used singly, or two or more negative electrode active materials may be used in combination.

In a case of forming a negative electrode active material layer, the mass (mg) (mass per unit area) of the negative electrode active material per unit area ($cm^2$) in the negative electrode active material layer is not particularly limited. It can be appropriately determined according to the designed battery capacity and can be set to, for example, 1 to 100 $mg/cm^2$.
The content of the negative electrode active material in the inorganic solid electrolyte-containing composition is not particularly limited, and it is preferably 10% to 90% by mass, more preferably 20% to 85% by mass, still more preferably 30% to 80% by mass, and even still more preferably 40% by mass to 75% by mass, in the solid content of 100% by mass.
In the present invention, in a case where a negative electrode active material layer is formed by charging a secondary battery, ions of a metal belonging to Group 1 or Group 2 in the periodic table, generated in the all-solid state secondary battery, can be used instead of the negative electrode active material. By bonding the ions to electrons and precipitating a metal, a negative electrode active material layer can be formed.

(Coating of active material)

The surfaces of the positive electrode active material and the negative electrode active material may be coated with a separate metal oxide. Examples of the surface coating agent include metal oxides and the like containing Ti, Nb, Ta, W, Zr, Al, Si, or Li. Specific examples thereof include titanium oxide spinel, tantalum-based oxides, niobium-based oxides, and lithium niobate-based compounds, and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, and $B_2O_3$.
In addition, a surface treatment may be carried out on the surfaces of electrodes including the positive electrode active material or the negative electrode active material using sulfur, phosphorous, or the like.
Furthermore, the particle surface of the positive electrode active material or the negative electrode active material may be treated with an active light ray or an active gas (plasma or the like) before or after the coating of the surfaces.

<Conductive auxiliary agent>

The inorganic solid electrolyte-containing composition according to the embodiment of the present invention preferably contains a conductive auxiliary agent, and for example, it is preferable that the silicon atom-containing active material as the negative electrode active material is used in combination with a conductive auxiliary agent.
The conductive auxiliary agent is not particularly limited, and conductive auxiliary agents that are known as ordinary conductive auxiliary agents can be used. The conductive auxiliary agent may be, for example, graphite such as natural graphite or artificial graphite, carbon black such as acetylene black, Ketjen black, or furnace black, amorphous carbon such as needle cokes, a carbon fiber such as a vapor-grown carbon fiber or a carbon nanotube, or a carbonaceous material such as graphene or fullerene which are electron-conductive materials and also may be a metal powder or a metal fiber of copper, nickel, or the like, and a conductive polymer such as polyaniline, polypyrrole, polythiophene, polyacetylene, or a polyphenylene derivative may also be used.
In the present invention, in a case where the active material and the conductive auxiliary agent are used in combination, among the above-described conductive auxiliary agents, a conductive auxiliary agent that does not intercalate and deintercalate ions (preferably Li ions) of a metal belonging to Group 1 or Group 2 in the periodic table and does not function as an active material at the time of charging and discharging of the battery is classified as the conductive auxiliary agent. Therefore, among the conductive auxiliary agents, a conductive auxiliary agent that can function as the active material in the active material layer at the time of charging and discharging of the battery is classified as an active material but not as a conductive auxiliary agent. Whether or not the conductive auxiliary agent functions as the active material at the time of charging and discharging of a battery is not unambiguously determined but is determined by the combination with the active material.
One kind of conductive auxiliary agent may be contained, or two or more kinds thereof may be contained.
The shape of the conductive auxiliary agent is not particularly limited but is preferably a particulate shape.
In a case where the inorganic solid electrolyte-containing composition according to the embodiment of the present invention contains a conductive auxiliary agent, the content of the conductive auxiliary agent in the inorganic solid electrolyte-containing composition is preferably 0% to 10% by mass in the solid content of 100% by mass.

<Lithium salt>

The inorganic solid electrolyte-containing composition according to the embodiment of the present invention preferably contains a lithium salt (a supporting electrolyte) as well.

Generally, the lithium salt is preferably a lithium salt that is used for this kind of product and is not particularly limited. For example, lithium salts described in paragraphs 0082 to 0085 of JP2015-088486A are preferable.
In a case where the inorganic solid electrolyte-containing composition according to the embodiment of the present invention contains a lithium salt, the content of the lithium salt is preferably 0.1 part by mass or more and more preferably 5 parts by mass or more with respect to 100 parts by mass of the solid electrolyte. The upper limit thereof is preferably 50 parts by mass or less and more preferably 20 parts by mass or less.

<Dispersing agent>

Since the above-described low adsorption binder functions as a dispersing agent as well, the inorganic solid electrolyte-containing composition according to the embodiment of the present invention may not contain a dispersing agent other than this low adsorption binder; however, it may contain a dispersing agent. As the dispersing agent, a dispersing agent that is generally used for an all-solid state secondary battery can be appropriately selected and used. Generally, a compound intended for particle adsorption and steric repulsion and/or electrostatic repulsion is suitably used.

<Other additives>

As components other than the respective components described above, the inorganic solid electrolyte-containing composition according to the embodiment of the present invention may appropriately contain an ionic liquid, a thickener, a crosslinking agent (an agent causing a crosslinking reaction by radical polymerization, condensation polymerization, or ring-opening polymerization), a polymerization initiator (an agent that generates an acid or a radical by heat or light), an antifoaming agent, a leveling agent, a dehydrating agent, or an antioxidant. The ionic liquid is contained in order to further improve the ion conductivity, and the known one in the related art can be used without particular limitation. In addition, a polymer other than the polymer that forms the above-described polymer binder, a typically used binder, or the like may be contained.

(Preparation of inorganic solid electrolyte-containing composition)

The inorganic solid electrolyte-containing composition according to the embodiment of the present invention can be prepared as a mixture and preferably as a slurry by mixing an inorganic solid electrolyte, the above low adsorption binder as a polymer binder, a dispersion medium, preferably a polymer binder other than the low adsorption binder (for example, a particulate binder), a conductive auxiliary agent, and furthermore, appropriately a lithium salt, and any other optionally components, by using, for example, various mixers that are used generally. In a case of a composition for an electrode, an active material is further mixed.
The mixing method is not particularly limited, and the components may be mixed at once or sequentially. A mixing environment is not particularly limited; however, examples thereof include a dry air environment and an inert gas environment.

[Sheet for an all-solid state secondary battery]

A sheet for an all-solid state secondary battery according to the embodiment of the present invention is a sheet-shaped molded body with which a constitutional layer of an all-solid state secondary battery can be formed, and includes various aspects depending on uses thereof. Examples of thereof include a sheet that is preferably used in a solid electrolyte layer (also referred to as a solid electrolyte sheet for an all-solid state secondary battery), and a sheet that is preferably used in an electrode or a laminate of an electrode and a solid electrolyte layer (an electrode sheet for an all-solid state secondary battery). In the present invention, the variety of sheets described above will be collectively referred to as a sheet for an all-solid state secondary battery.
It suffices that the solid electrolyte sheet for an all-solid state secondary battery according to the embodiment of the present invention is a sheet having a solid electrolyte layer, and it may be a sheet in which a solid electrolyte layer is formed on a substrate or may be a sheet that is formed of a solid electrolyte layer without including a substrate. The solid electrolyte sheet for an all-solid state secondary battery may include another layer in addition to the solid electrolyte layer. Examples of the other layer include a protective layer (a stripping sheet), a collector, and a coating layer.
Examples of the solid electrolyte sheet for an all-solid state secondary battery according to the embodiment of the present invention include a sheet including a layer formed of the inorganic solid electrolyte-containing composition according to the embodiment of the present invention, a typical solid electrolyte layer, and a protective layer on a substrate in this order. The solid electrolyte layer included in the solid electrolyte sheet for an all-solid state secondary battery is preferably formed of the inorganic solid electrolyte-containing composition according to the embodiment of the present invention. The contents of the respective components in the solid electrolyte layer are not particularly limited; however,

the contents are preferably the same as the contents of the respective components with respect to the solid content of the inorganic solid electrolyte-containing composition according to the embodiment of the present invention. The layer thickness of each layer that constitutes the solid electrolyte sheet for an all-solid state secondary battery is the same as the layer thickness of each layer described later in the all-solid state secondary battery.

The substrate is not particularly limited as long as it can support the solid electrolyte layer, and examples thereof include a sheet body (plate-shaped body) formed of materials described below regarding the collector, an organic material, an inorganic material, or the like. Examples of the organic materials include various polymers, and specific examples thereof include polyethylene terephthalate, polypropylene, polyethylene, and cellulose. Examples of the inorganic materials include glass and ceramic.

It suffices that an electrode sheet for an all-solid state secondary battery according to the embodiment of the present invention (simply also referred to as an "electrode sheet") is an electrode sheet including an active material layer, and it may be a sheet in which an active material layer is formed on a substrate (collector) or may be a sheet that is formed of an active material layer without including a substrate. The electrode sheet is typically a sheet including the collector and the active material layer, and examples of an aspect thereof include an aspect including the collector, the active material layer, and the solid electrolyte layer in this order and an aspect including the collector, the active material layer, the solid electrolyte layer, and the active material layer in this order. The solid electrolyte layer and the active material layer included in the electrode sheet are preferably formed of the inorganic solid electrolyte-containing composition according to the embodiment of the present invention. The contents of the respective components in this solid electrolyte layer or active material layer are not particularly limited; however, the contents are preferably the same as the contents of the respective components with respect to the solid content of the inorganic solid electrolyte-containing composition (the composition for an electrode) according to the embodiment of the present invention. The thickness of each of the layers forming the electrode sheet according to the embodiment of the present invention is the same as the layer thickness of each of the layers described below regarding the all-solid state secondary battery. The electrode sheet according to the embodiment of the present invention may include the above-described other layer.

The sheet for an all-solid state secondary battery sheet according to the embodiment of the present invention has a low-resistance constitutional layer the surface of which is flat, in which at least one layer of the solid electrolyte layer or the active material layer is formed of the inorganic solid electrolyte-containing composition according to the embodiment of the present invention. As a result, in a case where the sheet for an all-solid state secondary battery according to the embodiment of the present invention is used as a constitutional layer of the all-solid state secondary battery, it is possible to achieve excellent cycle characteristics as well as low resistance (high conductivity) of the all-solid state secondary battery. In particular, in the electrode sheet for an all-solid state secondary battery and the all-solid state secondary battery, in which the active material layer is formed of the inorganic solid electrolyte-containing composition according to the embodiment of the present invention, the active material layer and the collector exhibits strong adhesiveness, and thus it is possible to achieve further improvement of the cycle characteristics. As a result, the sheet for an all-solid state secondary battery according to the embodiment of the present invention is suitably used as a sheet with which a constitutional layer of an all-solid state secondary battery can be formed.

[Manufacturing method for sheet for all-solid state secondary battery]

The manufacturing method for a sheet for an all-solid state secondary battery according to the embodiment of the present invention is not particularly limited, and the sheet can be manufactured by forming each of the above layers using the inorganic solid electrolyte-containing composition according to the embodiment of the present invention. Examples thereof include a method in which the film formation (the coating and drying) is carried out preferably on a substrate or a collector (the other layer may be interposed) to form a layer (a coated and dried layer) consisting of an inorganic solid electrolyte-containing composition. This method makes it possible to produce a sheet for an all-solid state secondary battery having a substrate or a collector and having a coated and dried layer. In particular, in a case where the inorganic solid electrolyte-containing composition according to the embodiment of the present invention is subjected to film formation on a collector to produce a sheet for an all-solid state secondary battery, it is possible to strengthen the adhesion between the collector and the active material layer. Here, the coated and dried layer refers to a layer formed by carrying out coating with the inorganic solid electrolyte-containing composition according to the embodiment of the present invention and drying the dispersion medium (that is, a layer formed using the inorganic solid electrolyte-containing composition according to the embodiment of the present invention and consisting of a composition obtained by removing the dispersion medium from the inorganic solid electrolyte-containing composition according to the embodiment of the present invention). In the active material layer and the coated and dried layer, the dispersion medium may remain within a range where the effects of the present invention do not deteriorate, and the residual amount thereof, for example, in each of the layers may be 3% by mass or lower.

In the manufacturing method for a sheet for an all-solid state secondary battery according to the embodiment of the present invention, each of the steps such as coating and drying will be described in the following manufacturing

method for an all-solid state secondary battery.

In the manufacturing method for a sheet for an all-solid state secondary battery according to the embodiment of the present invention, the coated and dried layer obtained as described above can be pressurized. The pressurizing condition and the like will be described later in the section of the manufacturing method for an all-solid state secondary battery.

In addition, in the manufacturing method for a sheet for an all-solid state secondary battery according to the embodiment of the present invention, the substrate, the protective layer (particularly stripping sheet), or the like can also be stripped.

[All-solid state secondary battery]

The all-solid state secondary battery according to the embodiment of the present invention includes a positive electrode active material layer, a negative electrode active material layer facing the positive electrode active material layer, and a solid electrolyte layer disposed between the positive electrode active material layer and the negative electrode active material layer. The positive electrode active material layer is preferably formed on a positive electrode collector to configure a positive electrode. The negative electrode active material layer is preferably formed on a negative electrode collector to configure a negative electrode.

At least one layer of the negative electrode active material layer, the positive electrode active material layer, or the solid electrolyte layer is formed of the inorganic solid electrolyte-containing composition according to the embodiment of the present invention, and at least one of the solid electrolyte layer, the negative electrode active material layer, or the positive electrode active material layer is preferably formed of the inorganic solid electrolyte-containing composition according to the embodiment of the present invention. An aspect in which all of the layers are formed of the inorganic solid electrolyte-containing composition according to the embodiment of the present invention is also one of the preferred aspects. In the active material layer or the solid electrolyte layer formed of the inorganic solid electrolyte-containing composition according to the embodiment of the present invention, the kinds of components to be contained and the content ratios thereof are preferably the same as the solid content of the inorganic solid electrolyte-containing composition according to the embodiment of the present invention. In a case where the active material layer or the solid electrolyte layer is not formed of the inorganic solid electrolyte-containing composition according to the embodiment of the present invention, a known material in the related art can be used.

The thickness of each of the negative electrode active material layer, the solid electrolyte layer, and the positive electrode active material layer is not particularly limited. In case of taking a dimension of an ordinary all-solid state secondary battery into account, the thickness of each of the layers is preferably 10 to 1,000 μm and more preferably 20 μm or more and less than 500 μm. In the all-solid state secondary battery according to the embodiment of the present invention, the thickness of at least one layer of the positive electrode active material layer or the negative electrode active material layer is still more preferably 50 μm or more and less than 500 μm.

Each of the positive electrode active material layer and the negative electrode active material layer may include a collector on the side opposite to the solid electrolyte layer.

<Housing>

Depending on the use application, the all-solid state secondary battery according to the embodiment of the present invention may be used as the all-solid state secondary battery having the above-described structure as it is but is preferably sealed in an appropriate housing to be used in the form of a dry cell. The housing may be a metallic housing or a resin (plastic) housing. In a case where a metallic housing is used, examples thereof include an aluminum alloy housing and a stainless steel housing. It is preferable that the metallic housing is classified into a positive electrode-side housing and a negative electrode-side housing and that the positive electrode-side housing and the negative electrode-side housing are electrically connected to the positive electrode collector and the negative electrode collector, respectively. The positive electrode-side housing and the negative electrode-side housing are preferably integrated by being joined together through a gasket for short circuit prevention.

Hereinafter, the all-solid state secondary battery of the preferred embodiments of the present invention will be described with reference to Fig. 1; however, the present invention is not limited thereto.

Fig. 1 is a cross-sectional view schematically illustrating an all-solid state secondary battery (a lithium ion secondary battery) according to a preferred embodiment of the present invention. In the case of being seen from the negative electrode side, an all-solid state secondary battery 10 of the present embodiment includes a negative electrode collector 1, a negative electrode active material layer 2, a solid electrolyte layer 3, a positive electrode active material layer 4, and a positive electrode collector 5 in this order. The respective layers are in contact with each other, and thus structures thereof are adjacent. In a case in which the above-described structure is employed, during charging, electrons ($e^-$) are supplied to the negative electrode side, and lithium ions ($Li^+$) are accumulated on the negative electrode side.

On the other hand, during discharging, the lithium ions ($Li^+$) accumulated in the negative electrode side return to the positive electrode, and electrons are supplied to an operation portion 6. In an example illustrated in the drawing, an electric bulb is employed as a model at the operation portion 6 and is lit by discharging.

In a case where the all-solid state secondary battery having a layer configuration illustrated in Fig. 1 is put into a 2032-type coin case, the all-solid state secondary battery will be referred to as the "laminate for an all-solid state secondary battery", and a battery prepared by putting this laminate for an all-solid state secondary battery into a 2032-type coin case will be referred to as "all-solid state secondary battery", thereby referring to both batteries distinctively in some cases.

(Positive electrode active material layer, solid electrolyte layer, and negative electrode active material layer)

In the all-solid state secondary battery 10, all of the positive electrode active material layer, the solid electrolyte layer, and the negative electrode active material layer are formed of the inorganic solid electrolyte-containing composition of the embodiment of the present invention. This all-solid state secondary battery 10 exhibits excellent battery performance. The kinds of the inorganic solid electrolyte and the polymer binder (the low adsorption binder) which are contained in the positive electrode active material layer 4, the solid electrolyte layer 3, and the negative electrode active material layer 2 may be identical to or different from each other.

In the present invention, any one of the positive electrode active material layer and the negative electrode active material layer, or collectively both of them may be simply referred to as an active material layer or an electrode active material layer. In addition, in the present invention, any one of the positive electrode active material and the negative electrode active material, or collectively both of them may be simply referred to as an active material or an electrode active material.

In the present invention, in a case where the constitutional layer is formed of the inorganic solid electrolyte-containing composition according to the embodiment of the present invention, it is possible to achieve an all-solid state secondary battery having excellent cycle characteristics as well as an all-solid state secondary battery having low resistance.

In the all-solid state secondary battery 10, the negative electrode active material layer can be a lithium metal layer.

Examples of the lithium metal layer include a layer formed by depositing or molding a lithium metal powder, a lithium foil, and a lithium vapor deposition film. The thickness of the lithium metal layer can be, for example, 1 to 500 μm regardless of the above thickness of the above negative electrode active material layer.

The positive electrode collector 5 and the negative electrode collector 1 are preferably an electron conductor.

In the present invention, either or both of the positive electrode collector and the negative electrode collector will also be simply referred to as the collector.

As a material that forms the positive electrode collector, not only aluminum, an aluminum alloy, stainless steel, nickel, or titanium but also a material (a material on which a thin film is formed) obtained by treating the surface of aluminum or stainless steel with carbon, nickel, titanium, or silver is preferable. Among these, aluminum or an aluminum alloy is more preferable.

As a material which forms the negative electrode collector, aluminum, copper, a copper alloy, stainless steel, nickel, titanium, or the like, and further, a material obtained by treating the surface of aluminum, copper, a copper alloy, or stainless steel with carbon, nickel, titanium, or silver is preferable, and aluminum, copper, a copper alloy, or stainless steel is more preferable.

Regarding the shape of the collector, a film sheet shape is typically used; however, it is also possible to use shapes such as a net shape, a punched shape, a lath body, a porous body, a foaming body, and a molded body of fiber.

The thickness of the collector is not particularly limited; however, it is preferably 1 to 500 μm. In addition, protrusions and recesses are preferably provided on the surface of the collector by carrying out a surface treatment.

In the all-solid state secondary battery 10, a layer formed of a known constitutional layer forming material can be applied to the positive electrode active material layer.

In the present invention, a functional layer, a functional member, or the like may be appropriately interposed or disposed between each layer of the negative electrode collector, the negative electrode active material layer, the solid electrolyte layer, the positive electrode active material layer, and the positive electrode collector or on the outside thereof. In addition, each layer may be constituted of a single layer or multiple layers.

[Manufacture of all-solid state secondary battery]

The all-solid state secondary battery can be manufactured by a conventional method. Specifically, the all-solid state secondary battery can be manufactured by forming each of the layers described above using the inorganic solid electrolyte-containing composition of the embodiment of the present invention or the like. Hereinafter, the manufacturing method therefor will be described in detail.

The all-solid state secondary battery according to the embodiment of the present invention can be manufactured by carrying out a method (a manufacturing method for a sheet for an all-solid state secondary battery according to the embodiment of the present invention) which includes (is carried out through) a step of coating an appropriate substrate (for example, a metal foil which serves as a collector) with the inorganic solid electrolyte-containing composition according to the embodiment of the present invention and forming a coating film (forming a film).

For example, an inorganic solid electrolyte-containing composition containing a positive electrode active material is applied as a material for a positive electrode (a composition for a positive electrode) onto a metal foil which is a positive electrode collector, to form a positive electrode active material layer, thereby producing a positive electrode sheet for an all-solid state secondary battery. Next, the inorganic solid electrolyte-containing composition for forming a solid electrolyte layer is applied onto the positive electrode active material layer to form the solid electrolyte layer. Furthermore, an inorganic solid electrolyte-containing composition containing a negative electrode active material is applied as a material for a negative electrode (a composition for a negative electrode) onto the solid electrolyte layer, to form a negative electrode active material layer. A negative electrode collector (a metal foil) is overlaid on the negative electrode active material layer, whereby it is possible to obtain an all-solid state secondary battery having a structure in which the solid electrolyte layer is sandwiched between the positive electrode active material layer and the negative electrode active material layer. A desired all-solid state secondary battery can also be manufactured by enclosing the all-solid state secondary battery in a housing.

In addition, it is also possible to manufacture an all-solid state secondary battery by carrying out the forming method for each layer in reverse order to form a negative electrode active material layer, a solid electrolyte layer, and a positive electrode active material layer on a negative electrode collector and overlaying a positive electrode collector thereon.

As another method, the following method can be exemplified. That is, the positive electrode sheet for an all-solid state secondary battery is produced as described above. In addition, an inorganic solid electrolyte-containing composition containing a negative electrode active material is applied as a material for a negative electrode (a composition for a negative electrode) onto a metal foil which is a negative electrode collector, to form a negative electrode active material layer, thereby producing a negative electrode sheet for an all-solid state secondary battery. Next, a solid electrolyte layer is formed on the active material layer in any one of these sheets as described above. Furthermore, the other one of the positive electrode sheet for an all-solid state secondary battery and the negative electrode sheet for an all-solid state secondary battery is laminated on the solid electrolyte layer such that the solid electrolyte layer and the active material layer come into contact with each other. In this manner, an all-solid state secondary battery can be manufactured.

As still another method, for example, the following method can be used. That is, a positive electrode sheet for an all-solid state secondary battery and a negative electrode sheet for an all-solid state secondary battery are produced as described above. In addition, separately from the positive electrode sheet for an all-solid state secondary battery and the negative electrode sheet for an all-solid state secondary battery, an inorganic solid electrolyte-containing composition is applied onto a substrate, thereby producing a solid electrolyte sheet for an all-solid state secondary battery consisting of a solid electrolyte layer. Furthermore, the positive electrode sheet for an all-solid state secondary battery and the negative electrode sheet for an all-solid state secondary battery are laminated with each other to sandwich the solid electrolyte layer that has been peeled off from the substrate. In this manner, an all-solid state secondary battery can be manufactured.

The solid electrolyte layer or the like can also be formed by, for example, forming an inorganic solid electrolyte-containing composition or the like on a substrate or an active material layer by pressure molding under pressurizing conditions described later.

In the above production method, it suffices that the inorganic solid electrolyte-containing composition according to the embodiment of the present invention is used in any one of the composition for a positive electrode, the inorganic solid electrolyte-containing composition, or the composition for a negative electrode. The inorganic solid electrolyte-containing composition according to the embodiment of the present invention is preferably used in the inorganic solid electrolyte-containing composition, and the inorganic solid electrolyte-containing composition according to the embodiment of the present invention can be used in any of the compositions.

<Formation of individual layer (film formation)>

The method for applying the inorganic solid electrolyte-containing composition is not particularly limited and can be appropriately selected. Examples thereof include coating (preferably wet-type coating), spray coating, spin coating, dip coating, slit coating, stripe coating, and bar coating.

In this case, the inorganic solid electrolyte-containing composition may be dried after being applied each time or may be dried after being applied multiple times. The drying temperature is not particularly limited. The lower limit is preferably 30°C or higher, more preferably 60°C or higher, and still more preferably 80°C or higher. The upper limit thereof is preferably 300°C or lower, more preferably 250°C or lower, and still more preferably 200°C or lower. In a case

where the solid electrolyte composition is heated in the above-described temperature range, the dispersion medium can be removed to make the composition enter a solid state (coated and dried layer). This temperature range is preferable since the temperature is not excessively increased and each member of the all-solid state secondary battery is not impaired. As a result, excellent overall performance is exhibited in the all-solid state secondary battery, and it is possible to obtain a good binding property and a good ion conductivity even without pressurization.

In a case where the inorganic solid electrolyte-containing composition according to the embodiment of the present invention is applied and dried as described above, it is possible to suppress the variation in the contact state and to cause solid particles to bind, and furthermore, it is possible to form a coated and dried layer having a flat surface.

After applying the inorganic solid electrolyte-containing composition, it is preferable to pressurize each layer or the all-solid state secondary battery after superimposing the constitutional layers or producing the all-solid state secondary battery. In addition, each of the layers is also preferably pressurized together in a state of being laminated. Examples of the pressurizing methods include a method using a hydraulic cylinder pressing machine. The pressurizing force is not particularly limited; however, it is generally preferably in a range of 5 to 1,500 MPa.

In addition, the applied inorganic solid electrolyte-containing composition may be heated at the same time with the pressurization. The heating temperature is not particularly limited but is generally in a range of 30°C to 300°C. The press can also be applied at a temperature higher than the glass transition temperature of the inorganic solid electrolyte. It is also possible to carry out press at a temperature higher than the glass transition temperature of the polymer contained in the polymer binder. However, in general, the temperature does not exceed the melting point of this polymer.

The pressurization may be carried out in a state in which the coating solvent or dispersion medium has been dried in advance or in a state in which the solvent or the dispersion medium remains.

The respective compositions may be applied at the same time, and the application, the drying, and the pressing may be carried out simultaneously and/or sequentially. Each of the compositions may be applied onto each of the separate substrates and then laminated by carrying out transfer.

The atmosphere during the pressurization is not particularly limited and may be any one of the atmospheres such as an atmosphere of dried air (the dew point: -20°C or lower) and an atmosphere of inert gas (for example, an argon gas, a helium gas, or a nitrogen gas).

The pressurization time may be a short time (for example, within several hours) under the application of a high pressure or a long time (one day or longer) under the application of an intermediate pressure. In case of members other than the sheet for an all-solid state secondary battery, for example, the all-solid state secondary battery, it is also possible to use a restraining device (screw fastening pressure or the like) of the all-solid state secondary battery in order to continuously apply an intermediate pressure.

The pressing pressure may be a pressure that is constant or varies with respect to a portion under pressure such as a sheet surface.

The pressing pressure may be variable depending on the area or the film thickness of the portion under pressure. In addition, the pressure may also be variable stepwise for the same portion.

A pressing surface may be flat or roughened.

<Initialization>

The all-solid state secondary battery manufactured as described above is preferably initialized after the manufacturing or before use. The initialization is not particularly limited, and it is possible to initialize the all-solid state secondary battery by, for example, carrying out initial charging and discharging in a state in which the pressing pressure is increased and then releasing the pressure up to a pressure at which the all-solid state secondary battery is ordinarily used.

[Usages of all-solid state secondary battery]

The all-solid state secondary battery according to the embodiment of the present invention can be applied to a variety of usages. The application aspect thereof is not particularly limited, and in a case of being mounted in an electronic apparatus, examples thereof include a notebook computer, a pen-based input personal computer, a mobile personal computer, an e-book player, a mobile phone, a cordless phone handset, a pager, a handy terminal, a portable fax, a mobile copier, a portable printer, a headphone stereo, a video movie, a liquid crystal television, a handy cleaner, a portable CD, a mini disc, an electric shaver, a transceiver, an electronic notebook, a calculator, a memory card, a portable tape recorder, a radio, and a backup power supply. Additionally, examples of the consumer usage thereof include an automobile, an electric vehicle, a motor, a lighting instrument, a toy, a game device, a road conditioner, a watch, a strobe, a camera, and a medical device (a pacemaker, a hearing aid, a shoulder massage device, and the like). Furthermore, the all-solid state secondary battery can be used for a variety of military usages and universe usages. In addition, the all-solid state secondary battery can also be combined with a solar battery.

[Examples]

Hereinafter, the present invention will be described in more detail based on Examples; however, the present invention is not limited thereto to be interpreted. "Parts" and "%" that represent compositions in the following Examples are mass-based unless particularly otherwise described. In the present invention, "room temperature" means 25°C.

1. Polymer synthesis and preparation of binder solution or dispersion liquid

Polymers represented by the following chemical formulae and shown in Table 1-1 and Table 1-2 (collectively referred to as Table 1) were synthesized as follows.

[Synthesis Example 1: Synthesis of polymer S-1 and preparation of binder solution S-1]

A polymer S-1 was synthesized to prepare a butyl butyrate solution S-1 of this polymer.

To a 200 mL three-necked flask, 28.80 g of NISSO-PB GI1000 (product name, manufactured by NIPPON SODA Co., Ltd.) and 1.92 g of polypropylene glycol (PPG400, manufactured by FUJIFILM Wako Pure Chemical Corporation) were added and dissolved in 55.5 g of butyl butyrate (Tokyo Chemical Industry Co., Ltd.). To this solution, 6.30 g of dicyclohexylmethane-4,4'-diisocyanate (manufactured by Tokyo Chemical Industry Co., Ltd.) was added and stirred at 80°C to be homogeneously dissolved. To the obtained solution, 100 mg of Neostan U-600 (product name, manufactured by Nitto Kasei Co., Ltd.) was added and stirred at 80°C for 10 hours to synthesize a polymer S-1 (polyurethane), and a binder solution S-1 (concentration: 40% by mass) consisting of the polymer S-1 was obtained.

[Synthesis Example 2: Synthesis of polymer S-2 (preparation of binder solution S-2)]

A polymer S-2 (polyurethane) was synthesized in the same manner as in Synthesis Example 1, and a binder solution S-2 consisting of the polymer S-2 was obtained except that in Synthesis Example 1, a compound from which each constitutional component is derived was used so that the polymer S-2 had the composition (the kind and the content of the constitutional component) shown in Table 1.

[Synthesis Example 3: Synthesis of polymer S-3 (preparation of binder solution S-3)]

To a 500 mL three-necked flask, 180 g of NISSO-PB G3000 (product name, manufactured by NIPPON SODA Co., Ltd.) and 9.8 g of dimethyl adipate were added and stirred. To this solution, 50 mg of tetrabutyl orthotitanate (manufactured by Tokyo Chemical Industry Co., Ltd.) was added and stirred at 190°C for 8 hours. After allowing the solution to stand at room temperature, 190 g of butyl butyrate was added thereto and stirred to be homogeneously dissolved.

In this manner, a polymer S-3 (polyester) was synthesized, and a binder solution S-3 consisting of the polymer S-3 was obtained.

[Synthesis Example 4: Synthesis of polymer S-4 (preparation of binder solution S-4)]

To a 100 mL volumetric flask, 6.39 g of glycidyl methacrylate (manufactured by Tokyo Chemical Industry Co., Ltd.), 27.3 g of dodecyl methacrylate (manufactured by Tokyo Chemical Industry Co., Ltd.), and 0.36 g of a polymerization initiator V-601 (product name, manufactured by FUJIFILM Wako Pure Chemical Corporation) were added and dissolved in 36 g of butyl butyrate to prepare a monomer solution. To a 300 mL three-necked flask, 18 g of butyl butyrate was added and stirred at 80°C, and then the above monomer solution was added dropwise thereto over 2 hours. After completion of the dropwise addition, the temperature was raised to 90°C, and stirring was carried out for 2 hours to synthesize a polymer S-4 (a methacrylic polymer), whereby a binder solution S-4 (concentration: 40% by mass) consisting of the polymer S-4 was obtained.

[Synthesis Examples 5 to 18, 35: synthesis of polymers S-5 to S-18 and S-35 (preparation of binder solutions S-5 to S-18 and S-35)]

Each of polymers S-5 to S-18 and S-35 ((meth)acrylic polymers or vinyl polymers) was synthesized in the same manner as in Synthesis Example 4, and each of binder solutions S-5 to S-18 and S-35 consisting of the respective polymers was obtained except that in Synthesis Example 4, a compound from which each constitutional component is derived was used so that each of the polymers S-5 to S-18 and S-35 had the composition (the kind and the content of the constitutional component) shown in Table 1. It is noted that the polymer S-7 was insoluble in butyl butyrate, and thus

the binder consisting of the polymer S-7 was obtained as a dispersion liquid S-7. The average particle diameter of the binder in this dispersion liquid was 250 nm.

[Synthesis Example 19: Synthesis of polymer S-19 (preparation of binder solution S-19)]

100 parts by mass of ion exchange water, 48 parts by mass of vinylidene fluoride, 30 parts by mass of hexafluoropropene, and 22 parts by mass of tetrafluoroethylene were added to an autoclave, and 2 parts by mass of a polymerization initiator PEROYL IPP (product name, chemical name: diisopropyl peroxydicarbonate, manufactured by NOF CORPORATION) was further added thereto and stirred at 40°C for 24 hours. After stirring, the precipitate was filtered and dried at 100°C for 10 hours. 40 parts by mass of butyl butyrate was added to 10 parts by mass of the obtained polymer and dissolved to synthesize a polymer S-19 (a vinylidene fluoride-hexafluoropropylene-tetrafluoropropylene ternary copolymer), whereby a binder solution S-19 (polymer concentration: 20% by mass) consisting of the binder S-19 was obtained.

[Synthesis Example 20: Synthesis of polymer S-20 (preparation of binder solution S-20)]

100 parts by mass of ion exchange water, 68 parts by mass of vinylidene fluoride, and 32 parts by mass of hexafluoropropene were added to an autoclave, and 2 parts by mass of a polymerization initiator PEROYL IPP (product name, chemical name: diisopropyl peroxydicarbonate, manufactured by NOF CORPORATION) was further added thereto and stirred at 40°C for 24 hours. After stirring, the precipitate was filtered and dried at 100°C for 10 hours. 40 parts by mass of butyl butyrate was added to 10 parts by mass of the obtained polymer and dissolved to synthesize a polymer S-20 (a vinylidene fluoride-hexafluoropropylene binary copolymer), whereby a binder solution S-20 (polymer concentration: 20% by mass) consisting of the polymer S-20 was obtained.

[Synthesis Example 21: Synthesis of polymer S-21 (preparation of binder solution S-21)]

A fluorine-based copolymer S-21 was synthesized to prepare a binder solution S-21 (concentration: 10% by mass) consisting of this fluorine-based copolymer.

Specifically, 180 parts by mass of tetrahydrofuran and 20 parts by mass of the fluorine-based copolymer S-19 synthesized in Synthesis Example 19 were added to a 500 mL three-necked flask equipped with a reflux condenser, and 0.23 g of lithium hydroxide and 40 g of methanol were added thereto and stirred at 60°C for 6 hours. Then, the mixture was added dropwise to water, the precipitate was filtered and subjected to vacuum drying to obtain a polymer precursor (S-21).

Next, 90 parts by mass of N-methylpyrrolidone and 10 parts by mass of the polymer precursor (S-21) were added to a 300 mL three-necked flask equipped with a reflux condenser and a gas introduction cock and dissolved. Then, nitrogen gas was introduced at a flow rate of 200 mL/min for 10 minutes, the temperature was subsequently raised to 75°C, and then 12 parts by mass of dodecanethiol and 0.5 parts by mass of azobisisobutyronitrile (manufactured by FUJIFILM Wako Pure Chemical Corporation) were added and stirring was continued for 5 hours. Then, the mixture was added dropwise to hexane to obtain a fluorine-based copolymer S-21 as a precipitate. After drying under reduced pressure at 60°C for 5 hours, the precipitate was redissolved in any solvent. The obtained fluorine-based copolymer was dissolved in butyl butyrate to obtain a binder solution S-21 (concentration: 10% by mass).

[Synthesis Example 22: Synthesis of polymer S-22 (preparation of binder solution S-22)]

A fluorine-based copolymer S-22 was synthesized to prepare a binder solution S-22 (concentration: 10% by mass) consisting of this fluorine-based copolymer.

Specifically, 180 parts by mass of tetrahydrofuran and 20 parts by mass of the fluorine-based copolymer S-19 synthesized in Synthesis Example 19 were added to a 500 mL three-necked flask equipped with a reflux condenser, and 0.23 g of lithium hydroxide and 40 g of methanol were added thereto and stirred at 60°C for 6 hours. Then, the mixture was added dropwise to water, the precipitate was filtered and subjected to vacuum drying to obtain a polymer precursor (S-22).

Next, 90 parts by mass of N-methylpyrrolidone and 10 parts by mass of the polymer precursor (S-22) were added to a 300 mL three-necked flask equipped with a reflux condenser and a gas introduction cock and dissolved. Then, nitrogen gas was introduced at a flow rate of 200 mL/min for 10 minutes, the temperature was subsequently raised to 75°C, and then 6 parts by mass of 6-mercapto-1-hexanol and 0.6 parts by mass of azobisisobutyronitrile (manufactured by FUJIFILM Wako Pure Chemical Corporation) were added and stirring was continued for 5 hours. Then, the mixture was added dropwise to hexane to obtain a fluorine-based copolymer S-22 as a precipitate. After drying under reduced pressure at 60°C for 5 hours, the precipitate was redissolved in any solvent. The obtained fluorine-based copolymer

was dissolved in butyl butyrate to obtain a binder solution S-22 (concentration: 10% by mass).

[Synthesis Example 23: Synthesis of polymer S-23 (preparation of binder solution S-23)]

A fluorine-based copolymer S-23 was synthesized to prepare a binder solution S-23 (concentration: 10% by mass) consisting of this fluorine-based copolymer.

Specifically, 180 parts by mass of tetrahydrofuran and 20 parts by mass of the fluorine-based copolymer S-19 synthesized in Synthesis Example 19 were added to a 2 L three-necked flask equipped with a reflux condenser, and 0.23 g of lithium hydroxide and 40 g of methanol were added thereto and stirred at 60°C for 6 hours. Then, the mixture was added dropwise to water, the precipitate was filtered and subjected to vacuum drying to obtain a polymer precursor (S-23).

Next, 90 parts by mass of N-methylpyrrolidone and 10 parts by mass of the polymer precursor (S-23) were added to a 300 mL three-necked flask equipped with a reflux condenser and a gas introduction cock and dissolved. Then, nitrogen gas was introduced at a flow rate of 200 mL/min for 10 minutes, the temperature was subsequently raised to 75°C, and then 3 parts by mass of mercaptopropionic acid and 0.6 parts by mass of azobisisobutyronitrile (manufactured by FUJIFILM Wako Pure Chemical Corporation) were added and stirring was continued for 5 hours. Then, the mixture was added dropwise to hexane to obtain a fluorine-based copolymer S-23 as a precipitate. After drying under reduced pressure at 60°C for 5 hours, the precipitate was redissolved in any solvent. The obtained fluorine-based copolymer was dissolved in butyl butyrate to obtain a binder solution S-23 (concentration: 10% by mass).

[Synthesis Example 24: Synthesis of polymer S-24 (preparation of binder solution S-24)]

A fluorine-based copolymer S-24 was synthesized to prepare a binder solution S-24 (concentration: 10% by mass) consisting of this fluorine-based copolymer.

Specifically, 90 parts by mass of N-methylpyrrolidone and 10 parts by mass of the polymer precursor (S-23) were added to a 300 mL three-necked flask equipped with a reflux condenser and a gas introduction cock and dissolved. Then, nitrogen gas was introduced at a flow rate of 200 mL/min for 10 minutes, the temperature was subsequently raised to 75°C, and then 3 parts by mass of 6-mercapto-1-hexanol and 0.6 parts by mass of azobisisobutyronitrile (manufactured by FUJIFILM Wako Pure Chemical Corporation) were added and stirring was continued for 5 hours. Then, 7 parts by mass of maleic acid anhydride was added, and stirring was further carried out for 2 hours. Then, the mixture was added dropwise to hexane to obtain a fluorine-based copolymer S-24 as a precipitate. After drying under reduced pressure at 60°C for 5 hours, the precipitate was redissolved in any solvent. The obtained fluorine-based copolymer was dissolved in butyl butyrate to obtain a binder solution S-24 (concentration: 10% by mass).

[Synthesis Example 25: Synthesis of polymer S-25 (preparation of binder solution S-25)]

A fluorine-based copolymer S-25 was synthesized to prepare a binder solution S-25 (concentration: 10% by mass) consisting of this fluorine-based copolymer.

Specifically, 90 parts by mass of N-methylpyrrolidone and 10 parts by mass of the polymer precursor (S-21) were added to a 300 mL three-necked flask equipped with a reflux condenser and a gas introduction cock and dissolved. Then, nitrogen gas was introduced at a flow rate of 200 mL/min for 10 minutes, the temperature was subsequently raised to 75°C, and then 22 parts by mass of 1H,1H,2H,2H-perfluorodecanethiol and 1 part by mass of azobisisobutyronitrile (manufactured by FUJIFILM Wako Pure Chemical Corporation) were added and stirring was continued for 5 hours. Then, the mixture was added dropwise to hexane to obtain a fluorine-based copolymer S-25 as a precipitate. After drying under reduced pressure at 60°C for 5 hours, the precipitate was redissolved in any solvent. The obtained fluorine-based copolymer was dissolved in butyl butyrate to obtain a binder solution S-25 (concentration: 10% by mass).

[Synthesis Example 26: Synthesis of polymer S-26 (preparation of binder solution S-26)]

A fluorine-based copolymer S-26 was synthesized to prepare a binder solution S-26 (concentration: 10% by mass) consisting of this fluorine-based copolymer.

Specifically, 90 parts by mass of N-methylpyrrolidone and 10 parts by mass of the fluorine-based copolymer S-19 synthesized in Synthesis Example 19 were added to a 300 mL three-necked flask equipped with a reflux condenser and a gas introduction cock and dissolved. Then, 47.3 parts by mass of lauryl acrylate (manufactured by FUJIFILM Wako Pure Chemical Corporation), 22.8 parts by mass of 1H,1H,2H,2H-tridecafluoro-n-octyl methacrylate (manufactured by Tokyo Chemical Industry Co., Ltd.), 0.1 parts by mass of copper chloride (manufactured by FUJIFILM Wako Pure Chemical Corporation), and 0.5 parts by mass of 4,4'-dimethyl-2,2'-bipyridyl were added to. After bubbling nitrogen gas for 10 minutes, nitrogen gas was introduced at a flow rate of 50 mL/min, the temperature was raised to 100°C, and

stirring was continued for 18 hours. Then, the mixture was added dropwise to hexane to obtain a fluorine-based copolymer S-26 as a precipitate. After drying under reduced pressure at 60°C for 5 hours, the precipitate was redissolved in any solvent. The obtained fluorine-based copolymer was dissolved in butyl butyrate to obtain a binder solution S-26 (concentration: 10% by mass).

[Synthesis Example 27: Synthesis of polymer S-27 (preparation of binder solution S-27)]

A fluorine-based copolymer S-27 was synthesized to prepare a binder solution S-27 (concentration: 10% by mass) consisting of this fluorine-based copolymer.

Specifically, 180 parts by mass of tetrahydrofuran and 20 parts by mass of the fluorine-based copolymer S-19 synthesized in Synthesis Example 19 were added to a 500 mL three-necked flask equipped with a reflux condenser, and 0.12 g of lithium hydroxide and 40 g of methanol were added thereto and stirred at 60°C for 6 hours. Then, the mixture was added dropwise to water, the precipitate was filtered and subjected to vacuum drying to obtain a polymer precursor A (S-27).

Next, 135 parts by mass of N-methylpyrrolidone and 15 parts by mass of the polymer precursor A (S-27) were added to a 300 mL three-necked flask equipped with a reflux condenser and a gas introduction cock and dissolved. Then, nitrogen gas was introduced at a flow rate of 200 mL/min for 10 minutes, the temperature was subsequently raised to 75°C, and then 14 parts by mass of decanedithiol and 0.8 parts by mass of azobisisobutyronitrile (manufactured by FUJIFILM Wako Pure Chemical Corporation) were added and stirring was continued for 5 hours. Then, the mixture was added dropwise to hexane to obtain a polymer precursor B (S-27) as a precipitate.

Next, 90 parts by mass of N-methylpyrrolidone and 10 parts by mass of the polymer precursor B (S-27) were added to a 300 mL three-necked flask equipped with a reflux condenser and a gas introduction cock and dissolved. Then, 2 parts by mass of lauryl acrylate (manufactured by FUJIFILM Wako Pure Chemical Corporation), 1 part by mass of 1H,1H,2H,2H-tridecafluoro-n-octyl methacrylate (manufactured by Tokyo Chemical Industry Co., Ltd.), and 0.1 parts by mass of azobisbutyronitrile (manufactured by FUJIFILM Wako Pure Chemical Corporation) were added thereto. After introducing nitrogen gas at a flow rate of 200 mL/min for 10 minutes, the temperature was raised to 75°C, and stirring was continued for 5 hours. Then, the mixture was added dropwise to hexane to obtain a fluorine-based copolymer S-27 as a precipitate. After drying under reduced pressure at 60°C for 5 hours, the precipitate was redissolved in any solvent. The obtained fluorine-based copolymer was dissolved in butyl butyrate to obtain a binder solution S-27 (concentration: 10% by mass).

[Synthesis Example 28: Synthesis of polymer S-28 (preparation of binder solution S-28)]

A fluorine-based copolymer S-28 was synthesized to prepare a binder solution S-28 (concentration: 10% by mass) consisting of this fluorine-based copolymer.

Specifically, 180 parts by mass of tetrahydrofuran and 20 parts by mass of the fluorine-based copolymer S-20 synthesized in Synthesis Example 20 were added to a 500 mL three-necked flask equipped with a reflux condenser, and 0.23 g of lithium hydroxide and 40 g of methanol were added thereto and stirred at 60°C for 6 hours. Then, the mixture was added dropwise to water, the precipitate was filtered and subjected to vacuum drying to obtain a polymer precursor (S-28).

Next, 90 parts by mass of N-methylpyrrolidone and 10 parts by mass of the polymer precursor (S-28) were added to a 300 mL three-necked flask equipped with a reflux condenser and a gas introduction cock and dissolved. Then, nitrogen gas was introduced at a flow rate of 200 mL/min for 10 minutes, the temperature was subsequently raised to 75°C, and then 12 parts by mass of dodecanethiol and 0.5 parts by mass of azobisisobutyronitrile (manufactured by FUJIFILM Wako Pure Chemical Corporation) were added and stirring was continued for 5 hours. Then, the mixture was added dropwise to hexane to obtain a fluorine-based copolymer S-28 as a precipitate. After drying under reduced pressure at 60°C for 5 hours, the precipitate was redissolved in any solvent. The obtained fluorine-based copolymer was dissolved in butyl butyrate to obtain a binder solution S-28 (concentration: 10% by mass).

[Synthesis Example 29: Synthesis of polymer S-29 (preparation of binder solution S-29)]

A fluorine-based copolymer S-29 was synthesized to prepare a binder solution S-29 (concentration: 10% by mass) consisting of this fluorine-based copolymer.

Specifically, 180 parts by mass of tetrahydrofuran and 20 parts by mass of the fluorine-based copolymer S-20 synthesized in Synthesis Example 20 were added to a 500 mL three-necked flask equipped with a reflux condenser, and 0.23 g of lithium hydroxide and 40 g of methanol were added thereto and stirred at 60°C for 6 hours. Then, the mixture was added dropwise to water, the precipitate was filtered and subjected to vacuum drying to obtain a polymer precursor (S-29).

Next, 90 parts by mass of N-methylpyrrolidone and 10 parts by mass of the polymer precursor (S-29) were added to a 300 mL three-necked flask equipped with a reflux condenser and a gas introduction cock and dissolved. Then, nitrogen gas was introduced at a flow rate of 200 mL/min for 10 minutes, the temperature was subsequently raised to 75°C, and then 6 parts by mass of 6-mercapto-1-hexanol and 0.6 parts by mass of azobisisobutyronitrile (manufactured by FUJIFILM Wako Pure Chemical Corporation) were added and stirring was continued for 5 hours. Then, the mixture was added dropwise to hexane to obtain a fluorine-based copolymer S-29 as a precipitate. After drying under reduced pressure at 60°C for 5 hours, the precipitate was redissolved in any solvent. The obtained fluorine-based copolymer was dissolved in butyl butyrate to obtain a binder solution S-29 (concentration: 10% by mass).

[Synthesis Example 30: Synthesis of polymer S-30 (preparation of binder solution S-30)]

A fluorine-based copolymer S-30 was synthesized to prepare a binder solution S-30 (concentration: 10% by mass) consisting of this fluorine-based copolymer.

Specifically, 180 parts by mass of tetrahydrofuran and 20 parts by mass of the fluorine-based copolymer S-20 synthesized in Synthesis Example 20 were added to a 2 L three-necked flask equipped with a reflux condenser, and 0.23 g of lithium hydroxide and 40 g of methanol were added thereto and stirred at 60°C for 6 hours. Then, the mixture was added dropwise to water, the precipitate was filtered and subjected to vacuum drying to obtain a polymer precursor (S-30).

Next, 90 parts by mass of N-methylpyrrolidone and 10 parts by mass of the polymer precursor (S-30) were added to a 300 mL three-necked flask equipped with a reflux condenser and a gas introduction cock and dissolved. Then, nitrogen gas was introduced at a flow rate of 200 mL/min for 10 minutes, the temperature was subsequently raised to 75°C, and then 3 parts by mass of mercaptopropionic acid and 0.6 parts by mass of azobisisobutyronitrile (manufactured by FUJIFILM Wako Pure Chemical Corporation) were added and stirring was continued for 5 hours. Then, the mixture was added dropwise to hexane to obtain a fluorine-based copolymer S-30 as a precipitate. After drying under reduced pressure at 60°C for 5 hours, the precipitate was redissolved in any solvent. The obtained fluorine-based copolymer was dissolved in butyl butyrate to obtain a binder solution S-30 (concentration: 10% by mass).

[Synthesis Example 31: Synthesis of polymer S-31 (preparation of binder solution S-31)]

A fluorine-based copolymer S-31 was synthesized to prepare a binder solution S-31 (concentration: 10% by mass) consisting of this fluorine-based copolymer.

Specifically, 90 parts by mass of N-methylpyrrolidone and 10 parts by mass of the polymer precursor (S-30) were added to a 300 mL three-necked flask equipped with a reflux condenser and a gas introduction cock and dissolved. Then, nitrogen gas was introduced at a flow rate of 200 mL/min for 10 minutes, the temperature was subsequently raised to 75°C, and then 3 parts by mass of 6-mercapto-1-hexanol and 0.6 parts by mass of azobisisobutyronitrile (manufactured by FUJIFILM Wako Pure Chemical Corporation) were added and stirring was continued for 5 hours. Then, 7 parts by mass of maleic acid anhydride was added, and stirring was further carried out for 2 hours. Then, the mixture was added dropwise to hexane to obtain a fluorine-based copolymer S-31 as a precipitate. After drying under reduced pressure at 60°C for 5 hours, the precipitate was redissolved in any solvent. The obtained fluorine-based copolymer was dissolved in butyl butyrate to obtain a binder solution S-31 (concentration: 10% by mass).

[Synthesis Example 32: Synthesis of polymer S-32 (preparation of binder solution S-32)]

A fluorine-based copolymer S-32 was synthesized to prepare a binder solution S-32 (concentration: 10% by mass) consisting of this fluorine-based copolymer.

Specifically, 90 parts by mass of N-methylpyrrolidone and 10 parts by mass of the polymer precursor (S-28) were added to a 300 mL three-necked flask equipped with a reflux condenser and a gas introduction cock and dissolved. Then, nitrogen gas was introduced at a flow rate of 200 mL/min for 10 minutes, the temperature was subsequently raised to 75°C, and then 22 parts by mass of 1H,1H,2H,2H-perfluorodecanethiol and 1 part by mass of azobisisobutyronitrile (manufactured by FUJIFILM Wako Pure Chemical Corporation) were added and stirring was continued for 5 hours. Then, the mixture was added dropwise to hexane to obtain a fluorine-based copolymer S-32 as a precipitate. After drying under reduced pressure at 60°C for 5 hours, the precipitate was redissolved in any solvent. The obtained fluorine-based copolymer was dissolved in butyl butyrate to obtain a binder solution S-32 (concentration: 10% by mass).

[Synthesis Example 33: Synthesis of polymer S-33 (preparation of binder solution S-33)]

A fluorine-based copolymer S-33 was synthesized to prepare a binder solution S-26 (concentration: 10% by mass) consisting of this fluorine-based copolymer.

Specifically, 90 parts by mass of N-methylpyrrolidone and 10 parts by mass of the fluorine-based copolymer S-20 synthesized in Synthesis Example 20 were added to a 300 mL three-necked flask equipped with a reflux condenser and a gas introduction cock and dissolved. Then, 47.3 parts by mass of lauryl acrylate (manufactured by FUJIFILM Wako Pure Chemical Corporation), 22.8 parts by mass of 1H,1H,2H,2H-tridecafluoro-n-octyl methacrylate (manufactured by Tokyo Chemical Industry Co., Ltd.), 0.1 parts by mass of copper chloride (manufactured by FUJIFILM Wako Pure Chemical Corporation), and 0.5 parts by mass of 4,4'-dimethyl-2,2'-bipyridyl were added to. After bubbling nitrogen gas for 10 minutes, nitrogen gas was introduced at a flow rate of 50 mL/min, the temperature was raised to 100°C, and stirring was continued for 18 hours. Then, the mixture was added dropwise to hexane to obtain a fluorine-based copolymer S-33 as a precipitate. After drying under reduced pressure at 60°C for 5 hours, the precipitate was redissolved in any solvent. The obtained fluorine-based copolymer was dissolved in butyl butyrate to obtain a binder solution S-33 (concentration: 10% by mass).

[Synthesis Example 34: Synthesis of polymer S-34 (preparation of binder solution S-34)]

A fluorine-based copolymer S-34 was synthesized to prepare a binder solution S-34 (concentration: 10% by mass) consisting of this fluorine-based copolymer.

Specifically, 180 parts by mass of tetrahydrofuran and 20 parts by mass of the fluorine-based copolymer S-20 synthesized in Synthesis Example 20 were added to a 500 mL three-necked flask equipped with a reflux condenser, and 0.12 g of lithium hydroxide and 40 g of methanol were added thereto and stirred at 60°C for 6 hours. Then, the mixture was added dropwise to water, the precipitate was filtered and subjected to vacuum drying to obtain a polymer precursor A (S-34).

Next, 135 parts by mass of N-methylpyrrolidone and 15 parts by mass of the polymer precursor A (S-34) were added to a 300 mL three-necked flask equipped with a reflux condenser and a gas introduction cock and dissolved. Then, nitrogen gas was introduced at a flow rate of 200 mL/min for 10 minutes, the temperature was subsequently raised to 75°C, and then 14 parts by mass of decanedithiol and 0.8 parts by mass of azobisisobutyronitrile (manufactured by FUJIFILM Wako Pure Chemical Corporation) were added and stirring was continued for 5 hours. Then, the mixture was added dropwise to hexane to obtain a polymer precursor B (S-34) as a precipitate.

Next, 90 parts by mass of N-methylpyrrolidone and 10 parts by mass of the polymer precursor B (S-34) were added to a 300 mL three-necked flask equipped with a reflux condenser and a gas introduction cock and dissolved. Then, 2 parts by mass of lauryl acrylate (manufactured by FUJIFILM Wako Pure Chemical Corporation), 1 part by mass of 1H,1H,2H,2H-tridecafluoro-n-octyl methacrylate (manufactured by Tokyo Chemical Industry Co., Ltd.), and 0.1 parts by mass of azobisbutyronitrile (manufactured by FUJIFILM Wako Pure Chemical Corporation) were added thereto. After introducing nitrogen gas at a flow rate of 200 mL/min for 10 minutes, the temperature was raised to 75°C, and stirring was continued for 5 hours. Then, the mixture was added dropwise to hexane to obtain a fluorine-based copolymer S-34 as a precipitate. After drying under reduced pressure at 60°C for 5 hours, the precipitate was redissolved in any solvent. The obtained fluorine-based copolymer was dissolved in butyl butyrate to obtain a binder solution S-34 (concentration: 10% by mass).

[Synthesis Examples 35 and 36: Synthesis of polymers T-1 and T-3 (preparation of binder dispersion liquid T-1 and binder dispersion liquid T-3)]

Each of polymers T-1 and T-3 (both are polyurethane) was synthesized in the same manner as in Synthesis Example 1, and each of a binder solution T-1 consisting of the polymer T-1 and a binder solution T-3 consisting of the polymer T-3 was obtained except that in Synthesis Example 1, a compound from which each constitutional component is derived was used so that each of the polymers T-1 and T-3 had the composition (the kind and the content of the constitutional component) shown in Table 1. The average particle diameter of the binder in the dispersion liquid T-3 was 120 nm.

[Synthesis Example 37: Synthesis of polymer T-2 (preparation of binder dispersion liquid T-2)]

A polymer T-2 (a (meth)acrylic polymer) was synthesized in the same manner as in Synthesis Example 4, and a binder dispersion liquid T-2 consisting of the polymer T-2 was obtained except that in Synthesis Example 4, a compound from which each constitutional component is derived was used so that the polymer T-2 had the composition (the kind and the content of the constitutional component) shown in Table 1. The average particle diameter of the binder in the dispersion liquid T-2 was 180 nm.

[Synthesis Example 38: Synthesis of polymer D-1 (preparation of binder dispersion liquid D-1)]

To a 100 mL volumetric flask, 11.7 g of mono(2-acryloyloxyethyl) succinate (manufactured by Tokyo Chemical Industry Co., Ltd.) and 0.17 g of a polymerization initiator V-601 (product name, manufactured by FUJIFILM Wako Pure Chemical Corporation) were added and dissolved in 13.6 g of butyl butyrate to prepare a monomer solution. To a 200 mL three-necked flask, 10.2 g of a macromonomer was added, dissolved in 16.9 g of butyl butyrate, and stirred at 80°C, and then the above monomer solution was added dropwise thereto over 2 hours. After completion of the dropwise addition, the mixture was stirred at 80°C for 2 hours, and then heated to 90°C and stirred for 2 hours to prepare a dispersion liquid D-1 of a (meth)acrylic polymer. The mass average molecular weight of the polymer D-1 obtained in this manner was 95,000, and the SP value thereof was 21.5. The average particle diameter of the binder in the dispersion liquid D-1 was 160 nm.

(Synthesis of macromonomer)

To a 1 L graduated cylinder, 130.2 g of ethyl methacrylate (manufactured by Tokyo Chemical Industry Co., Ltd.), 330.7 g of dodecyl methacrylate (manufactured by Tokyo Chemical Industry Co., Ltd.), 4.5 g of 3-mercaptopropionic acid, and 4.61 g of a polymerization initiator V-601 (manufactured by FUJIFILM Wako Pure Chemical Corporation) were added and stirred to be dissolved, whereby a monomer solution was prepared. To a 2 L three-necked flask, 465.5 g of toluene (manufactured by FUJIFILM Wako Pure Chemical Corporation) was added and stirred at 80°C, and then the above monomer solution was added dropwise thereto over 2 hours. After completion of the dropwise addition, stirring was carried out at 80°C for 2 hours, and then the temperature was raised to 90°C and stirring was carried out for 2 hours. 275 mg of 2,2,6,6-tetramethylpiperidin 1-oxyl (manufactured by FUJIFILM Wako Pure Chemical Corporation), 27.5 g of glycidyl methacrylate (manufactured by Tokyo Chemical Industry Co., Ltd.), and 5.5 g of tetrabutylammonium bromide (manufactured by FUJIFILM Wako Pure Chemical Corporation) were added thereto, and the mixture was stirred at 120°C for 3 hours. After allowing the solution to stand at room temperature, it was poured into 1,800 g of methanol to remove the supernatant. Butyl butyrate was added thereto, and methanol was distilled off under reduced pressure to obtain a butyl butyrate solution of a macromonomer. The solid content concentration thereof was 48.9%.

The mass average molecular weight of the macromonomer obtained in this manner was 10,000, and the SP value thereof was 18.7.

Table 1 shows the composition, the SP value, the presence or absence of the functional group, the mass average molecular weight of each of the synthesized polymers, and the form (solution or dispersion liquid) of the binder in the composition described later. The SP value and the mass average molecular weight of each of the polymers were measured according to the above method. In a case where two kinds of constitutional components corresponding to the specific constitutional component are contained, they are indicated together using "/".

Each of the polymers synthesized is shown below. The number at the bottom right of each constitutional component indicates the content (% by mole). In S-21 to S-34 (excluding S-26 and S-33), the constitutional components other than VDF, HPF, and TFE, which are indicated by "*" in Table 1, are a mixture of positional isomers in which the substitution (the introduction) positions of dodecanethiol or the like are different.

S-1
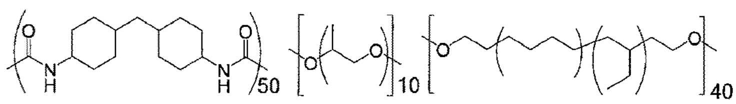

S-2
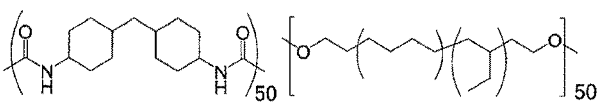

S-3
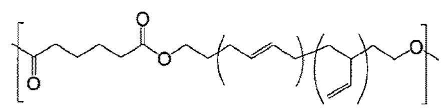

S-4
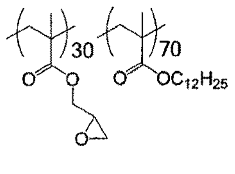

S-5
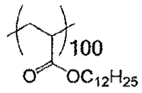

S-6
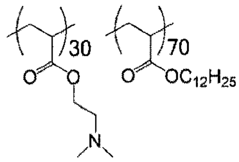

S-7
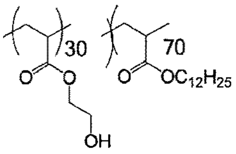

S-8
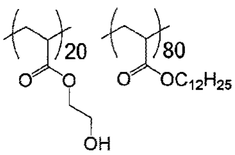

S-9
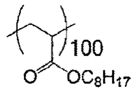

S-10
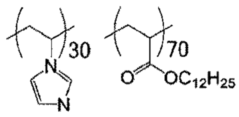

S-11
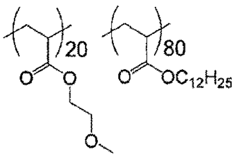

S-12
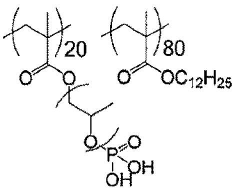

S-13
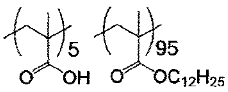

S-14
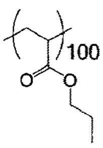

S-15
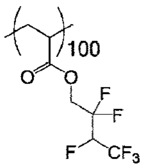

S-16
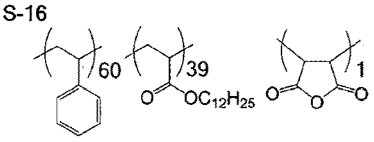

S-17
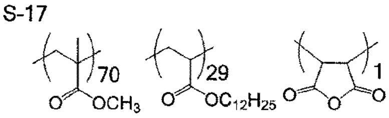

S-18
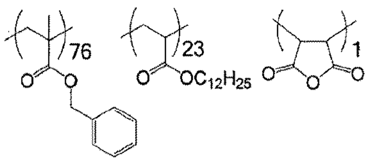

S-19

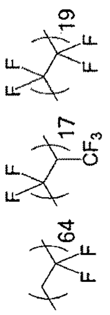

S-20

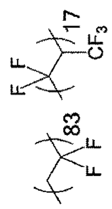

S-21

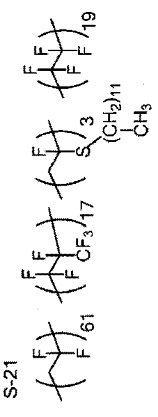

S-22

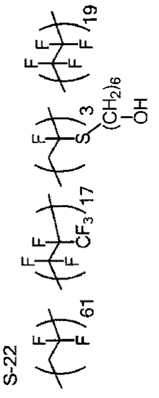

S-23

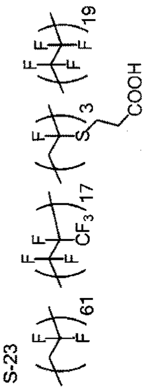

S-24

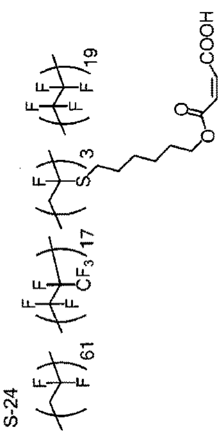

S-25

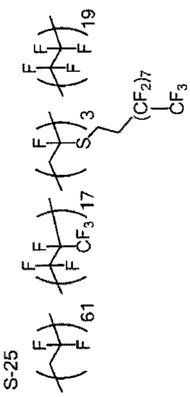

S-26

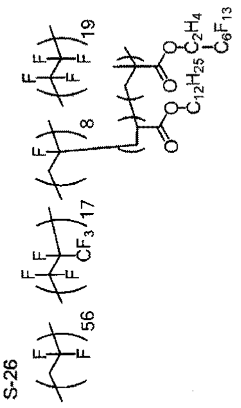

S-27

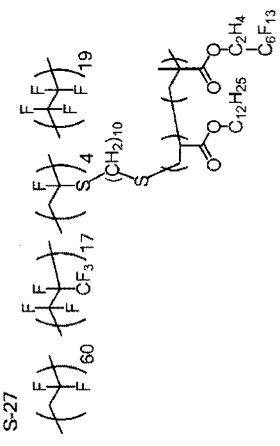

S-28

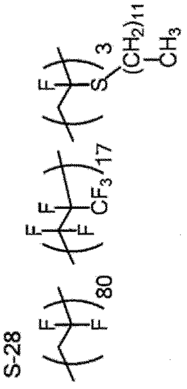

S-29

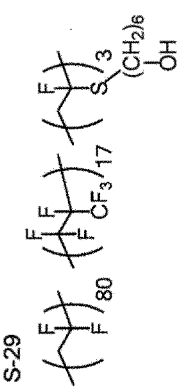

S-30

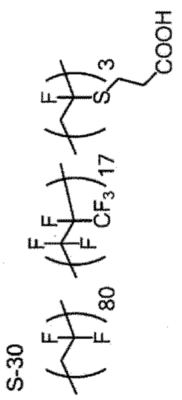

S-31

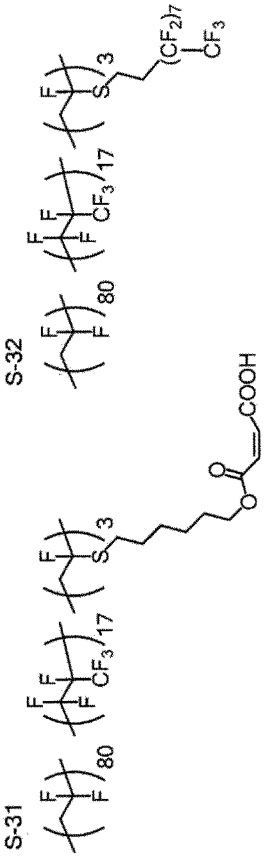

S-32

S-33

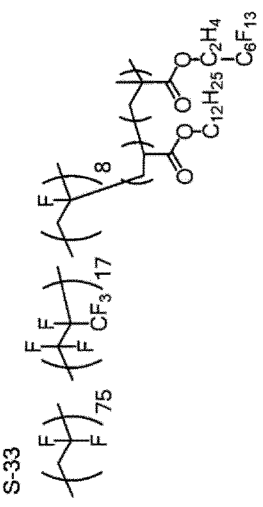

S-34

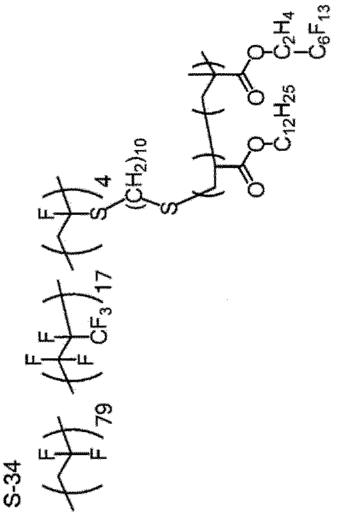

S-35

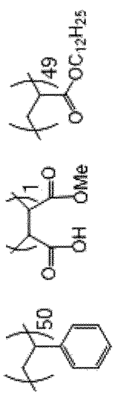

T-1

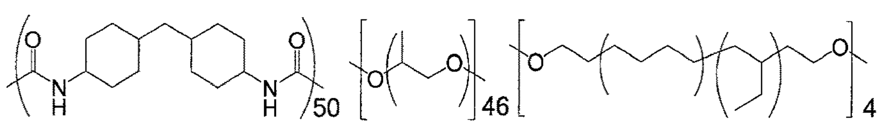

T-2

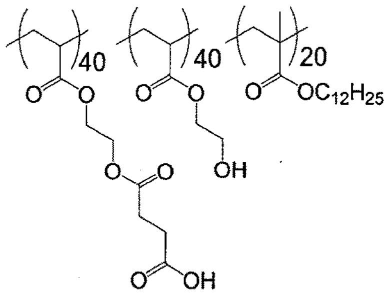

T-3

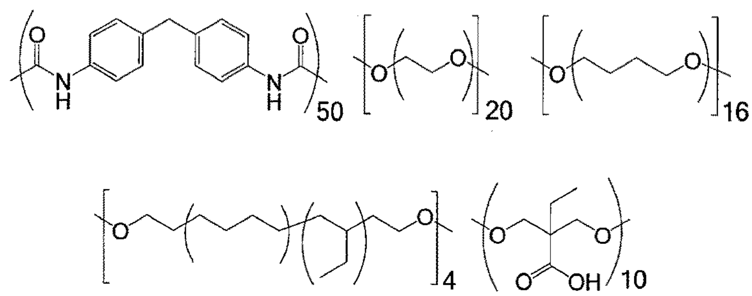

D-1

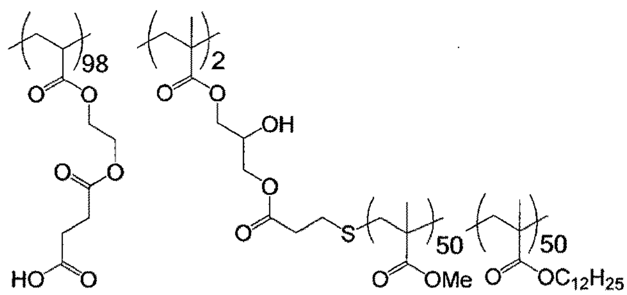

[Table 1-1]

| No. | Constitutional component M1 | Content (% by mole) | Constitutional component M2 | Content (% by mole) | Constitutional component M3 | Content (% by mole) | Constitutional component M4 | Content (% by mole) | SP value (Mpa$^{1/2}$) | Functional group | Mass average molecular weight | Form |
|---|---|---|---|---|---|---|---|---|---|---|---|---|
| S-1 | H12MDI | 50 | NISSO-PB GI1000 | 40 | - | - | PPG400 | 10 | 18.2 | Urethane bond | 55000 | Solution |
| S-2 | H12MDI | 50 | NISSO-PB GI1000 | 50 | - | - | - | - | 17.6 | Urethane bond | 43000 | Solution |
| S-3 | Dimethyl adipate | 50 | NISSO-PB G3000 | 50 | - | - | - | - | 18.7 | Ester bond | 110000 | Solution |
| S-4 | GMA | 30 | LMA | 70 | - | - | - | - | 19.1 | Heterocyclic group | 78000 | Solution |
| S-5 | - | - | LA | 100 | - | - | - | - | 18.8 | - | 97000 | Solution |
| S-6 | DmEA | 30 | LA | 70 | - | - | - | - | 18.6 | Amino group | 81000 | Solution |
| S-7 | HEA | 30 | LA | 70 | - | - | - | - | 20.4 | Hydroxy group | 87000 | Dispersion liquid |
| S-8 | HEA | 20 | LA | 80 | - | - | - | - | 19.9 | Hydroxy group | 75000 | Solution |
| S-9 | - | - | OA | 100 | - | - | - | - | 18.4 | - | 83000 | Solution |
| S-10 | VI | 30 | LA | 70 | - | - | - | - | 19.2 | Heterocyclic group | 67000 | Solution |
| S-11 | MEA | 20 | LA | 80 | - | - | - | - | 19.1 | Ether bond | 75000 | Solution |
| S-12 | Phosmer PP | 20 | LMA | 80 | - | - | - | - | 19.8 | Phosphate group | 75000 | Solution |
| S-13 | MA | 5 | LMA | 95 | - | - | - | - | 18.5 | Carboxy group | 80000 | Solution |
| S-14 | PA | 100 | - | - | - | - | - | - | 19.8 | - | 90000 | Solution |
| S-15 | - | - | HFBA | 100 | - | - | - | - | 13.0 | - | 72000 | Solution |
| S-16 | St/MAA | 60/1 | LA | 39 | - | - | - | - | 19.2 | Aryl group Anhydrous carboxylic acid group | 67000 | Solution |

(continued)

| No. | Constitutional component M1 | Content (% by mole) | Constitutional component M2 | Content (% by mole) | Constitutional component M3 | Content (% by mole) | Constitutional component M4 | Content (% by mole) | SP value ($Mpa^{1/2}$) | Functional group | Mass average molecular weight | Form |
|---|---|---|---|---|---|---|---|---|---|---|---|---|
| S-17 | MMA/MAA | 70/1 | LA | 29 | - | - | - | - | 19.1 | Anhydrous carboxylic acid group | 53000 | Solution |
| S-18 | BnMA/MAA | 76/1 | LA | 23 | - | - | - | - | 19.6 | Aryl group Anhydrous carboxylic acid group | 63000 | Solution |

[Table 1-2]

| No. | Constitutional component M1 | Content (% by mole) | Constitutional component M2 | Content (% by mole) | Constitutional component M3 | Content (% by mole) | Constitutional component M4 | Content (% by mole) | SP value (MPa$^{1/2}$) | Functional group | Mass average molecular weight | Form |
|---|---|---|---|---|---|---|---|---|---|---|---|---|
| S-19 | VDF/HFP/TFE | 64/17/19 | - | - | - | - | - | - | 11.7 | - | 250000 | Solution |
| S-20 | VDF/HFP | 83/17 | - | - | - | - | - | - | 12.4 | - | 180000 | Solution |
| S-21 | VDF/HFP/*/TFE | 61/17/3/19 | - | - | - | - | - | - | 12.7 | - | 260000 | Solution |
| S-22 | VDF/HFP/*/TFE | 61/17/3/19 | - | - | - | - | - | - | 12.9 | Hydroxy group | 270000 | Solution |
| S-23 | VDF/HFP/*/TFE | 61/17/3/19 | - | - | - | - | - | - | 12.4 | Carboxy group | 270000 | Solution |
| S-24 | VDF/HFP/*/TFE | 61/17/3/19 | - | - | - | - | - | - | 13.0 | Ester bond Carboxy group | 260000 | Solution |
| S-25 | VDF/HFP/*/TFE | 61/17/3/19 | - | - | - | - | - | - | 11.8 | Fluoroalkyl group | 250000 | Solution |
| S-26 | VDF/HFP/*/TFE | 63/17/1/19 | - | - | - | - | - | - | 14.7 | Fluoroalkyl group | 300000 | Solution |
| S-27 | VDF/HFP/*/TFE | 63/17/1/19 | - | - | - | - | - | - | 13.8 | Fluoroalkyl group | 280000 | Solution |
| S-28 | VDF/HFP/* | 80/17/3 | - | - | - | - | - | - | 13.2 | - | 180000 | Solution |
| S-29 | VDF/HFP/* | 80/17/3 | - | - | - | - | - | - | 13.5 | Hydroxy group | 190000 | Solution |
| S-30 | VDF/HFP/* | 80/17/3 | - | - | - | - | - | - | 12.9 | Carboxy group | 190000 | Solution |
| S-31 | VDF/HFP/* | 80/17/3 | - | - | - | - | - | - | 13.5 | Ester bond Carboxy group | 200000 | Solution |
| S-32 | VDF/HFP/* | 80/17/3 | - | - | - | - | - | - | 12.3 | Fluoroalkyl group | 190000 | Solution |

(continued)

| No. | Constitutional component M1 | Content (% by mole) | Constitutional component M2 | Content (% by mole) | Constitutional component M3 | Content (% by mole) | Constitutional component M4 | Content (% by mole) | SP value ($MPa^{1/2}$) | Functional group | Mass average molecular weight | Form |
|---|---|---|---|---|---|---|---|---|---|---|---|---|
| S-33 | VDF/HFP/* | 82/17/1 | - | - | - | - | - | - | 14.9 | Fluoroalkyl group | 240000 | Solution |
| S-34 | VDF/HFP/* | 82/17/1 | - | - | - | - | - | - | 14.1 | Fluoroalkyl group | 220000 | Solution |
| S-35 | St/MAA | 77/1 | LA | 22 | - | - | - | - | 19.1 | Aryl group Carboxy group | 81000 | Solution |
| T-1 | H12MDI | 50 | NISSO-PB GI1000 | 4 | - | - | PPG400 | 46 | 20.2 | Urethane bond | 65000 | Solution |
| T-2 | AEHS/HEA | 40/40 | LMA | 20 | - | - | - | - | 22.8 | Hydroxy group Carboxy group Ester bond | 120000 | Dispersion liquid |
| T-3 | MDI | 50 | NISSO-PB GI1000 | 4 | DMBA | 10 | PEG200/ PTMG250 | 20/16 | 21.0 | Urethane bond Carboxy group | 50000 | Dispersion liquid |

<Abbreviations in table>

In the table, "-" in the column of the constitutional component indicates that the constitutional component does not have a corresponding constitutional component.

In the table, "*" in the column of the constitutional component indicates a constitutional component other than VDF, HPF, and TFE in each of the above copolymers.

- Constitutional component M1 -

In a case of a sequential polymerization type polymer, the constitutional component M1 represents a constitutional component represented by Formula (I-1) (a constitutional component having a functional group selected from the Group (a) of functional groups), and in a case of a (meth)acrylic polymer or the like, it represents a constitutional component other than the constitutional component represented by Formula (1-1) (a constitutional component having a functional group selected from the Group (a) of functional groups and another constitutional component).

H12MDI: Dicyclohexylmethane 4,4'-diisocyanate (manufactured by Tokyo Chemical Industry Co., Ltd., SP value: 22.4)
Dimethyl adipate (manufactured by Tokyo Chemical Industry Co., Ltd., SP value: 20.1)
GMA: Glycidyl methacrylate (manufactured by Tokyo Chemical Industry Co., Ltd., SP value: 22.2)
DmEA: Ethyl (N,N-dimethylamino)acrylic acid (manufactured by Tokyo Chemical Industry Co., Ltd., SP value: 18.1)
HEA: 2-Hydroxyethyl acrylate (manufactured by FUJIFILM Wako Pure Chemical Corporation, SP value: 25.9)
VI: Vinyl imidazole (manufactured by Tokyo Chemical Industry Co., Ltd., SP value: 20.8)
MEA: Methoxyethyl acrylate (manufactured by Tokyo Chemical Industry Co., Ltd., SP value: 20.9)
Phosmer PP: Acid, phosphoroxy, polyoxy, propylene glycol, monomethacrylate (manufactured by Uni-Chemical Co. Ltd., SP value: 21.4)
MA: Methacrylic acid (manufactured by Tokyo Chemical Industry Co., Ltd., SP value: 19.0)
PA: Propyl acrylate (manufactured by Tokyo Chemical Industry Co., Ltd., SP value: 19.8)
St: Styrene (manufactured by FUJIFILM Wako Pure Chemical Corporation, SP value: 19.3)
MAA: maleic acid anhydride (manufactured by FUJIFILM Wako Pure Chemical Corporation, SP value: 26.9)
MMA: Methyl methacrylate (manufactured by Tokyo Chemical Industry Co., Ltd., SP value: 19.4)
BnMA: Benzyl methacrylate (manufactured by Tokyo Chemical Industry Co., Ltd., SP value: 20.0)
AEHS: Mono(2-acryloyloxyethyl) succinate (manufactured by Tokyo Chemical Industry Co., Ltd., SP value: 21.8)
MDI: Diphenylmethane diisocyanate (manufactured by FUJIFILM Wako Pure Chemical Corporation, SP value: 26.1)
VDF: Vinylidene fluoride (SP value: 13.1)
HFP: Hexafluoropropene (SP value: 10.1)
TFE: Tetrafluoroethylene (SP value: 10.1)
* is as described above.

- Constitutional component M2 -

In a case of a sequential polymerization type polymer, the constitutional component M2 represents a constitutional component represented by Formula (1-2), and in a case of a (meth)acrylic polymer, it represents a constitutional component represented by Formula (1-1).

NISSO-PB GI1000: Liquid-state hydrogenated polybutadiene diol (product name, number average molecular weight: 1,400, manufactured by NIPPON SODA Co., Ltd., SP value: 17.4)
NISSO-PB G3000: Liquid-state hydrogenated polybutadiene diol (product name, number average molecular weight: 3,000, manufactured by NIPPON SODA Co., Ltd., SP value: 17.8)
LMA: Dodecyl methacrylate (manufactured by Tokyo Chemical Industry Co., Ltd., SP value: 18.5)
LA: Dodecyl acrylate (manufactured by Tokyo Chemical Industry Co., Ltd., SP value: 18.8)
OA: Octyl acrylate (manufactured by Tokyo Chemical Industry Co., Ltd., SP value: 18.4)
HFBA: Acrylic acid 2,2,3,4,4,4-hexafluorobutyl (manufactured by Tokyo Chemical Industry Co., Ltd., SP value: 13.0)

- Constitutional component M3 -

In a case of a sequential polymerization type polymer, the constitutional component M3 represents a constitutional component represented by Formula (I-3A) (a constitutional component having a functional group selected from the Group (a) of functional groups). However, regarding the content, the following is satisfied; the content of the constitutional component M1 ≥ the content of the constitutional component M3.

DMBA: 2,2-bis(hydroxymethyl)butyric acid (manufactured by Tokyo Chemical Industry Co., Ltd. SP value: 23.7)

- Constitutional component M4 -

In a case of a sequential polymerization type polymer, the constitutional component M4 represents a constitutional component represented by Formula (I-3B).

PPG400: Polypropylene glycol (number average molecular weight: 400, manufactured by FUJIFILM Wako Pure Chemical Corporation, SP value: 20.6)
PEG 200: polyethylene glycol (number average molecular weight: 200, manufactured by Fujifilm Wako Pure Chemical Corporation, SP value: 22.6)
PTMG250: Polytetramethylene glycol (number average molecular weight: 250, manufactured by Sigma-Aldrich Co., LLC, SP value: 20.7)

A solution of a low adsorption binder consisting of a commercially available polymer was prepared as follows.

[Preparation Example 1: Preparation of low adsorption binder solution UFB consisting of fluorine-containing polymer]

PVdF-HFP: Kynar Flex Ultraflex B (product name, manufactured by Arkema S.A.) was dissolved in butyl butyrate to prepare a low adsorption binder solution UFB having a solid content concentration of 3% by mass.

The SP value of PVdF-HFP was 12.4 ($MPa^{1/2}$), the mass average molecular weight thereof was 200,000, and the copolymerization ratio [PVdF:HFP] (mass ratio) was 58:42. It is noted that PVdF-HFP does not have a functional group included in the Group (a) of functional groups.

[Preparation Example 2: Preparation of low adsorption binder solution T938 consisting of fluorine-containing polymer]

PVdF-HFP-TFE: TECNOFLON (product name, manufactured by Solvay S.A.) was dissolved in butyl butyrate to prepare a low adsorption binder solution T938 having a solid content concentration of 3% by mass.

The SP value of PVdF-HFP-TFE was 11.8 ($MPa^{1/2}$), the mass average molecular weight thereof was 180,000, and the copolymerization ratio [PVdF:HFP:TFE] (mass ratio) was 48:32:20. It is noted that PVdF-HFP-TFE does not have a functional group included in the Group (a) of functional groups.

[Preparation Example 3: Preparation of low adsorption binder solution H1041 consisting of hydrocarbon-based polymer]

Tuftec (registered trade name) H1041: A hydrogenated styrene-based thermoplastic elastomer (product name, SEBS, manufactured by Asahi Kasei Corporation) was dissolved in butyl butyrate to prepare a low adsorption binder solution H1041 having a solid content concentration of 10% by mass.

The SP value of the hydrogenated styrene-based thermoplastic elastomer was 18.0 ($MPa^{1/2}$), the mass average molecular weight thereof was 100,000, and the styrene/ethylene-butylene ratio was 30/70. It is noted that the hydrogenated styrene-based thermoplastic elastomer does not have a functional group included in the Group (a) of functional groups.

[Preparation Example 4: Preparation of low adsorption binder solution M1911 consisting of hydrocarbon-based polymer]

Tuftec (registered trade name) M1911: A maleic acid anhydride-modified hydrogenated styrene-based thermoplastic elastomer (product name, SEBS, manufactured by Asahi Kasei Corporation) was dissolved in butyl butyrate to prepare a low adsorption binder solution M1911 having a solid content concentration of 10% by mass.

The SP value of the maleic acid anhydride-modified hydrogenated styrene-based thermoplastic elastomer was 18.0 ($MPa^{1/2}$), the mass average molecular weight thereof was 120,000, the styrene/ethylene-butylene ratio was 30/70, and the amount of maleic acid anhydride modification (the content of the constitutional component having a maleic acid anhydride group) was 0.4% by mole. It is noted that the maleic acid anhydride-modified hydrogenated styrene-based thermoplastic elastomer has an anhydrous carboxylic acid group included in the Group (a) of functional groups.

2. Synthesis of sulfide-based inorganic solid electrolyte [Synthesis Example A]

A sulfide-based inorganic solid electrolyte was synthesized with reference to a non-patent document of T. Ohtomo, A. Hayashi, M. Tatsumisago, Y. Tsuchida, S. Hama, K. Kawamoto, Journal of Power Sources, 233, (2013),

pp. 231 to 235 and A. Hayashi, S. Hama, H. Morimoto, M. Tatsumisago, T. Minami, Chem. Lett., (2001), pp. 872 and 873.

Specifically, in a globe box under an argon atmosphere (dew point: -70°C), lithium sulfide ($Li_2S$, manufactured by Sigma-Aldrich Co., LLC Co., LLC Co., LLC, purity: > 99.98%) (2.42 g) and diphosphorus pentasulfide ($P_2S_5$, manufactured by Sigma-Aldrich Co., LLC Co., LLC Co., LLC, purity: > 99%) (3.90 g) each were weighed, put into an agate mortar, and mixed using an agate muddler for five minutes. The mixing ratio between $Li_2S$ and $P_2S_5$ ($Li_2S:P_2S_5$) was set to 75:25 in terms of molar ratio.

Next, 66 g of zirconia beads having a diameter of 5 mm were put into a 45 mL container made of zirconia (manufactured by FRITSCH), the entire amount of the mixture of the above lithium sulfide and the diphosphorus pentasulfide was put thereinto, and the container was completely sealed in an argon atmosphere. The container was set in a planetary ball mill P-7 (product name, manufactured by FRITSCH), mechanical milling was carried out at a temperature of 25°C and a rotation speed of 510 rpm for 20 hours, thereby obtaining yellow powder (6.20 g) of a sulfide-based inorganic solid electrolyte (Li-P-S-based glass, hereinafter, may be referred to as LPS). The particle diameter of the Li-P-S-based glass was 15 μm.

[Example 1]

Each of the compositions shown in Tables 2-1 to 2-5 (collectively may be referred to as Table 2) was prepared as follows.

<Preparation of inorganic solid electrolyte-containing composition>

60 g of zirconia beads having a diameter of 5 mm was put into a 45 mL container made of zirconia (manufactured by FRITSCH), and the following materials were further put into the container; 8.4 g of LPS synthesized in the above Synthesis Example A or LLT, 0.6 g or 0.4 g (solid content mass) of the polymer binder solution or dispersion liquid shown in Table 2, furthermore 0.2 g (solid content mass) of the particulate binder dispersion liquid shown in Table 2 in a case where 0.4 g of the polymer binder solution or dispersion liquid is used, and 11 g of butyl butyrate as a dispersion medium. Then, this container was set in a planetary ball mill P-7 (product name) manufactured by FRITSCH. Mixing was carried out at a temperature of 25°C and a rotation speed of 150 rpm for 10 minutes to prepare each of inorganic solid electrolyte-containing compositions (slurries) K-1 to K-49 and Kc-11 to Kc-13.

The inorganic solid electrolyte-containing compositions K-46 to K-49 are compositions prepared using the two kinds of low adsorption binders shown in Table 2-2, where 0.4 g of the binder solution S-13 in terms of solid content mass and 0.2 g of the other binder solution shown in Table 2-2 in terms of solid content mass were used.

<Preparation of composition for positive electrode>

60 g of zirconia beads having a diameter of 5 mm were put into a 45 mL container made of zirconia (manufactured by FRITSCH), and then 8 g of LPS synthesized in Synthesis Example A, and 13 g (total amount) of butyl butyrate as a dispersion medium were put into the above container. The container was set in a planetary ball mill P-7 (product name, manufactured by FRITSCH) and the components were stirred for 30 minutes at 25°C and a rotation speed of 200 rpm. Then, the following materials were put into this container; 27.5 g of NMC (manufactured by Sigma-Aldrich Co., LLC) as the positive electrode active material, 1.0 g of acetylene black (AB) as the conductive auxiliary agent, 0.5 g of the polymer binder solution or dispersion liquid shown in Table 2 (solid content mass), and furthermore, 0.5 g (solid content mass) of the particulate binder dispersion liquid shown in Table 2 in a case where 12.5 g of butyl butyrate is used in PK-4 to PK-8, PK-16, and PK-17. Then, the container was set in a planetary ball mill P-7, and mixing was continued for 30 minutes at a temperature of 25°C and a rotation speed of 200 rpm to prepare each of compositions (slurries) PK-1 to PK-17 for a positive electrode.

The compositions PK-9 and PK-10 for a positive electrode are compositions prepared using the two kinds of low adsorption binders shown in Table 2-3, where 12.5 g of butyl butyrate was used and 0.5 g of each of the binder solutions in terms of solid content mass was used.

<Preparation of composition for negative electrode>

60 g of zirconia beads having a diameter of 5 mm was put into a 45 mL container made of zirconia (manufactured by FRITSCH), and the following materials were further put into the container; 8.0 g or 7.6 g of LPS synthesized in the above Synthesis Example A, 0.4 g (solid content mass) of the polymer binder solution or dispersion liquid shown in Table 2, furthermore 0.4 g (solid content mass) of the particulate binder dispersion liquid shown in Table 2 in a case where 7.6 g of LPS is used in NK-4 to NK-8, NK-31, and NK-32, and 17.5 g of the dispersion medium shown in Table 2. The container was set in a planetary ball mill P-7 (product name, manufactured by FRITSCH) and the components

were mixed for 60 minutes at a temperature of 25°C and a rotation speed of 300 rpm. Then, 9.5 g of silicon (Si, manufactured by Sigma-Aldrich Co., LLC) as the negative electrode active material and 1.0 g of VGCF (manufactured by Showa Denko K.K.) as the conductive auxiliary agent, or 10.5 g of graphite as the negative electrode active material was put into the container. Similarly, the container was subsequently set in a planetary ball mill P-7, and mixing was carried out at 25°C for 10 minutes at a rotation speed of 100 rpm to prepare each of compositions (slurries) NK-1 to NK-33 and NKc21 to NKc23 for a negative electrode.

The compositions NK-9 and NK-10 for a negative electrode are compositions prepared using the two kinds of low adsorption binders shown in Table 2-4, where 7.6 g of LPS was used and 0.4 g of each of the binder solutions in terms of solid content mass was used.

Regarding each of the prepared binders, the adsorption rate $A_{SE}$ with respect to the inorganic solid electrolyte (the inorganic solid electrolyte used for the preparation of each of the compositions) shown in Table 2 and the adsorption rate $A_{AM}$ with respect to the active material (the active material used for the preparation of each of the compositions) shown in the same table were measured according to the following method. In addition, regarding each of the compositions, the difference (in terms of absolute value) between the SP value of the polymer that forms the low adsorption binder and the SP value of the dispersion medium was calculated. The results are shown in Table 2. Further, Table 2 shows the results of measuring the contact angle (°) of the dispersion medium used in each of the compositions with respect to the polymer film prepared with the polymer that forms the binder used in each of the compositions, according to the above method.

In Table 2, the composition content is the content (% by mass) with respect to the total mass of the composition, and the solid content is the content (% by mass) with respect to 100% by mass of the solid content of the composition. The unit is omitted in the table.

In addition, Table 2 shows the SP values of the polymers that form the low adsorption binder, and dispersion media. The unit of the SP value is $MPa^{1/2}$; however, the description thereof is omitted in Table 2.

[Measurement of adsorption rate $A_{SE}$ of binder to inorganic solid electrolyte]

The adsorption rate $A_{SE}$ was measured using the inorganic solid electrolyte, the polymer binder, and the dispersion medium, which had been used in the preparation of each of the inorganic solid electrolyte-containing compositions shown in Table 2.

That is, a polymer binder (a low adsorption binder or a particulate binder) was dissolved in a dispersion medium to prepare a binder solution having a concentration of 1% by mass. It is noted that regarding the polymers S-7, T-2, T-3, and D-1, binder dispersion liquids having a concentration of 1% by mass were used. The binder solid or dispersion liquid and the inorganic solid electrolyte were put into a 15 ml of vial at a proportion such that the ratio of this binder solution or binder in the dispersion liquid to the inorganic solid electrolyte was 42:1, and stirred for 1 hour with a mix rotor at room temperature and a rotation speed of 80 rpm, and then allowed to stand. The supernatant obtained by solid-liquid separation was filtered through a filter having a pore diameter of 1 μm, and the entire amount of the obtained filtrate was dried to be solid, and then the mass of the polymer binder remaining in the filtrate (the mass of the polymer binder that had not adsorbed to the inorganic solid electrolyte) $W_A$ was measured. From this mass $W_A$ and the mass $W_B$ of the binder contained in the binder solution used for the measurement, the adsorption rate of the polymer binder with respect to the inorganic solid electrolyte was calculated according to the following expression.

The adsorption rate $A_{SE}$ of the polymer binder is the average value of the adsorption rates obtained by carrying out the above measurement twice.

$$\text{Adsorption rate (\%)} = [(W_B - W_A)/W_B] \times 100$$

It is noted that as a result of measuring the adsorption rate $A_{SE}$ using the inorganic solid electrolyte and the polymer binder, which had been extracted from the inorganic solid electrolyte layer formed into a film, and the dispersion medium which had been used for the preparation of the inorganic solid electrolyte-containing composition, the same value was obtained.

[Measurement of adsorption rate $A_{AM}$ of binder with respect to active material]

The adsorption rate $A_{AM}$ was measured using the active material, the polymer binder, and the dispersion medium, which had been used in the preparation of each of the compositions for an electrode shown in Table 2.

The adsorption rate $A_{AM}$ was measured in the same manner as in "Measurement of adsorption rate $A_{SE}$" described above, except that in "Measurement of adsorption rate $A_{SE}$" described above, the active material was used instead of the inorganic solid electrolyte.

It is noted that as a result of measuring the adsorption rate $A_{AM}$ using the active material and the polymer binder, which had been extracted from the active material layer formed into a film, and the dispersion medium which had been used for the preparation of the composition for an electrode, the same value was obtained.

[Table 2-1]

| | No. | Inorganic solid electrolyte | | | Binder solution or dispersion liquid | | | | | Dispersion medium | | | SP value difference | Contact angle θ(°) | Note |
|---|---|---|---|---|---|---|---|---|---|---|---|---|---|---|---|
| | | | Composition content | Solid content | | Composition content | Solid content | SP value | $A_{SE}$ (%) | | Composition content | SP value | | | |
| Inorganic solid electrolyte-containing composition | | LPS | 42 | 93 | S-1 | 3 | 7 | 18.2 | 58 | Butyl butyrate | 55 | 18.6 | 0.4 | 22 | Present invention |
| | K-2 | LPS | 42 | 93 | S-2 | 3 | 7 | 17.6 | 25 | Butyl butyrate | 55 | 18.6 | 1.0 | 30 | Present invention |
| | K-3 | LPS | 42 | 93 | S-3 | 3 | 7 | 18.7 | 0 | Butyl butyrate | 55 | 18.6 | 0.1 | 28 | Present invention |
| | K-4 | LPS | 42 | 93 | S-4 | 3 | 7 | 19.1 | 5 | Butyl butyrate | 55 | 18.6 | 0.5 | 17 | Present invention |
| | K-5 | LPS | 42 | 93 | S-5 | 3 | 7 | 18.8 | 0 | Butyl butyrate | 55 | 18.6 | 0.2 | 21 | Present invention |
| | K-6 | LPS | 42 | 93 | S-6 | 3 | 7 | 18.6 | 5 | Butyl butyrate | 55 | 18.6 | 0.0 | 19 | Present invention |
| | K-7 | LPS | 42 | 93 | S-7 | 3 | 7 | 20.4 | 2 | Butyl butyrate | 55 | 18.6 | 1.8 | 43 | Present invention |
| | K-8 | LPS | 42 | 93 | S-8 | 3 | 7 | 19.9 | 2 | Butyl butyrate | 55 | 18.6 | 1.3 | 36 | Present invention |
| | K-9 | LPS | 42 | 93 | S-9 | 3 | 7 | 18.4 | 0 | Butyl butyrate | 55 | 18.6 | 0.2 | 38 | Present invention |
| | K-10 | LPS | 42 | 93 | S-10 | 3 | 7 | 19.2 | 24 | Butyl butyrate | 55 | 18.6 | 0.6 | 18 | Present invention |
| | K-11 | LPS | 42 | 93 | S-11 | 3 | 7 | 19.1 | 10 | Butyl butyrate | 55 | 18.6 | 0.5 | 21 | Present invention |
| | K-1 | LPS | 42 | 93 | S-12 | 3 | 7 | 19.8 | 45 | Butyl butyrate | 55 | 18.6 | 1.2 | 41 | Present invention |
| | K-13 | LPS | 42 | 93 | S-13 | 3 | 7 | 18.5 | 8 | Butyl butyrate | 55 | 18.6 | 0.1 | 20 | Present invention |

(continued)

| | No. | Inorganic solid electrolyte | | | Binder solution or dispersion liquid | | | | | Dispersion medium | | | SP value difference | Contact angle θ(°) | Note |
|---|---|---|---|---|---|---|---|---|---|---|---|---|---|---|---|
| | | | Composition content | Solid content | | Composition content | Solid content | SP value | $A_{SE}$ (%) | | Composition content | SP value | | | |
| | K-14 | LPS | 42 | 93 | S-14 | 3 | 7 | 19.4 | 8 | Butyl butyrate | 55 | 18.6 | 0.8 | 24 | Present invention |
| | K-15 | LPS | 42 | 93 | S-15 | 3 | 7 | 13.0 | 0 | Butyl butyrate | 55 | 18.6 | 5.6 | 53 | Present invention |
| | K-16 | LPS | 42 | 93 | S-16 | 3 | 7 | 19.2 | 0 | Butyl butyrate | 55 | 18.6 | 0.6 | 18 | Present invention |
| | K-17 | LPS | 42 | 93 | S-17 | 3 | 7 | 19.1 | 0 | Butyl butyrate | 55 | 18.6 | 0.5 | 19 | Present invention |
| | K-18 | LPS | 42 | 93 | S-18 | 3 | 7 | 19.6 | 15 | Butyl butyrate | 55 | 18.6 | 1.0 | 29 | Present invention |
| | K-19 | LPS | 42 | 93 | S-19 | 3 | 7 | 11.7 | 4 | Butyl butyrate | 55 | 18.6 | 6.9 | 58 | Present invention |
| | K-20 | LPS | 42 | 93 | S-20 | 3 | 7 | 12.4 | 9 | Butyl butyrate | 55 | 18.6 | 6.2 | 55 | Present invention |
| | K-21 | LPS | 42 | 93 | S-21 | 3 | 7 | 12.7 | 1 | Butyl butyrate | 55 | 18.6 | 5.9 | 55 | Present invention |
| | K-22 | LPS | 42 | 93 | S-22 | 3 | 7 | 12.9 | 8 | Butyl butyrate | 55 | 18.6 | 5.7 | 54 | Present invention |
| | K-23 | LPS | 42 | 93 | S-23 | 3 | 7 | 12.4 | 20 | Butyl butyrate | 55 | 18.6 | 6.2 | 55 | Present invention |
| | K-24 | LPS | 42 | 93 | S-24 | 3 | 7 | 13.0 | 15 | Butyl butyrate | 55 | 18.6 | 5.6 | 52 | Present invention |
| | K-25 | LPS | 42 | 93 | S-25 | 3 | 7 | 11.8 | 1 | Butyl butyrate | 55 | 18.6 | 6.8 | 58 | Present invention |
| | K-26 | LPS | 42 | 93 | S-26 | 3 | 7 | 14.7 | 2 | Butyl butyrate | 55 | 18.6 | 3.9 | 48 | Present invention |
| | K-27 | LPS | 42 | 93 | S-27 | 3 | 7 | 13.8 | 2 | Butyl butyrate | 55 | 18.6 | 4.8 | 50 | Present invention |

(continued)

| | No. | Inorganic solid electrolyte | | | Binder solution or dispersion liquid | | | | | Dispersion medium | | | SP value difference | Contact angle θ(°) | Note |
|---|---|---|---|---|---|---|---|---|---|---|---|---|---|---|---|
| | | | Composition content | Solid content | | Composition content | Solid content | SP value | $A_{SE}$ (%) | | Composition content | SP value | | | |
| Inorganic solid electrolyte-containing composition | K-28 | LPS | 42 | 93 | S-28 | 3 | 7 | 13.2 | 3 | Butyl butyrate | 55 | 18.6 | 5.4 | 51 | Present invention |
| | K-29 | LPS | 42 | 93 | S-29 | 3 | 7 | 13.5 | 9 | Butyl butyrate | 55 | 18.6 | 5.1 | 51 | Present invention |
| | K-30 | LPS | 42 | 93 | S-30 | 3 | 7 | 12.9 | 34 | Butyl butyrate | 55 | 18.6 | 5.7 | 54 | Present invention |
| | K-31 | LPS | 42 | 93 | S-31 | 3 | 7 | 13.5 | 22 | Butyl butyrate | 55 | 18.6 | 5.1 | 50 | Present invention |
| | K-32 | LPS | 42 | 93 | S-32 | 3 | 7 | 12.3 | 4 | Butyl butyrate | 55 | 18.6 | 6.3 | 54 | Present invention |
| | K-33 | LPS | 42 | 93 | S-33 | 3 | 7 | 14.9 | 3 | Butyl butyrate | 55 | 18.6 | 3.7 | 47 | Present invention |
| | K-34 | LPS | 42 | 93 | S-34 | 3 | 7 | 14.1 | 3 | Butyl butyrate | 55 | 18.6 | 4.5 | 47 | Present invention |
| | K-35 | LPS | 42 | 93 | S-35 | 3 | 7 | 19.1 | 0 | Butyl butyrate | 55 | 18.6 | 0.5 | 24 | Present invention |
| | K-36 | LLT | 42 | 93 | S-13 | 3 | 7 | 18.5 | 51 | Butyl butyrate | 55 | 18.6 | 0.1 | 20 | Present invention |

[Table 2-2]

| | No. | Inorganic solid electrolyte | | | Binder solution or dispersion liquid | | | | | Dispersion medium | | | Particulate binder dispersion liquid | | | | SP value difference | Contact angle θ (°) | Note |
|---|---|---|---|---|---|---|---|---|---|---|---|---|---|---|---|---|---|---|---|
| | | | Composition content | Solid content | | Composition content | Solid content | SP value | $A_{SE}$ (%) | | Composition content | SP value | | Composition content | Solid content | $A_{SE}$ (%) | | | |
| | K-37 | LPS | 42 | 93 | S-4 | 2 | 5 | 19.1 | 5 | Butyl butyrate | 55 | 18.6 | D-1 | 1 | 2 | 85 | 0.5 | 17 | Present invention |
| | K-38 | LPS | 42 | 93 | S-5 | 2 | 5 | 18.8 | 0 | Butyl butyrate | 55 | 18.6 | T-2 | 1 | 2 | 81 | 0.2 | 21 | Present invention |
| | K-39 | LPS | 42 | 93 | S-6 | 2 | 5 | 18.6 | 5 | Butyl butyrate | 55 | 18.6 | T-3 | 1 | 2 | 100 | 0.0 | 19 | Present invention |
| | K-40 | LPS | 42 | 93 | S-7 | 2 | 5 | 20.4 | 2 | Butyl butyrate | 55 | 18.6 | D-1 | 1 | 2 | 85 | 1.8 | 43 | Present invention |
| | K-41 | LPS | 42 | 93 | S-10 | 2 | 5 | 19.2 | 24 | Butyl butyrate- | 55 | 18.6 | T-2 | 1 | 2 | 81 | 0.6 | 18 | Present invention |
| | K-42 | LPS | 42 | 93 | S-13 | 2 | 5 | 18.5 | 8 | Butyl butyrate | 55 | 18.6 | T-3 | 1 | 2 | 100 | 0.1 | 20 | Present invention |
| | K-43 | LPS | 42 | 93 | S-17 | 2 | 5 | 19.1 | 0 | Butyl butyrate | 55 | 18.6 | D-1 | 1 | 2 | 85 | 0.5 | 19 | Present invention |
| Inorganic solid electrolyte-containing | K-44 | LPS | 42 | 93 | S-17 | 2 | 5 | 19.1 | 0 | Butyl butyrate | 55 | 18.6 | T-3 | 1 | 2 | 100 | 0.5 | 19 | Present invention |
| composition | K-45 | LPS | 42 | 93 | S-19 | 2 | 5 | 11.7 | 4 | Butyl butyrate | 55 | 18.6 | D-1 | 1 | 2 | 85 | 6.9 | 58 | Present invention |

(continued)

| | No. | Inorganic solid electrolyte | | | Binder solution or dispersion liquid | | | | | Dispersion medium | | | Particulate binder dispersion liquid | | | | SP value difference | Contact angle θ (°) | Note |
|---|---|---|---|---|---|---|---|---|---|---|---|---|---|---|---|---|---|---|---|
| | | | Composition content | Solid content | | Composition content | Solid content | SP value | $A_{SE}$ (%) | | Composition content | SP value | | Composition content | Solid content | $A_{SE}$ (%) | | | |
| | K-46 | LPS | 42 | 93 | S-20 | 2 | 5 | 12.4 | 9 | Butyl butyrate | 55 | 18.6 | D-1 | 1 | 2 | 85 | 6.2 | 55 | Present invention |
| | K-47 | LPS | 42 | 93 | S-13 | 2 | 5 | 18.5 | 6 | Butyl butyrate | 55 | 18.6 | - | - | - | - | 0.1 | 20 | Present invention |
| | | | | | UFB | 1 | 2 | 12.4 | | | | | | | | | 6.2 | 54 | |
| | K-48 | LPS | 42 | 93 | S-13 | 2 | 5 | 18.5 | 7 | Butyl butyrate- | 55 | 18.6 | - | - | - | - | 0.1 | 20 | Present invention |
| | | | | | T938 | 1 | 2 | 12.8 | | | | | | | | | 5.8 | 53 | |
| | K-49 | LPS | 42 | 93 | S-13 | 2 | 5 | 18.5 | 6 | Butyl butyrate | 55 | 18.6 | - | - | - | - | 0.1 | 20 | Present invention |
| | | | | | H1041 | 1 | 2 | 18.0 | | | | | | | | | 0.6 | 31 | |
| | K-50 | LPS | 42 | 93 | S-13 | 2 | 5 | 18.5 | 6 | Butyl butyrate | 55 | 18.6 | - | - | - | - | 0.1 | 20 | Present invention |
| | | | | | M1911 | 1 | 2 | 18.0 | | | | | | | | | 0.6 | 27 | |

[Table 2-3]

| | No. | Inorganic solid electrolyte | | | Binder solution or dispersion liquid | | | | | | Dispersion medium | | | Particulate binder dispersion liquid | | | | Active material | | | Conductive auxiliary agent | | | SP value difference | Contact angle θ (°) | Note |
|---|---|---|---|---|---|---|---|---|---|---|---|---|---|---|---|---|---|---|---|---|---|---|---|---|---|---|
| | | | Composition content | Solid content | | Composition content | Solid content | SP value | $A_{SE}$ (%) | $A_{AM}$ (%) | | Composition content | SP value | | Composition content | Solid content | $A_{SE}$ (%) | | Composition content | Solid content | | Composition content | Solid content | | | |
| Composition for positive electrode | PK-1 | LPS | 16 | 22 | S-2 | 1 | 1 | 17.6 | 25 | 31 | Butyl butyrate | 26 | 18.6 | - | - | - | - | NMC | 55 | 74 | AB | 2 | 3 | 1.0 | 30 | Present invention |
| | PK-2 | LPS | 16 | 22 | S-3 | 1 | 1 | 18.7 | 0 | 0 | Butyl butyrate | 26 | 18.6 | - | - | - | - | NMC | 55 | 74 | AB | 2 | 3 | 0.1 | 28 | Present invention |
| | PK-3 | LPS | 16 | 22 | S-4 | 1 | 1 | 19.1 | 5 | 72 | Butyl butyrate | 26 | 18.6 | - | - | - | - | NMC | 55 | 74 | AB | 2 | 3 | 0.5 | 17 | Present invention |
| | PK-4 | LPS | 16 | 22 | S-5 | 1 | 1 | 18.8 | 0 | 2 | Butyl butyrate | 25 | 18.6 | D-1 | 1 | 1 | 85 | NMC | 55 | 73 | AB | 2 | 3 | 0.2 | 21 | Present invention |
| | PK-5 | LPS | 16 | 22 | S-6 | 1 | 1 | 18.6 | 5 | 7 | Butyl butyrate | 25 | 18.6 | D-1 | 1 | 1 | 85 | NMC | 55 | 73 | AB | 2 | 3 | 0.0 | 19 | Present invention |
| | PK-6 | LPS | 16 | 22 | S-7 | 1 | 1 | 20.4 | 2 | 2 | Butyl butyrate | 25 | 18.6 | D-1 | 1 | 1 | 85 | NMC | 55 | 73 | AB | 2 | 3 | 1.8 | 43 | Present invention |
| | PK-7 | LPS | 16 | 22 | S-10 | 1 | 1 | 19.2 | 24 | 30 | Butyl butyrate | 25 | 18.6 | D-1 | 1 | 1 | 85 | NMC | 55 | 73 | AB | 2 | 3 | 0.6 | 18 | Present invention |
| | PK-8 | LPS | 16 | 22 | S-13 | 1 | 1 | 18.5 | 8 | 46 | Butyl butyrate | 25 | 18.6 | D-1 | 1 | 1 | 85 | NMC | 55 | 73 | AB | 2 | 3 | 0.1 | 20 | Present invention |
| | PK-9 | LPS | 16 | 22 | S-13<br>UFB | 1<br>1 | 1<br>1 | 18.5<br>12.4 | 6 | 21 | Butyl butyrate | 25 | 18.6 | - | - | - | - | NMC | 55 | 73 | AB | 2 | 3 | 0.1<br>6.2 | 20<br>54 | Present invention |
| | PK-10 | LPS | 16 | 22 | S-13<br>M1911 | 1<br>1 | 1<br>1 | 18.5<br>18.0 | 4 | 23 | Butyl butyrate | 25 | 18.6 | - | - | - | - | NMC | 55 | 73 | AB | 2 | 3 | 0.1<br>0.6 | 20<br>27 | Present invention |
| | PK-11 | LPS | 16 | 22 | S-13 | 1 | 1 | 18.5 | 8 | 46 | Butyl butyrate | 26 | 18.6 | - | - | - | - | NMC | 55 | 74 | AB | 2 | 3 | 0.1 | 20 | Present invention |
| | PK-12 | LPS | 16 | 22 | S-16 | 1 | 1 | 19.2 | 0 | 2 | Butyl butyrate | 26 | 18.6 | - | - | - | - | NMC | 55 | 74 | AB | 2 | 3 | 0.6 | 18 | Present invention |
| | PK-13 | LPS | 16 | 22 | S-17 | 1 | 1 | 19.1 | 0 | 5 | Butyl butyrate | 26 | 18.6 | - | - | - | - | NMC | 55 | 74 | AB | 2 | 3 | 0.5 | 19 | Present invention |
| | PK-14 | LPS | 16 | 22 | S-19 | 1 | 1 | 11.7 | 4 | 8 | Butyl butyrate Butyl butyrate | 26 | 18.6 | - | - | - | - | NMC | 55 | 74 | AB | 2 | 3 | 6.9 | 58 | Present invention |
| | PK-15 | LPS | 16 | 22 | S-20 | 1 | 1 | 12.4 | 9 | 15 | Butyl butyrate | 26 | 18.6 | - | - | - | - | NMC | 55 | 74 | AB | 2 | 3 | 6.2 | 55 | Present invention |
| | PK-16 | LPS | 16 | 22 | S-35 | 1 | 1 | 19.1 | 0 | 0 | Butyl butyrate | 26 | 18.6 | - | - | - | - | NMC | 55 | 74 | AB | 2 | 3 | 0.5 | 24 | Present invention |
| | PK-17 | LPS | 16 | 22 | S-19 | 1 | 1 | 11.7 | 4 | 8 | Butyl butyrate | 25 | 18.6 | D-1 | 1 | 1 | 85 | NMC | 55 | 73 | AB | 2 | 3 | 6.9 | 58 | Present invention |
| | PK-18 | LPS | 16 | 22 | S-13 | 1 | 1 | 18.5 | 8 | 46 | Butyl butyrate | 25 | 18.6 | D-1 | 1 | 1 | 85 | NMC | 55 | 73 | AB | 2 | 3 | 0.1 | 20 | Present invention |

[Table 2-4]

| | No. | Inorganic solid electrolyte | | | Binder solution or dispersion liquid | | | | | | Dispersion medium | | | Particulate binder dispersion liquid | | | | Active material | | | Conductive auxiliary agent | | | SP value difference | Contact angle θ (°) | Note |
|---|---|---|---|---|---|---|---|---|---|---|---|---|---|---|---|---|---|---|---|---|---|---|---|---|---|---|
| | | | Composition content | Solid content | | Composition content | Solid content | SP value | $A_{SE}$ (%) | $A_{AM}$ (%) | | Composition content | SP value | | Composition content | Solid content | $A_{SE}$ (%) | | Composition content | Solid content | | Composition content | Solid content | | | |
| Composition for negative electrode | NK-1 | LPS | 22 | 42 | S-2 | 1 | 2 | 17.6 | 25 | 30 | Heptane | 48 | 18.x0 | - | - | - | - | Si | 26 | 50 | VGCF | 3 | 6 | 0.4 | 28 | Present invention |
| | NK-2 | LPS | 22 | 42 | S-3 | 1 | 2 | 18.7 | 0 | 0 | Heptane | 48 | 18.0 | - | - | - | - | Si | 26 | 50 | VGCF | 3 | 6 | 0.7 | 24 | Present invention |
| | NK-3 | LPS | 22 | 42 | S-4 | 1 | 2 | 19.1 | 5 | 68 | Heptane | 48 | 18.0 | - | - | - | - | Si | 26 | 50 | VGCF | 3 | 6 | 1.1 | 17 | Present invention |
| | NK-4 | LPS | 21 | 40 | S-5 | 1 | 2 | 18.8 | 0 | 0 | Butyl butyrate | 48 | 18.0 | D-1 | 1 | 2 | 85 | Si | 26 | 50 | VGCF | 3 | 6 | 0.8 | 19 | Present invention |
| | NK-5 | LPS | 21 | 40 | S-6 | 1 | 2 | 18.6 | 5 | 10 | Butyl butyrate | 48 | 18.6 | D-1 | 1 | 2 | 85 | Si | 26 | 50 | VGCF | 3 | 6 | 0.0 | 19 | Present invention |
| | NK-6 | LPS | 21 | 40 | S-7 | 1 | 2 | 20.4 | 2 | 10 | Butyl butyrate | 48 | 18.6 | D-1 | 1 | 2 | 85 | Si | 26 | 50 | VGCF | 3 | 6 | 1.8 | 43 | Present invention |
| | NK-7 | LPS | 21 | 40 | S-10 | 1 | 2 | 19.2 | 24 | 45 | Butyl butyrate | 48 | 18.6 | D-1 | 1 | 2 | 85 | Si | 26 | 50 | VGCF | 3 | 6 | 0.6 | 18 | Present invention |
| | NK-8 | LPS | 21 | 40 | S-13 | 1 | 2 | 18.5 | 8 | 51 | Butyl butyrate | 48 | 18.6 | D-1 | 1 | 2 | 85 | Si | 26 | 50 | VGCF | 3 | 6 | 0.1 | 20 | Present invention |
| | NK-9 | LPS | 21 | 40 | S-13<br>UFB | 1<br>1 | 2<br>2 | 18.5<br>12.4 | 5 | 25 | Butyl butyrate | 48 | 18.6 | - | - | - | - | Si | 26 | 50 | VGCF | 3 | 6 | 0.1<br>6.2 | 20<br>54 | Present invention |
| | NK-10 | LPS | 21 | 40 | S-13<br>M1911 | 1<br>1 | 2<br>2 | 18.5<br>18.0 | 4 | 29 | Butyl butyrate | 48 | 18.6 | - | - | - | - | Si | 26 | 50 | VGCF | 3 | 6 | 0.1<br>0.6 | 20<br>27 | Present invention |
| | NK-11 | LPS | 22 | 42 | S-13 | 1 | 2 | 18.5 | 8 | 51 | Butyl butyrate | 48 | 18.6 | - | - | - | - | Si | 26 | 50 | VGCF | 3 | 6 | 0.1 | 20 | Present invention |
| | NK-12 | LPS | 22 | 42 | S-13 | 1 | 2 | 18.5 | 8 | 24 | Butyl butyrate | 48 | 18.6 | - | - | - | - | Graphite | 29 | 56 | - | - | - | 0.1 | 20 | Present invention |
| | NK-13 | LPS | 22 | 42 | S-16 | 1 | 2 | 19.2 | 0 | 4 | Butyl butyrate | 48 | 18.6 | - | - | - | - | Si | 26 | 50 | VGCF | 3 | 6 | 0.6 | 18 | Present invention |
| | NK-14 | LPS | 22 | 42 | S-17 | 1 | 2 | 19.1 | 0 | 8 | Butyl butyrate | 48 | 18.6 | - | - | - | - | Si | 26 | 50 | VGCF | 3 | 6 | 0.5 | 19 | Present invention |
| | NK-15 | LPS | 22 | 42 | S-19 | 1 | 2 | 11.6 | 4 | 8 | Butyl butyrate | 48 | 18.6 | - | - | - | - | Graphite | 29 | 56 | - | - | - | 7.0 | 58 | Present invention |
| | NK-16 | LPS | 22 | 42 | S-20 | 1 | 2 | 12.4 | 9 | 13 | Butyl butyrate | 48 | 18.6 | - | - | - | - | Graphite | 29 | 56 | - | - | - | 6.2 | 55 | Present invention |
| | NK-17 | LPS | 22 | 42 | S-21 | 1 | 2 | 12.7 | 1 | 3 | Butyl butyrate | 48 | 18.6 | - | - | - | - | Graphite | 29 | 56 | - | - | - | 5.9 | 55 | Present invention |
| | NK-18 | LPS | 22 | 42 | S-22 | 1 | 2 | 12.9 | 8 | 10 | Butyl butyrate | 48 | 18.6 | - | - | - | - | Graphite | 29 | 56 | - | - | - | 5.7 | 54 | Present invention |
| | NK-19 | LPS | 22 | 42 | S-23 | 1 | 2 | 12.4 | 20 | 22 | Butyl butyrate | 48 | 18.6 | - | - | - | - | Graphite | 29 | 56 | - | - | - | 6.2 | 55 | Present invention |
| | NK-20 | LPS | 22 | 42 | S-24 | 1 | 2 | 13.0 | 15 | 35 | Butyl butyrate | 48 | 18.6 | - | - | - | - | Graphite | 29 | 56 | - | - | - | 5.6 | 52 | Present invention |
| | NK-21 | LPS | 22 | 42 | S-25 | 1 | 2 | 11.8 | 1 | 6 | Butyl butyrate | 48 | 18.6 | - | - | - | - | Graphite | 29 | 56 | - | - | - | 6.8 | 58 | Present invention |
| | NK-22 | LPS | 22 | 42 | S-26 | 1 | 2 | 14.7 | 2 | 6 | Butyl butyrate | 48 | 18.6 | - | - | - | - | Graphite | 29 | 56 | - | - | - | 3.9 | 48 | Present invention |

| | | | | | | | | | | | | | | | | | | | | | | | | | | |
|---|---|---|---|---|---|---|---|---|---|---|---|---|---|---|---|---|---|---|---|---|---|---|---|---|---|---|
| Composition for negative electrode | NK-23 | LPS | 22 | 42 | S-27 | 1 | 2 | 13.8 | 2 | 4 | Butyl butyrate | 48 | 18.6 | - | - | - | - | Graphite | 29 | 56 | - | - | - | 4.8 | 50 | Present invention |
| | NK-24 | LPS | 22 | 42 | S-28 | 1 | 2 | 13.2 | 3 | 4 | Butyl butyrate | 48 | 18.6 | - | - | - | - | Graphite | 29 | 56 | - | - | - | 5.4 | 51 | Present invention |
| | NK-25 | LPS | 22 | 42 | S-29 | 1 | 2 | 13.5 | 9 | 10 | Butyl butyrate | 48 | 18.6 | - | - | - | - | Graphite | 29 | 56 | - | - | - | 5.1 | 51 | Present invention |
| | NK-26 | LPS | 22 | 42 | S-30 | 1 | 2 | 12.9 | 34 | 56 | Butyl butyrate | 48 | 18.6 | - | - | - | - | Graphite | 29 | 56 | - | - | - | 5.7 | 54 | Present invention |
| | NK-27 | LPS | 22 | 42 | S-31 | 1 | 2 | 13.5 | 22 | 45 | Butyl butyrate | 48 | 18.6 | - | - | - | - | Graphite | 29 | 56 | - | - | - | 5.1 | 50 | Present invention |
| | NK-28 | LPS | 22 | 42 | S-32 | 1 | 2 | 12.3 | 4 | 5 | Butyl butyrate | 48 | 18.6 | - | - | - | - | Graphite | 29 | 56 | - | - | - | 6.3 | 54 | Present invention |
| | NK-29 | LPS | 22 | 42 | S-33 | 1 | 2 | 14.9 | 3 | 5 | Butyl butyrate | 48 | 18.6 | - | - | - | - | Graphite | 29 | 56 | - | - | - | 3.7 | 47 | Present invention |
| | NK-30 | LPS | 22 | 42 | S-34 | 1 | 2 | 14.1 | 3 | 5 | Butyl butyrate | 48 | 18.6 | - | - | - | - | Graphite | 29 | 56 | - | - | - | 4.5 | 47 | Present invention |
| | NK-31 | LPS | 22 | 42 | S-35 | 1 | 2 | 19.1 | 0 | 0 | Butyl butyrate | 48 | 18.6 | - | - | - | - | Graphite | 29 | 56 | - | - | - | 0.5 | 24 | Present invention |
| | NK-32 | LPS | 21 | 40 | S-19 | 1 | 2 | 11.6 | 4 | 8 | Butyl butyrate | 48 | 18.6 | D-1 | 1 | 2 | 85 | Graphite | 29 | 56 | - | - | - | 7.0 | 58 | Present invention |
| | NK-33 | LPS | 21 | 40 | S-20 | 1 | 2 | 12.4 | 9 | 13 | Butyl butyrate | 48 | 18.6 | D-1 | 1 | 2 | 85 | Graphite | 29 | 56 | - | - | - | 6.2 | 55 | Present invention |
| | NK-34 | LPS | 21 | 40 | S-13 | 1 | 2 | 18.5 | 8 | 51 | Butyl butyrate | 48 | 18.6 | T-3 | 1 | 2 | 100 | Si | 26 | 50 | VGCF | 3 | 6 | 0.1 | 20 | Present invention |

[Table 2-5]

| | No. | Inorganic solid electrolyte | | | Binder solution or dispersion liquid | | | | | | Dispersion medium | | | Active material | | | Conductive auxiliary agent | | | SP value difference | Contact angle θ (°) | Note |
|---|---|---|---|---|---|---|---|---|---|---|---|---|---|---|---|---|---|---|---|---|---|---|
| | | | Composition content | Solid content | | Composition content | Solid content | | $A_{sc}$ (%) | $A_{AM}$ (%) | | Composition content | Solid content | | Composition content | Solid content | | Composition content | Solid content | | | |
| Inorganic solid electrolyte-containing composition | Kcll | LPS | 42 | 93 | T-1 | 3 | 7 | 20.2 | 89 | - | Butyl butyrate | 55 | 18.6 | - | - | - | - | - | - | 1.6 | 41 | Comparative Example |
| | Kcl2 | LPS | 42 | 93 | T-2 | 3 | 7 | 22.8 | 81 | - | Butyl butyrate | 55 | 18.6 | - | - | - | - | - | - | 4.2 | 48 | Comparative Example |
| | Kc13 | LPS | 42 | 93 | T-3 | 3 | 7 | 21.0 | 100 | - | Butyl butyrate | 55 | 18.6 | - | - | - | - | - | - | 2.4 | 45 | Comparative Example |
| Composition for negative electrode | NKc21 | LPS | 22 | 42 | T-1 | 1 | 2 | 20.2 | 89 | 87 | Butyl butyrate | 48 | 18.6 | Si | 26 | 50 | VGCF | 3 | 6 | 1.6 | 41 | Comparative Example |
| | NKc22 | LPS | 22 | 42 | T-2 | 1 | 2 | 22.8 81 | | 89 | Butyl butyrate | 48 | 18.6 | Si | 26 | 50 | VGCF | 3 | 6 | 4.2 | 48 | Comparative Example |
| | NKc23 | LPS | 22 | 42 | T-3 | 1 | 2 | 21.0 | 100 | 100 | Butyl butyrate | 48 | 18.6 | Si | 26 | 50 | VGCF | 3 | 6 | 2.4 | 45 | Comparative Example |

<Abbreviations in table>

LPS: LPS synthesized in Synthesis Example A
LLT: $Li_{0.33}La_{0.55}TiO_3$ (average particle diameter: 3.25 μm, manufactured by TOSHIMA manufacturing Co., Ltd.)
NMC: $LiNi_{1/3}Co_{1/3}Mn_{1/3}O_2$
Si: Silicon
AB: Acetylene black
VGCF: Carbon nanotube (manufactured by Showa Denko K.K.)

In a case where two kinds of low adsorption binders were used, the corresponding contents were described in the upper and lower two rows in the column of "Binder solution or dispersion liquid" and the column of "SP value difference".

<Preparation of solid electrolyte sheet for all-solid state secondary battery>

Each of the inorganic solid electrolyte-containing compositions shown in Table 3-1 and Table 3-2 (collectively may be referred to as Table 3) obtained as described above was applied onto an aluminum foil having a thickness of 20 μm using a baker type applicator (product name: SA-201, manufactured by Tester Sangyo Co., Ltd.) and heated at 80°C for 2 hours to dry (to remove the dispersion medium) the inorganic solid electrolyte-containing composition. Then, using a heat press machine, the inorganic solid electrolyte-containing composition dried at a temperature of 120°C and a pressure of 40 MPa for 10 seconds was heated and pressurized to produce each of solid electrolyte sheets 101 to 149 and c11 to c13 for an all-solid state secondary battery (in Table 3, it is written as "Solid electrolyte sheet"). The film thickness of the solid electrolyte layer was 50 μm.

<Preparation of positive electrode sheet for all-solid state secondary battery>

Each of the compositions for a positive electrode obtained as described above, which is shown in the column of "Composition for electrode" in Table 3, was applied onto an aluminum foil having a thickness of 20 μm by using a baker type applicator (product name: SA-201), heating was carried out at 80°C for 1 hour, and then heating was further carried out at 110°C for 1 hour to dry (to remove the dispersion medium) the composition for a positive electrode. Then, using a heat press machine, the dried composition for a positive electrode was pressurized (10 MPa, 1 minute) at 25°C to produce each of positive electrode sheets 150 to 166 for an all-solid state secondary battery, having a positive electrode active material layer having a film thickness of 80 μm (in Table 3-2, it is written as "Positive electrode sheet").

<Preparation of negative electrode sheet for all-solid state secondary battery>

Each of the compositions for a negative electrode obtained as described above, which is shown in the column of "Composition for electrode" in Table 3, was applied onto a copper foil having a thickness of 20 μm by using a baker type applicator (product name: SA-201), heating was carried out at 80°C for 1 hour, and then heating was further carried out at 110°C for 1 hour to dry (to remove the dispersion medium) the composition for a negative electrode. Then, using a heat press machine, the dried composition for a negative electrode was pressurized (10 MPa, 1 minute) at 25°C to produce each of negative electrode sheets 167 to 199 and c21 to c23 for an all-solid state secondary battery, having a negative electrode active material layer having a film thickness of 70 μm (in Table 3-2, it is written as "Negative electrode sheet").

<Preparation of positive electrode sheet for all-solid state secondary battery, which has solid electrolyte layer>

Next, the solid electrolyte sheet shown in the column of "Solid electrolyte layer" of Table 4, prepared as described above, was overlaid on the positive electrode active material layer of each of the positive electrode sheets for an all-solid state secondary battery shown in the column of "Electrode active material layer" of Table 4 so that it came into contact with the positive electrode active material layer, transferred (laminated) by being pressurized at 50 MPa and 25°C using a press machine, and then pressurized at 600 MPa and at 25°C, whereby each of positive electrode sheets 150 to 166 for an all-solid state secondary battery having a thickness of 30 μm (thickness of positive electrode active material layer: 60 μm) was produced.

<Preparation of negative electrode sheet for all-solid state secondary battery, which has solid electrolyte layer>

Next, the solid electrolyte sheet shown in the column of "Solid electrolyte layer" of Table 4, prepared as described above, was overlaid on the negative electrode active material layer of each of the negative electrode sheets for an all-solid state secondary battery shown in the column of "Electrode active material layer" of Table 4 so that it came into contact with the negative electrode active material layer, transferred (laminated) by being pressurized at 50 MPa and 25°C using a press machine, and then pressurized at 600 MPa and at 25°C, whereby each of negative electrode sheets 167 to 199 and c21 to c23 for an all-solid state secondary battery having a thickness of 30 μm (thickness of negative electrode active material layer: 50 μm) was produced.

<Evaluation 1: Dispersion stability>

Each of the prepared compositions (slurries) was put into a glass test tube having a diameter of 10 mm and a height of 4 cm up to a height of 4 cm and allowed to stand at 25°C for 24 hours. The solid content ratio between the solid contents before and after allowing standing was calculated with the slurry in 1 cm from the slurry liquid level. Specifically, immediately after allowing standing, the liquid up to 1 cm below the surface of the slurry was taken out and dried by heating in an aluminum cup at 120°C for 2 hours. Then, the mass of the solid content in the cup was measured to determine the solid content before and after allowing standing. The solid contents obtained in this manner were used to determine the solid content ratio [WA/WB] of the solid content WA after allowing standing to the solid content WB before allowing standing.

The ease of sedimentation (precipitation) of the inorganic solid electrolyte was evaluated as the dispersion stability of the solid electrolyte composition by determining where the above solid content ratio is included in any of the following evaluation standards. In this test, it is indicated that the closer the solid content ratio is to 1, the better the dispersion stability is, and the evaluation standard "D" or higher is the pass level. The results are shown in Table 3.

- Evaluation standards -

A: 0.9 ≤ solid content ratio ≤ 1.0
B: 0.7 ≤ solid content ratio < 0.9
C: 0.5 ≤ solid content ratio < 0.7
D: 0.3 ≤ solid content ratio < 0.5
E: 0.1 ≤ solid content ratio < 0.3
F: solid content ratio < 0.1

<Evaluation 2: Handleability>

In the same manner as each of the prepared compositions, the same mixing proportion was used except for the dispersion medium and the amount of the dispersion medium reduced, whereby a slurry having a solid content concentration of 75% by mass was prepared. A 2 mL poly dropper (manufactured by atect Corporation) was arranged vertically so that 10 mm of the tip thereof was positioned below the slurry interface, and the slurry was aspirated at 25°C for 10 seconds, and the mass W of the poly dropper containing the aspirated slurry was measured. In a case where the tare weight (the empty weight) of the poly dropper is denoted by $W_0$, it was determined that the slurry can not be aspirated by the dropper in a case where the slurry mass W - $W_0$ is less than 0.1 g. In a case where the slurry could not be aspirated with a dropper, the upper limit solid content concentration at which the slurry can be aspirated with a dropper was estimated while gradually adding the dispersion medium. The handleability (the extent to which an appropriate viscosity suitable for forming a flat constitutional layer having a good surface property can be obtained) of the composition was evaluated by determining where the obtained upper limit solid content concentration is included in any of the following evaluation standards. 0.30 g of the prepared slurry was placed on an aluminum cup and heated at 120°C for 2 hours to distill off the dispersion medium, and the solid content concentration was calculated.

In this test, it is indicated that the higher the upper limit solid content concentration is, the better the handleability is, and the evaluation standard "D" or higher is the pass level. The results are shown in Table 3.

- Evaluation standards -

A: Upper limit solid content concentration ≥ 70%
B: 70% > upper limit solid content concentration ≥ 60%
C: 60% > upper limit solid content concentration ≥ 50%
D: 50% > upper limit solid content concentration ≥ 40%
E: 40% > upper limit solid content concentration ≥ 30%
F: 30% > upper limit solid content concentration

<Evaluation 3: Adhesiveness of collector>

A test piece having a length of 20 mm and a width of 20 mm was cut out from each of the prepared positive electrode sheets for all-solid state secondary battery and each of the negative electrode sheets for an all-solid state secondary battery. 11 cuts were made in the test piece using a utility knife so that the cuts reached the substrate (the aluminum foil or the copper foil) at 1 mm intervals parallel to one side. In addition, 11 cuts were made so that the cuts reached the substrate at 1 mm intervals in the direction perpendicular to the cuts. In this manner, 100 squares were formed on the test piece.

A cellophane tape having a length of 15 mm and a width of 18 mm was attached to the surface of the solid electrolyte layer to cover all the 100 squares. The surface of the cellophane tape was rubbed with an eraser and pressed against the solid electrolyte layer to be adhered thereto. Two minutes after the cellophane tape was attached, the end of the cellophane tape was held and pulled upward vertically with respect to the solid electrolyte layer, to be peeled off. After peeling off the cellophane tape, the surface of the solid electrolyte layer was visually observed, the number of squares where no peeling from the collector had occurred was counted, and the adhesiveness of the active material layer to the collector was evaluated.

In this test, it is indicated that the more the squares where no peeling from the collector occurred, the better the adhesiveness to the collector, and the evaluation standard "D" or higher is the pass level. The results are shown in Table 3.

- Evaluation standards -

A: 80 squares or more
B: 60 squares or more and less than 80 squares
C: 40 squares or more and less than 60 squares
D: 30 squares or more and less than 40 squares
E: 10 squares or more and less than 30 squares
F: Less than 10 squares

[Table 3-1]

| Sheet No. | Solid electrolyte composition No. | Polymer No. | Dispersion stability | Handleability | Note 1 | Note 2 |
|---|---|---|---|---|---|---|
| 101 | K-1 | S-1 | B | D | | Present invention |
| 102 | K-2 | S-2 | B | D | | Present invention |
| 103 | K-3 | S-3 | C | C | | Present invention |
| 104 | K-4 | S-4 | A | A | | Present invention |
| 105 | K-5 | S-5 | B | B | | Present invention |
| 106 | K-6 | S-6 | A | A | | Present invention |

(continued)

| Sheet No. | Solid electrolyte composition No. | Polymer No. | Dispersion stability | Handleability | Note 1 | Note 2 |
|---|---|---|---|---|---|---|
| 107 | K-7 | S-7 | C | C | Solid electrolyte sheet | Present invention |
| 108 | K-8 | S-8 | B | A | | Present invention |
| 109 | K-9 | S-9 | C | B | | Present invention |
| 110 | K-10 | S-10 | A | B | | Present invention |
| 111 | K-11 | S-11 | B | B | | Present invention |
| 112 | K-12 | S-12 | C | A | | Present invention |
| 113 | K-13 | S-13 | A | B | | Present invention |
| 114 | K-14 | S-14 | B | B | | Present invention |
| 115 | K-15 | S-15 | C | C | | Present invention |
| 116 | K-16 | S-16 | A | A | | Present invention |
| 117 | K-17 | S-17 | A | B | | Present invention |
| 118 | K-18 | S-18 | B | B | | Present invention |
| 119 | K-19 | S-19 | C | C | | Present invention |
| 120 | K-20 | S-20 | C | C | | Present invention |
| 121 | K-21 | S-21 | C | B | | Present invention |
| 122 | K-22 | S-22 | C | B | | Present invention |
| 123 | K-23 | S-23 | C | B | | Present invention |
| 124 | K-24 | S-24 | C | B | | Present invention |
| 125 | K-25 | S-25 | C | B | | Present invention |
| 126 | K-26 | S-26 | C | B | | Present invention |
| 127 | K-27 | S-27 | C | B | | Present invention |
| 128 | K-28 | S-28 | C | B | | Present invention |

(continued)

| Sheet No. | Solid electrolyte composition No. | Polymer No. | Dispersion stability | Handleability | Note 1 | Note 2 |
|---|---|---|---|---|---|---|
| 129 | K-29 | S-29 | C | B | | Present invention |
| 130 | K-30 | S-30 | C | B | | Present invention |
| 131 | K-31 | S-31 | C | B | | Present invention |
| 132 | K-32 | S-32 | C | B | | Present invention |
| 133 | K-33 | S-33 | C | B | | Present invention |
| 134 | K-34 | S-34 | C | B | | Present invention |
| 135 | K-35 | S-35 | A | A | | Present invention |
| 136 | K-36 | S-13 | A | B | | Present invention |
| 137 | K-37 | S-4 | A | A | | Present invention |
| 138 | K-38 | S-5 | B | A | | Present invention |
| 139 | K-39 | S-6 | A | A | | Present invention |
| 140 | K-40 | S-7 | B | B | | Present invention |
| 141 | K-41 | S-10 | A | B | | Present invention |
| 142 | K-42 | S-13 | A | A | | Present invention |
| 143 | K-43 | S-17 | A | A | | Present invention |
| 144 | K-44 | S-17 | A | A | | Present invention |
| 145 | K-45 | S-19 | B | C | | Present invention |
| 146 | K-46 | S-20 | B | C | | Present invention |
| 147 | K-47 | S-13/UFB | A | A | | Present invention |
| 148 | K-48 | S-13/T938 | A | A | | Present invention |
| 149 | K-49 | S-13/H1041 | A | A | | Present invention |

(continued)

| Sheet No. | Solid electrolyte composition No. | Polymer No. | Dispersion stability | Handleability | Note 1 | Note 2 |
|---|---|---|---|---|---|---|
| 150 | K-50 | S-13/M1911 | A | A | | Present invention |
| In the column of "Poymer No.", polymers that form the polymer binder of which the adsorption rate $A_{SE}$ is less than 60% are indicated, and in a case where two kinds of polymers are contained, they are indicated together using "/". | | | | | | |

[Table 3-2]

| Sheet No. | Solid electrolyte composition No. | Polymer | Solid electrolyte composition No. | Polymer No. | Dispersion stability | Handleability | Adhesiveness of conductor | Note 1 | Note 2 |
|---|---|---|---|---|---|---|---|---|---|
| 151 | - | - | PK-1 | S-2 | B | C | B | Positive electrode sheet | Present invention |
| 152 | - | - | PK-2 | S-3 | B | B | A | | Present invention |
| 153 | - | - | PK-3 | S-4 | A | A | B | | Present invention |
| 154 | - | - | PK-4 | S-5 | A | B | A | | Present invention |
| 155 | - | - | PK-5 | S-6 | A | A | A | | Present invention |
| 156 | - | - | PK-6 | S-7 | B | B | B | | Present invention |
| 157 | - | - | PK-7 | S-10 | B | A | A | | Present invention |
| 158 | - | - | PK-8 | S-13 | A | A | A | | Present invention |
| 159 | - | - | PK-9 | S-13/UFB | A | A | A | | Present invention |
| 160 | - | - | PK-10 | S-13/M1911 | A | A | A | | Present invention |
| 161 | - | - | PK-11 | S-13 | A | A | B | | Present invention |
| 162 | - | - | PK-12 | S-16 | A | A | B | | Present invention |
| 163 | - | - | PK-13 | S-17 | A | B | B | | Present invention |
| 164 | - | - | PK-14 | S-19 | C | C | C | | Present invention |

(continued)

| Sheet No. | Solid electrolyte composition No. | Polymer | Solid electrolyte composition No. | Polymer No. | Dispersion stability | Handleability | Adhesiveness of conductor | Note 1 | Note 2 |
|---|---|---|---|---|---|---|---|---|---|
| 165 | - | - | PK-15 | S-20 | C | C | C | | Present invention |
| 166 | - | - | PK-16 | S-35 | A | A | B | | Present invention |
| 167 | - | - | PK-17 | S-19 | B | C | B | | Present invention |
| 168 | - | - | PK-18 | S-13 | A | A | A | | Present invention |
| 169 | - | - | NK-1 | S-2 | B | C | C | | Present invention |
| 170 | - | - | NK-2 | S-3 | B | B | A | | Present invention |
| 171 | - | - | NK-3 | S-4 | A | B | A | | Present invention |
| 172 | - | - | NK-4 | S-5 | A | B | B | | Present invention |
| 173 | - | - | NK-5 | S-6 | A | A | A | | Present invention |
| 174 | - | - | NK-6 | S-7 | B | B | B | | Present invention |
| 175 | - | - | NK-7 | S-10 | B | B | A | | Present invention |
| 176 | - | - | NK-8 | S-13 | A | A | A | | Present invention |
| 177 | - | - | NK-9 | S-13/UFB | A | A | A | | Present invention |
| 178 | - | - | NK-10 | S-13/M1911 | A | A | A | | Present invention |

(continued)

| Sheet No. | Solid electrolyte composition No. | Polymer | Solid electrolyte composition No. | Polymer No. | Dispersion stability | Handleability | Adhesiveness of conductor | Note 1 | Note 2 |
|---|---|---|---|---|---|---|---|---|---|
| 179 | - | - | NK-11 | S-13 | A | A | B | Negative electrode sheet | Present invention |
| 180 | - | - | NK-12 | S-13 | C | B | C | | Present invention |
| 181 | - | - | NK-13 | S-16 | A | A | B | | Present invention |
| 182 | - | - | NK-14 | S-17 | A | B | B | | Present invention |
| 183 | - | - | NK-15 | S-19 | A | C | C | | Present invention |
| 184 | - | - | NK-16 | S-20 | A | C | C | | Present invention |
| 185 | - | - | NK-17 | S-21 | A | C | B | | Present invention |
| 186 | - | - | NK-18 | S-22 | A | C | B | | Present invention |
| 187 | - | - | NK-19 | S-23 | A | C | B | | Present invention |
| 188 | - | - | NK-20 | S-24 | A | C | B | | Present invention |
| 189 | - | - | NK-21 | S-25 | A | C | B | | Present invention |
| 190 | - | - | NK-22 | S-26 | A | C | B | | Present invention |
| 191 | - | - | NK-23 | S-27 | A | C | B | | Present invention |
| 192 | - | - | NK-24 | S-28 | A | C | B | | Present invention |

(continued)

| Sheet No. | Solid electrolyte composition No. | Polymer | Solid electrolyte composition No. | Polymer No. | Dispersion stability | Handleability | Adhesiveness of conductor | Note 1 | Note 2 |
|---|---|---|---|---|---|---|---|---|---|
| 193 | - - | - - | NK-25 | S-29 | A | C | B | | Present invention |
| 194 | - | - | NK-26 | S-30 | A | C | B | | Present invention |
| 195 | - | - | NK-27 | S-31 | A | C | B | | Present invention |
| 196 | - | - | NK-28 | S-32 | A | C | B | | Present invention |
| 197 | - | - | NK-29 | S-33 | A | C | B | | Present invention |
| 198 | - | - | NK-30 | S-34 | A | C | B | | Present invention |
| 199 | - | - | NK-31 | S-35 | A | A | B | | Present invention |
| 200 | - | - | NK-32 | S-19 | A | C | A | | Present invention |
| 201 | - | - | NK-33 | S-20 | A | C | A | | Present invention |
| 202 | - | - | NK-34 | S-13 | A | A | A | | Present invention |
| ell | Kcll | T-1 | - | - | E | F | - | Solid electrolyte sheet | Comparative Example |
| c12 | Kc12 | T-2 | - | - | F | E | - | | Comparative Example |
| c13 | Kcl3 | T-3 | - | - | F | F | - | | Comparative Example |

(continued)

| Sheet No. | Solid electrolyte composition No. | Polymer | Solid electrolyte composition No. | Polymer No. | Dispersion stability | Handleability | Adhesiveness of conductor | Note 1 | Note 2 |
|---|---|---|---|---|---|---|---|---|---|
| c21 | - | - | NKc21 | T-1 | F | F | E | Negative electrode sheet | Comparative Example |
| c22 | - | - | NKc22 | T-2 | E | F | E | | Comparative Example |
| c23 | - | - | NKc23 | T-3 | E | E | F | | Comparative Example |

In the column of "Poymer No.", polymers that form the polymer binder of which the adsorption rate $A_{SE}$ is less than 60% are indicated, and in a case where two kinds of polymers are contained, they are indicated together using "/".

<Manufacturing of all-solid state secondary battery>

An all-solid state secondary battery (No. 101) having a layer configuration illustrated in Fig. 1 was manufactured as follows.

The positive electrode sheet No. 150 for an all-solid state secondary battery (the aluminum foil of the solid electrolyte-containing sheet had been peeled off), which has the solid electrolyte layer obtained above, was cut out into a disk shape having a diameter of 14.5 mm and placed, as illustrated in Fig. 2, in a stainless 2032-type coin case 11 into which a spacer and a washer (not illustrated in Fig. 2) had been incorporated. Next, a lithium foil cut out in a disk shape having a diameter of 15 mm was overlaid on the solid electrolyte layer. After further overlaying a stainless steel foil thereon, the 2032-type coin case 11 was crimped to manufacture an all-solid state secondary battery 13 (No. 101), illustrated in Fig. 2.

The all-solid state secondary battery manufactured in this manner has a layer configuration illustrated in Fig. 1 (however, the lithium foil corresponds to a negative electrode active material layer 2 and a negative electrode collector 1).

Each of all-solid state secondary batteries (Nos. 102 to 117) were manufactured in the same manner as in the manufacturing of the all-solid state secondary battery (No. 101), except that in the manufacturing of the all-solid state secondary battery (No. 101), a positive electrode sheet for an all-solid state secondary battery, which has a solid electrolyte layer and is indicated by No. shown in the column of "Electrode active material layer" of Table 4 was used instead of the positive electrode No. 150 for a secondary battery, which has a solid electrolyte layer.

An all-solid state secondary battery (No. 118) having a layer configuration illustrated in Fig. 1 was manufactured as follows.

The negative electrode sheet No. 167 for an all-solid state secondary battery (the aluminum foil of the solid electrolyte-containing sheet had been peeled off), which has the solid electrolyte layer obtained above, was cut out into a disk shape having a diameter of 14.5 mm and placed in a stainless 2032-type coin case into which a spacer and a washer (not illustrated in Fig. 2) had been incorporated. Next, a positive electrode sheet (a positive electrode active material layer) punched out from the positive electrode sheet for an all-solid state secondary battery produced below into a disk shape having a diameter of 14.0 mm was overlaid on the solid electrolyte layer. A stainless steel foil (a positive electrode collector) was further layered thereon to form a laminate 12 for an all-solid state secondary battery (a laminate consisting of stainless steel foil - aluminum foil - positive electrode active material layer - solid electrolyte layer - negative electrode active material layer - copper foil). Then, the 2032-type coin case 11 was crimped to manufacture an all-solid state secondary battery No. 118 illustrated in Fig. 2.

A positive electrode sheet for an all-solid state secondary battery to be used in the manufacturing of the all-solid state secondary battery (No. 118) was prepared as follows.

(Preparation of composition for positive electrode)

180 g of zirconia beads having a diameter of 5 mm were put into a 45 mL container made of zirconia (manufactured by FRITSCH), 2.7 g of LPS synthesized in the above Synthesis Example A, and 0.3 g of KYNAR FLEX 2500-20 (product name, PVdF-HFP: polyvinylidene fluoride - hexafluoropropylene copolymer, manufactured by Arkema S.A.) in terms of a solid content mass and 22 g of butyl butyrate were put into the above container. The container was set in a planetary ball mill P-7 (product name, manufactured by FRITSCH) and the components were stirred for 60 minutes at 25°C and a rotation speed of 300 rpm. Then, 7.0 g of $LiNi_{1/3}Co_{1/3}Mn_{1/3}O_2$ (NMC) was put into container as the positive electrode active material, and similarly, the container was set in a planetary ball mill P-7, mixing was continued at 25°C and a rotation speed of 100 rpm for 5 minutes to prepare a composition for a positive electrode.

(Preparation of positive electrode sheet for all-solid state secondary battery)

Each of the compositions for a positive electrode obtained as described above was applied onto an aluminum foil (a positive electrode collector) having a thickness of 20 $\mu$m with a baker type applicator (product name: SA-201), heating was carried out at 100°C for 2 hours to dry (to remove the dispersion medium) the composition for a positive electrode. Then, using a heat press machine, the dried composition for a positive electrode was pressurized (10 MPa, 1 minute) at 25°C to produce each of positive electrode sheets for an all-solid state secondary battery, having a positive electrode active material layer having a film thickness of 80 $\mu$m.

Each of all-solid state secondary batteries (Nos. 119 to 150 and c101 to c103) were manufactured in the same manner as in the manufacturing of the all-solid state secondary battery (No. 118), except that in the manufacturing of the all-solid state secondary battery (No. 118), a negative electrode sheet for an all-solid state secondary battery, which has a solid electrolyte layer and is indicated by No. shown in the column of "Electrode active material layer" of Table 4 was used instead of the negative electrode No. 167 for a secondary battery, which has a solid electrolyte layer.

<Evaluation 4: Cycle characteristics>

The discharging capacity retention rate of each of the all-solid state secondary batteries manufactured as described above was measured using a charging and discharging evaluation device TOSCAT-3000 (trade name, manufactured by Toyo System Corporation).

Specifically, each of the all-solid state secondary batteries was charged in an environment of 25°C at a current density of 0.1 $mA/cm^2$ until the battery voltage reached 3.6 V. Then, the battery was discharged at a current density of 0.1 $mA/cm^2$ until the battery voltage reached 2.5 V. One charging operation and one discharging operation were set as one cycle of charging and discharging, and 3 cycles of charging and discharging were repeated under the same conditions to carry out initialization. Then, the above charging and discharging cycle was repeated, and the discharging capacity of each of the all-solid state secondary batteries was measured at each time after the charging and discharging cycle was carried out with a charging and discharging evaluation device: TOSCAT-3000 (product name).

In a case where the discharging capacity (the initial discharging capacity) of the first charging and discharging cycle after initialization is set to 100%, the battery performance (the cycle characteristics) was evaluated by determining where the number of charging and discharging cycles in a case where the discharging capacity retention rate (the discharging capacity with respect to the initial discharging capacity) reaches 80% is included in any of the following evaluation standards. In this test, the higher the evaluation standard is, the better the battery performance (the cycle characteristics) is, and the initial battery performance can be maintained even in a case where a plurality of times of charging and discharging are repeated (even in a case of the long-term use).

All of the all-solid state secondary batteries Nos. 101 to 150 exhibited initial discharging capacity values sufficient for functioning as an all-solid state secondary battery.

- Evaluation standards -

A: 500 cycles or more
B: 300 cycles or more and less than 500 cycles
C: 200 cycles or more and less than 300 cycles
D: 150 cycles or more and less than 200 cycles
E: 80 cycles or more and less than 150 cycles
F: 40 cycles or more and less than 80 cycles

<Evaluation 5: Measurement of ion conductivity>

The ion conductivity of each of the manufactured all-solid state secondary batteries was measured. Specifically, the alternating-current impedance of each of the all-solid state secondary batteries was measured in a constant-temperature tank (30°C) using a 1255B FREQUENCY RESPONSE ANALYZER (trade name, manufactured by SOLARTRON Analytical) at a voltage magnitude of 5 mV and a frequency of 1 MHz to 1 Hz. From the measurement result, the resistance of the sample for measuring ion conductivity in the layer thickness direction was determined, and the ion conductivity was determined by the calculation according to Expression (1).

$$\text{Expression (1): Ion conductivity } \sigma \text{ (mS/cm)} =$$
$$1{,}000 \times \text{sample layer thickness (cm)}/[\text{resistance } (\Omega) \times \text{sample area (cm}^2)]$$

In Expression (1), the sample layer thickness is a value obtained by measuring the thickness before placing the laminate 12 in the 2032-type coin case 11 and subtracting the thickness of the collector (the total layer thickness of the solid electrolyte layer and the electrode active material layer). The sample area is the area of the disk-shaped sheet having a diameter of 14.5 mm.

It was determined where the obtained ion conductivity σ was included in any of the following evaluation standards.

In this test, in a case where the evaluation standard is "D" or higher, the ion conductivity σ is the pass level.

- Evaluation standards -

A: 0.60 ≤ σ
B: 0.50 ≤ σ < 0.60
C: 0.40 ≤ σ < 0.50
D: 0.30 ≤ σ < 0.40
E: 0.20 < σ < 0.30
F: σ < 0.20

[Table 4]

| No. | Laver constitution | | Cycle characteristics | Ion conductivity | Note |
|---|---|---|---|---|---|
| | Electrode active material layer (sheet No.) | Solid electrolyte layer (sheet No.) | | | |
| 101 | 151 | 102 | B | B | Present invention |
| 102 | 152 | 103 | C | B | Present invention |
| 103 | 153 | 104 | B | A | Present invention |
| 104 | 154 | 105 | A | B | Present invention |
| 105 | 155 | 106 | B | A | Present invention |
| 106 | 156 | 107 | B | A | Present invention |
| 107 | 157 | 110 | A | A | Present invention |
| 108 | 158 | 113 | A | A | Present invention |
| 109 | 159 | 148 | A | A | Present invention |
| 110 | 160 | 150 | A | A | Present invention |
| 111 | 161 | 113 | B | B | Present invention |
| 112 | 162 | 116 | B | A | Present invention |
| 113 | 163 | 117 | B | A | Present invention |
| 114 | 164 | 119 | C | C | Present invention |
| 115 | 165 | 120 | C | C | Present invention |
| 116 | 166 | 135 | B | A | Present invention |
| 117 | 167 | 145 | B | C | Present invention |
| 118 | 168 | 143 | A | A | Present invention |

(continued)

| No. | Laver constitution | | Cycle characteristics | Ion conductivity | Note |
|---|---|---|---|---|---|
| | Electrode active material layer (sheet No.) | Solid electrolyte layer (sheet No.) | | | |
| 119 | 169 | 102 | C | C | Present invention |
| 120 | 170 | 103 | C | C | Present invention |
| 121 | 171 | 104 | B | C | Present invention |
| 122 | 172 | 105 | A | B | Present invention |
| 123 | 173 | 106 | B | A | Present invention |
| 124 | 174 | 107 | A | B | Present invention |
| 125 | 175 | 110 | B | A | Present invention |
| 126 | 176 | 113 | A | A | Present invention |
| 127 | 177 | 147 | A | A | Present invention |
| 128 | 178 | 150 | A | A | Present invention |
| 129 | 179 | 113 | B | B | Present invention |
| 130 | 180 | 113 | C | C | Present invention |
| 131 | 181 | 116 | B | A | Present invention |
| 132 | 182 | 117 | B | A | Present invention |
| 133 | 183 | 119 | B | C | Present invention |
| 134 | 184 | 120 | B | C | Present invention |
| 135 | 185 | 121 | B | C | Present invention |
| 136 | 186 | 122 | B | C | Present invention |
| 137 | 187 | 123 | B | C | Present invention |
| 138 | 188 | 124 | B | C | Present invention |
| 139 | 189 | 125 | B | C | Present invention |

(continued)

| No. | Laver constitution | | Cycle characteristics | Ion conductivity | Note |
|---|---|---|---|---|---|
| | Electrode active material layer (sheet No.) | Solid electrolyte layer (sheet No.) | | | |
| 140 | 190 | 126 | B | C | Present invention |
| 141 | 191 | 127 | B | C | Present invention |
| 142 | 192 | 128 | B | C | Present invention |
| 143 | 193 | 129 | B | C | Present invention |
| 144 | 194 | 130 | B | C | Present invention |
| 145 | 195 | 131 | B | C | Present invention |
| 146 | 196 | 132 | B | C | Present invention |
| 147 | 197 | 133 | B | C | Present invention |
| 148 | 198 | 134 | B | C | Present invention |
| 149 | 199 | 135 | B | A | Present invention |
| 150 | 200 | 129 | B | C | Present invention |
| 151 | 201 | 146 | B | C | Present invention |
| 152 | 202 | 142 | A | A | Present invention |
| c101 | c21 | c11 | E | E | Comparative Example |
| cl02 | c22 | c12 | F | F | Comparative Example |
| cl03 | c23 | c13 | F | F | Comparative Example |

The following findings can be seen from the results of Table 3 and Table 4.

The inorganic solid electrolyte-containing compositions shown in Comparative Examples Kcll to Kc13 and NKc21 to NKc23, which do not contain the polymer binder which satisfies the adsorption rate specified in the present invention, are all inferior in dispersion stability and handleability. In addition, the electrode sheets using the compositions NKc21 to NKc23 do not have sufficient adhesiveness to the collector. The all-solid state secondary batteries of Comparative Examples c101 to c103 using these compositions exhibit neither sufficient cycle characteristics nor sufficient ion conductivity.

On the other hand, the inorganic solid electrolyte-containing compositions shown in K-1 to K-49, PK-1 to PK-17, and NK-1 to NK-33 of the present invention, which contain one or two kinds of binders the adsorption rate of which is specified in the present invention and is less than 60%, have both dispersion stability and handleability at a high level. In a case where this inorganic solid electrolyte-containing composition is used for forming the constitutional layer of the all-solid state secondary battery, it is possible to strengthen the adhesiveness of the collector to the obtained electrode

sheet, and it is possible to achieve the improvement of cycle characteristics of the obtained all-solid state secondary battery as well as a high ion conductivity.

Explanation of References

1: negative electrode collector
2: negative electrode active material layer
3: solid electrolyte layer
4: positive electrode active material layer
5: positive electrode collector
6: operation portion
10: all-solid state secondary battery
11: 2032-type coin case
12: laminate for all-solid state secondary battery
13: coin-type all-solid state secondary battery

## Claims

**1.** An inorganic solid electrolyte-containing composition comprising:

an inorganic solid electrolyte having an ion conductivity of a metal belonging to Group 1 or Group 2 in the periodic table;
a polymer binder; and
a dispersion medium,
wherein the polymer binder includes a polymer binder of which an adsorption rate with respect to the inorganic solid electrolyte in the dispersion medium is less than 60%.

**2.** The inorganic solid electrolyte-containing composition according to claim 1,
wherein the polymer binder of which the adsorption rate is less than 60% is dissolved in the dispersion medium.

**3.** The inorganic solid electrolyte-containing composition according to claim 1 or 2,
wherein a difference in SP value between a polymer that forms the polymer binder of which the adsorption rate is less than 60% and the dispersion medium is 3 or less.

**4.** The inorganic solid electrolyte-containing composition according to any one of claims 1 or 3,

wherein a polymer that forms the polymer binder of which the adsorption rate is less than 60% contains a constitutional component having a functional group selected from the following Group (a) of functional groups,
<Group (a) of functional groups>
a hydroxy group, an amino group, a carboxy group, a sulfo group, a phosphate group, a phosphonate group, a sulfanyl group, an ether bond, an imino group, an ester bond, an amide bond, a urethane bond, a urea bond, a heterocyclic group, an aryl group, an anhydrous carboxylic acid group, a fluoroalkyl group, and a siloxane group.

**5.** The inorganic solid electrolyte-containing composition according to claim 4,
wherein in the polymer that forms the polymer binder, a content of the constitutional component having the functional group selected from the Group (a) of functional groups is 0.01% to 50% by mole.

**6.** The inorganic solid electrolyte-containing composition according to any one of claims 1 to 5,
wherein a polymer that forms the polymer binder of which the adsorption rate is less than 60% has a constitutional component represented by any one of Formulae (1-1) to (1-5),

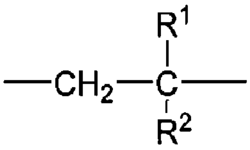

Formula (1-1)

$-O-R^3-O-$

Formula (1-2)

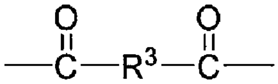

Formula (1-3)

$-HN-R^3-NH-$

Formula (1-4)

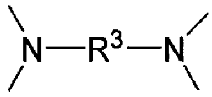

Formula (1-5)

in the formulae, $R^1$ represents a hydrogen atom or an alkyl group,

$R^2$ represents a group having a hydrocarbon group having 4 or more carbon atoms, and
$R^3$ represents a linking group having a mass average molecular weight of 500 or more and 200,000 or less, which contains a polybutadiene chain or a polyisoprene chain.

**7.** The inorganic solid electrolyte-containing composition according to any one of claims 1 to 6,
wherein a polymer that forms the polymer binder of which the adsorption rate is less than 60% has, in a main chain, at least one bond selected from a urethane bond, a urea bond, an amide bond, an imide bond, and an ester bond, or a polymeric chain of carbon-carbon double bond.

**8.** The inorganic solid electrolyte-containing composition according to any one of claims 1 to 7,
wherein a contact angle of a polymer that forms the polymer binder of which the adsorption rate is less than 60% is 40 degrees or less with respect to the dispersion medium.

**9.** The inorganic solid electrolyte-containing composition according to any one of claims 6 to 8,

wherein the inorganic solid electrolyte-containing composition contains two or more kinds of the polymer binders of which the adsorption rate is less than 60%, and
at least one kind of a polymer that forms the polymer binders is a hydrocarbon-based polymer.

**10.** The inorganic solid electrolyte-containing composition according to any one of claims 1 to 9,
wherein the polymer binder includes a particulate binder having an average particle diameter of 1 to 1,000 nm.

**11.** The inorganic solid electrolyte-containing composition according to any one of claims 1 to 10, further comprising an active material.

**12.** The inorganic solid electrolyte-containing composition according to claim 11,
wherein the polymer binder of which the adsorption rate is less than 60% has an adsorption rate of 90% or less with respect to the active material.

**13.** The inorganic solid electrolyte-containing composition according to claim 12,
wherein a polymer binder of which the adsorption rate is less than 60% has an adsorption rate of 90% or less with respect to the active material.

**14.** The inorganic solid electrolyte-containing composition according to any one of claims 1 to 13, further comprising a conductive auxiliary agent.

**15.** The inorganic solid electrolyte-containing composition according to any one of claims 1 to 14,
wherein the inorganic solid electrolyte is a sulfide-based inorganic solid electrolyte.

**16.** A manufacturing method for a sheet for an all-solid state secondary battery, the manufacturing method comprising forming a film of the inorganic solid electrolyte-containing composition according to any one of claims 1 to 15.

**17.** A sheet for an all-solid state secondary battery comprising a layer in which a film is formed by the manufacturing method for a sheet for an all-solid state secondary battery according to claim 16.

**18.** A manufacturing method for an all-solid state secondary battery comprising the manufacturing method for a sheet for an all-solid state secondary battery according to claim 16.

**19.** An all-solid state secondary battery comprising, in the following order:

a positive electrode active material layer;
a solid electrolyte layer; and
a negative electrode active material layer,
wherein at least one layer of the positive electrode active material layer, the solid electrolyte layer, or the negative electrode active material layer is a layer in which a film is formed by the manufacturing method for a sheet for an all-solid state secondary battery according to claim 16.

FIG. 1

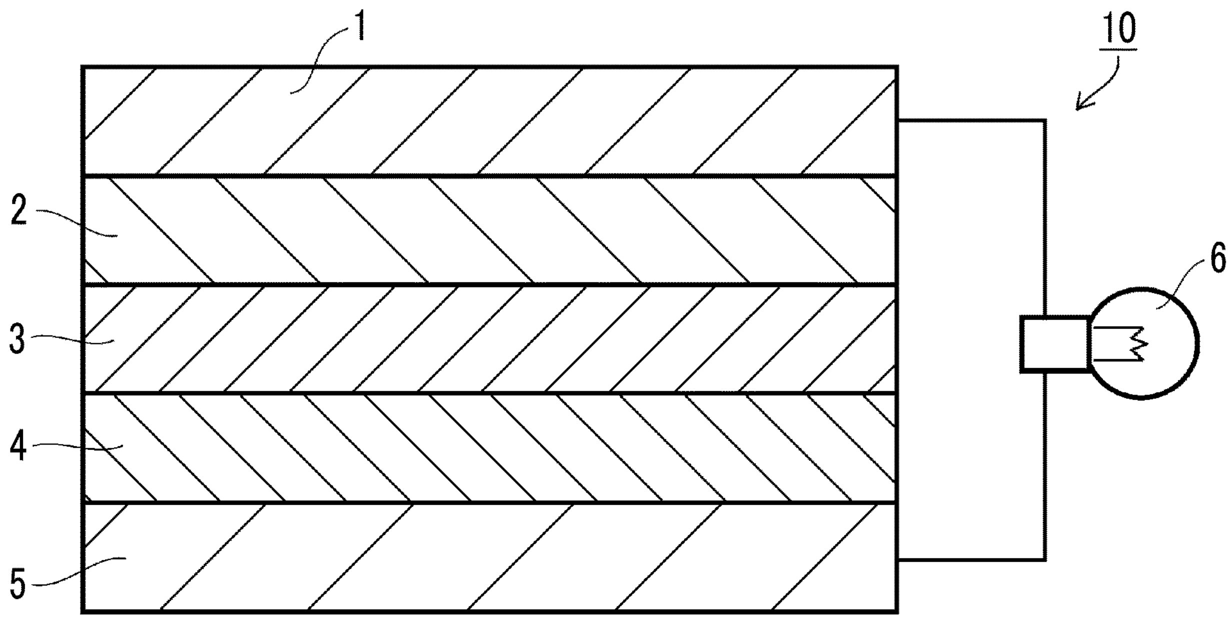


FIG. 2

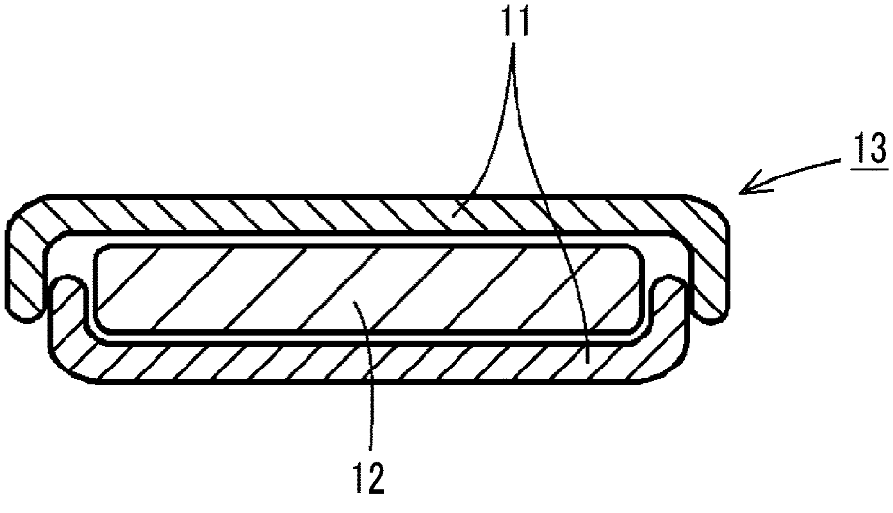

## INTERNATIONAL SEARCH REPORT

International application No. PCT/JP2020/031006

A. CLASSIFICATION OF SUBJECT MATTER

C01B 25/14(2006.01)i; C01G 23/00(2006.01)i; C08L 27/12(2006.01)i; C08L 101/02(2006.01)i; H01M 4/13(2010.01)i; H01M 4/139(2010.01)i; H01M 4/62(2006.01)i; H01M 10/052(2010.01)i; H01M 10/0562(2010.01)i; H01M 10/0565(2010.01)i; H01M 10/0585(2010.01)i; H01B 1/06(2006.01)i; H01B 1/08(2006.01)i; H01B 1/10(2006.01)i; H01B 1/22(2006.01)i

FI: H01M10/0562; H01M4/139; H01M4/62 Z; H01M4/13; H01M10/0585; H01M10/052; H01B1/06 A; H01B1/08; H01B1/10; H01B1/22 A; C08L101/02; C08L27/12; C01B25/14; C01G23/00 C; H01M10/0565

According to International Patent Classification (IPC) or to both national classification and IPC

B. FIELDS SEARCHED

Minimum documentation searched (classification system followed by classification symbols)

C01B25/14; C01G23/00; C08L27/12; C08L101/02; H01M4/13; H01M4/139; H01M4/62; H01M10/052; H01M10/0562; H01M10/0565; H01M10/0585; H01B1/06; H01B1/08; H01B1/10; H01B1/22

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2018/147051 A1 (FUJIFILM CORPORATION) 16 August 2018 (2018-08-16) paragraphs [0037]-[0153] | 1-19 |
| A | WO 2018/151161 A1 (FUJIFILM CORPORATION) 23 August 2018 (2018-08-23) claims | 1-19 |
| A | JP 2011-096623 A (SANYO ELECTRIC CO., LTD.) 12 May 2011 (2011-05-12) paragraphs [0019]-[0020] | 1-19 |
| P, X | WO 2020/080261 A1 (FUJIFILM CORPORATION) 23 April 2020 (2020-04-23) paragraphs [0019]-[0030], [0048]-[0073] | 1-2, 4-5, 7, 10-19 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 October 2020 (09.10.2020) | 27 October 2020 (27.10.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/031006

| Patent Documents referred in the Report | Publication Date | Patent Family | Publication Date |
|---|---|---|---|
| WO 2018/147051 A1 | 16 Aug. 2018 | US 2019/0348709 A1 paragraphs [0091]-[0245]<br>EP 3582316 A1<br>KR 10-2019-0087620 A<br>CN 110249468 A | |
| WO 2018/151161 A1 | 23 Aug. 2018 | US 2019/0372160 A1 claims<br>EP 3584870 A1<br>KR 10-2019-0103337 A<br>CN 110291674 A | |
| JP 2011-096623 A | 12 May 2011 | (Family: none) | |
| WO 2020/080261 A1 | 23 Apr. 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015088486 A
- JP 2015088480 A
- WO 2018020827 A
- WO 2015046313 A
- WO 2018151118 A
- JP 62022066 A
- JP S62022066 A
- JP 2006856 A
- JP H2006856 A
- JP 3045473 A
- JP H3045473 A
- JP 5090844 A
- JP H5090844 A
- JP 6004516 A
- JP H6004516 A


### Non-patent literature cited in the description


- *H. L. Hoy JOURNAL OF PAINT TECHNOLOGY,* 1970, vol. 42 (541), 76-118
- *POLYMER HANDBOOK,* vol. VII, 686
- **T. OHTOMO ; A. HAYASHI ; M. TATSUMISAGO ; Y. TSUCHIDA ; S. HAMA ; K. KAWAMOTO.** *Journal of Power Sources,* 2013, vol. 233, 231-235
- **A. HAYASHI ; S. HAMA ; H. MORIMOTO ; M. TATSUMISAGO ; T. MINAMI.** *Chem. Lett.,* 2001, 872, , 873